# EUROPEAN PATENT APPLICATION

(11) **EP 2 043 086 A1**
(43) Date of publication of application: **01.04.2009**
(21) Application number: 07767783.9
(22) Date of filing: 28.06.2007
(51) Int. Cl.: G09G 5/14, G06T 3/40, G09G 5/00, G09G 5/36, H04N 1/00, H04N 1/393, H04N 5/76, H04N 5/765, H04N 5/91, H04N 5/93, H04N 7/173

(54) **IMAGE DATA PROVIDING DEVICE, IMAGE DISPLAY DEVICE, IMAGE DISPLAY SYSTEM, CONTROL METHOD FOR IMAGE DATA PROVIDING DEVICE, CONTROL METHOD FOR IMAGE DISPLAY DEVICE, CONTROL PROGRAM AND RECORDING MEDIUM**

(30) Priority: 30.06.2006 JP 2006182723; 26.06.2007 JP 2007168099
(71) Applicant: Sharp Kabushiki Kaisha, Osaka-shi, Osaka 545-8522 (JP)
(72) Inventor: NITTA, Soichi, Chiba 275-0016 (JP); HIRATA, Masafumi, Tokyo 133-0052 (JP); SUDO, Tatsuo, Chiba 261-0013 (JP); UMEMOTO, Azusa, Kyoto 619-0202 (JP); ENATSU, Aya, Chiba 262-0033 (JP); TAKAHASHI, Masafumi, Chiba 285-0811 (JP); KINOSHITA, Takuya, Chiba 261-0001 (JP); KASHITO, Kiyotaka, Hyogo 658-0081 (JP); DOI, Katsuo, Nara 633-0062 (JP); MATSUYAMA, Tetsuya, Chiba 272-0133 (JP)
(74) Representative: Müller - Hoffmann & Partner
(86) International application number: PCT/JP2007/062989
(87) International publication number: WO 2008/001843

(57) **Abstract**

A display data generating apparatus (1) according to the present invention includes: (i) a specification information specifying section (22) for acquiring specification information of a television (2) which specification information concerns display of an image, (ii) an image size control section (23) for generating a display image by changing the number of pixels of the image in accordance with the specification information such that the image is to be displayed in a predetermined display size on the image display apparatus, and (iii) a display control information generating section (34) for generating, in accordance with the specification information, display control information for defining a position of the display image on the screen of the image display apparatus. This makes it possible to realize an image data providing apparatus, which causes an image display apparatus to display an image in a predetermined display size.

## Description

### TECHNICAL FIELD

The present invention relates to (i) an image display apparatus for displaying an image and (ii) an image data providing apparatus for providing the image to be displayed by the image display apparatus.

### BACKGROUND ART

As digital cameras have become widespread, handling pictures in the form of image data has become popular. As a result, viewers generally enjoy viewing pictures in a new way, in addition to a conventional way of enjoying pictures by seeing developed pictures. Specifically, pictures are recorded in the form of image data, the image data is displayed on an image display apparatus, and the viewers enjoy viewing the image data.

There are various methods of displaying one or more pictures on such an image display apparatus. Typical ones among these display methods are thumbnail view display, slideshow display, and the like.

The slideshow display is a method of displaying a plurality of pictures one after another with a predetermined time interval therebetween. This allows a user to enjoy viewing the pictures that are displayed one after another, in the same manner as he/she views a moving image. On the other hand, the thumbnail view display is a method of simultaneously displaying a set of thumbnails, which are small representations of pictures. The thumbnail view display is useful in selecting a desired picture from a plurality of pictures.

Further, use of networks such as the Internet enables image display apparatuses to display pictures stored in server apparatuses (image storage sections) located in remote areas. This, for example, allows a picture uploaded on a server apparatus to be displayed on plural image display apparatuses so that plural users can enjoy the same picture.

When displaying a picture on the image display apparatuses in this way, the size of the picture is determined according to the number of pixels of the picture, and the specifications of the image display apparatuses. Therefore, the size thereof is not always the same among the image display apparatuses.

In view of this, Patent Document 1 (Japanese Unexamined Patent Publication Tokukaihei 4-358871 1 (published on December 11, 1992)) discloses a technique of displaying printing target data in a predetermined size on a display screen of a print display apparatus. In Patent Document 1, the predetermined size coincides with the size of set sheets (e.g., A4 size). A printer 3 of Patent Document 1 renders bitmap image data such that the printing target data is displayed in the predetermined size such as A4 size on the print display apparatus 5. In accordance with the bitmap image data thus rendered, the print display apparatus 5 always displays the printing target data in A4 size. With this, a user can check how the printed image will look like before printing the printing target data, in the same manner as he/she checks an actual printed image.

However, the bitmap image data is not rendered in consideration of the specification of the print display apparatus 5, so that the technique of Patent Document 1 cannot handle a case where the specification of the print display apparatus 5 is changed or the like.

In the meanwhile, in the case of showing the same picture to a plurality of users, there arises the following need: the picture should be shown to all the users in the same size, i.e., the picture should be displayed in the same size among image display apparatuses irrespective of their specifications.

In view of such a need, Patent Document 2 (Japanese Unexamined Patent Publication Tokukai 2003-219372 (published on July 31, 2003)) describes a technique by which a data broadcasting apparatus (image data providing apparatus) broadcasts, to a digital television receiving apparatus (image display apparatus), XML data representing scale information concerning a source image. The scale information is required in displaying a target object, which is captured in the image, in real scale.

Patent Document 3 (Japanese Unexamined Patent Publication Tokukai 2000-358222 (published on December 26, 2000)) discloses an information transmitting method for transmitting, to a display expression apparatus (image display apparatus), information concerning the actual size of a target object and additional information representing magnification recommended by a transmitting side.

Patent Document 4 (Japanese Unexamined Patent Publication Tokukaihei 5-130598 (published on May 25, 1993)) discloses a television conference system including a source transmitting side (image data providing apparatus) for enlarging, in accordance with (i) information received from a source receiving side (image display apparatus) and concerning the monitor size of the source receiving side and (ii) display magnification, a captured image with such variable power that the image is enlarged with the designated display magnification and is displayed on a monitor of the source receiving side.

With these, irrespective of the specifications of the image display apparatuses, an image can be displayed on the image display apparatuses as large as the actual size of the target object (or the image can be displayed thereon with a designated predetermined magnification with respect to the original image).

However, the aforementioned conventional configurations suffer from the following problems.

Specifically, Patent Documents 2 and 3 merely describe that the image displaying side (i.e., image display apparatus) adjusts the size of the image to be displayed, in accordance with the scale information or the additional information each received from the external server apparatus (image data providing apparatus). Patent Documents 2 and 3 do not take into consideration that the server apparatus generates the aforementioned information for each image display apparatus in accordance with the specifications thereof. Accordingly, each of the image display apparatuses needs to include a structure for displaying a picture in a predetermined size in accordance with the specification thereof. Hence, Patent Documents 2 and 3 are not suitable for a service allowing a multiplicity of image display apparatuses to display pictures uploaded on a server device.

Meanwhile, Patent Document 4 merely describes the technique of supplying, to the source receiving side (image display apparatus), the image data whose size has been enlarged (reduced) to an appropriate size in accordance with the specification of the source receiving side and the designation of the display magnification. Even though the image whose size has been enlarged (reduced) to the predetermined size in accordance with the specification can be sent to the source receiving side, it is impossible for the source transmitting side to control how the receiving side apparatus displays the image. That is, even though the size of the image has been enlarged (reduced) as such, the image is not always displayed on the source receiving side precisely in the predetermined display size intended by the source transmitting side.

Thus, required in displaying an image on the image display apparatus in a predetermined display size intended by the side of providing the image are: (i) supply of an image (display use) obtained by enlarging (reducing) the size of the image in accordance with the specification of the image display apparatus, and (ii) supply of display control information that defines how such an image for use in display is positioned and displayed and that is based on the specification of the image display apparatus.

These problems occur not only in the case of displaying a picture but also in the case of displaying (i) general data handled as image data and (ii) general moving image data. Examples of such general data include data indicating text, data indicating a drawing, data indicating a graph, and the like. These problems arise also in the case of displaying a set of plural pictures collected together (album).
[Patent Document 1] Japanese Unexamined Patent Publication Tokukaihei 4-358871 (published on December 11, 1992)
[Patent Document 2] Japanese Unexamined Patent Publication Tokukai 2003-219372 (published on July 31, 2003)
[Patent Document 3] Japanese Unexamined Patent Publication Tokukai 2000-358222 (published on December 26, 2000)
[Patent Document 4] Japanese Unexamined Patent Publication Tokukaihei 5-130598 (published on May 25, 1993)

### DISCLOSURE OF INVENTION

An object of the present invention is to realize (i) an image providing apparatus, which generates display data (display image (or display moving image) and display control information) in accordance with the specification of an image display apparatus so as to cause the image display apparatus to display the image (or moving image) in a predetermined display size; (ii) the image display apparatus; and (iii) an image display system.

To achieve the object, an image data providing apparatus according to the present invention includes: a specification information specifying section 22 (specification information obtaining means) for acquiring specification information of an image display apparatus, which specification information concerns display of an image; an image size control section 32 (display image generating means) for generating a display image by changing the number of pixels of the image in accordance with the specification information such that the image is displayed on the image display apparatus in a predetermined display size; and a display control information generating section 34 (display control information generating means) for generating display control information for defining a position of the display image on a screen of the image display apparatus in accordance with the specification information.

To achieve the object, a method according to the present invention for controlling an image data providing apparatus includes: a first step of acquiring specification information of an image display apparatus, which specification information concerns display of an image; a second step of generating a display image by changing the number of pixels of the image in accordance with the specification information, which has been acquired in the first step, such that the image is displayed in a predetermined size on the image display apparatus; and a third step of generating, in accordance with the specification information acquired in the first step, display control information for defining a position where the display image generated in the second step is to be disposed on a screen of the image display apparatus.

According to the above configuration and method, the specification information specifying section 22 acquires the specification information of the image display apparatus, which specification information concerns the display of the image. Then, the image size control section 32 generates the display image by changing, in accordance with the specification information acquired by the specification information specifying section 22, the number of pixels of the image to be displayed on the image display apparatus. Finally, in accordance with the display control information generated based on the specification of the image display apparatus, the display control information generating section 34 generates the display control information for defining how the display image generated by the image size control section 32 is to be disposed on the screen of the image display apparatus.

The display image and the display control information thus generated are received by the image display apparatus, and the image display apparatus is allowed to merely display, in accordance with the display control information generated based on the specification of the image display apparatus, the display image obtained by adjusting the pixels of the image in accordance with the specification of the image display apparatus. In this way, the display image is displayed on the image display apparatus in the predetermined display size intended by the image data providing apparatus, which supplies the image.

Examples of such specification information concerning the display of the image include: information indicating the number of pixels of a monitor of the image display apparatus, resolution thereof, pitch thereof, the size of the monitor thereof, and the like.

To achieve the object, an image display apparatus according to the present invention includes: a message generating section 74 (message generating means) for generating an image request message that includes (i) image identification information for identifying an image or a moving image to be displayed and (ii) specification information of the image display apparatus, which specification information concerns display of the image or the moving image, and that requests supply of the image or the moving image to be displayed; a transmitting section for transmitting the image request message to an image data providing apparatus; a receiving section for receiving, from the image data providing apparatus in reply to the image request message, (i) a display image or a display moving image each corresponding to the requested image or the requested moving image and (ii) display control information for defining a position of the display image or the display moving image on a screen of the image display apparatus; and a display control section 64 (display control means) for controlling a display section in accordance with the display control information such that the display image or the display moving image is displayed in a predetermined size.

To achieve the object, a method according to the present invention for controlling an image display apparatus includes: a first step of generating an image request message that includes (i) image identification information for identifying an image or a moving image to be displayed and (ii) specification information of the image display apparatus, which specification information concerns display of the image or the moving image; a second step in which a transmitting section transmits, to an image data providing apparatus, the image request message generated in the first step; a third step in which a receiving section receives, from the image data providing apparatus in reply to the image request message, (i) a display image or a display moving image each corresponding to the requested image or the requested moving image and (ii) display control information for defining a position of the display image or the display moving image on a screen of the image display apparatus; and a fourth step of controlling, in accordance with the display control information received in the third step, a display section such that the display image received in the third step is displayed in a predetermined display size.

According to the above configuration and method, the message generating section 74 generates the image request message including (i) the image identification information for identifying the image (or the moving image) to be displayed and (ii) the specification information of the image display apparatus, which specification information concerns the display of the image (or the moving image), so as to request the supply of the image (or the moving image). The transmitting section of the image display apparatus transmits to the image data providing apparatus the image request message thus generated by the message generating section 74.

The receiving section receives (i) the display image corresponding to the image (or the display moving image corresponding to the moving image) and (ii) the display control information, from the image data providing apparatus in reply to the image request message. In accordance with the display control information thus received, the display control section 64 controls the display section such that the display image (or the display moving image) thus received is displayed in the predetermine display size.

With this, the image (or the moving image) requested by the image display apparatus is displayed thereon in the display size intended by the image data providing apparatus.

To achieve the object, an image display apparatus according to the present invention includes: a message generating section 74 for generating an image request message that includes (i) image identification information for identifying an image or a moving image to be displayed and (ii) specification information of the image display apparatus, which specification information concerns display of the image or the moving image, and that requests supply of the moving image to be displayed; a transmitting section for transmitting the image request message to an image data providing apparatus; a receiving section for receiving, from the image data providing apparatus in reply to the image request message, (i) a display image and a display moving image each corresponding to the requested moving image and (ii) display control information for defining a display position of the display image and the display moving image on a screen of the image display apparatus when the display image and the display moving image are selectively displayed according to a user's operation carried out with respect to the image display apparatus; and a display control section 64 for controlling a display section in accordance with the display control information such that the display image or the display moving image is displayed in a predetermined size and for causing the display section to selectively display the display image and the display moving image according to the user's operation carried out with respect to the image display apparatus.

To achieve the object, a method according to the present invention for controlling an image display apparatus includes: a first step of generating an image request message that includes (i) image identification information for identifying a moving image to be displayed and (ii) specification information of the image display apparatus, which specification information concerns display of the image or the moving image, and that requests supply of the moving image to be displayed; a second step in which a transmitting section transmits the image request message generated in the first step, to an image data providing apparatus; a third step in which a receiving section receives, from the image data providing apparatus in reply to the image request message, (i) a display image and a display moving image each corresponding to the requested moving image and (ii) display control information for defining a display position of the display image and the display moving image on a screen of the image display apparatus when the display image and the display moving image are selectively displayed according to a user's operation carried out with respect to the image display apparatus; and a fourth step of (i) controlling a display section in accordance with the display control information, received in the third step, such that the display image or the display moving image is displayed in a predetermined size and (ii) causing the display section to selectively display the display image and the display moving image according to the user's operation carried out with respect to the image display apparatus.

This allows the image display apparatus to selectively display, according to the user's operation, (i) the display moving image that is data obtained by changing the number of pixels of the moving image and (ii) the display image corresponding to the moving image, on its screen in accordance with the display control information in the size designated by the image data providing apparatus.

To achieve the object, an image display system according to the present invention includes: the image data providing apparatus; and the image display apparatus, the image data providing apparatus generating, in accordance with the specification information of the image display apparatus which specification information concerns the display of the image (or the moving image) and is contained in the image request message that requests the supply of the image (or the moving image) to be displayed and that has been received from the image display apparatus, (i) the display image (or the display moving image) and (ii) the display control information for defining the position of the display image (or the display moving image), and transmitting the display image (or the display moving image) and the display control information to the image display apparatus, the image display apparatus acquiring the display image (or the display moving image) from the image data providing apparatus, and displaying the display image (or the display moving image) in the predetermined display size in accordance with the display control information.

According to the above configuration, in reply to the image display apparatus's request to the image data providing apparatus for the image (moving image), the image data providing apparatus provides, to the image display apparatus, (i) the display image (or the display moving image) that is to be displayed on the image displaying apparatus in the predetermined size intended by the image data providing apparatus and that has been obtained by changing the number of pixels of the image and (ii) the display control information for defining the position of the display image. The display image (or the display moving image) and the display control information are generated based on the specification of the image display apparatus.

This allows the image display apparatus to display, in accordance with the display image (or the display moving image) and the display control information thus generated based on the specification of the image display apparatus, the requested image in the predetermined display size intended by the image data providing apparatus.

By generating the display data (display image and display control information) in accordance with the specification of the image display apparatus as such, it is possible to construct such an image display system that allows the image display apparatus to display the image (or moving image) in the predetermined display size.

Additional objects, features, and strengths of the present invention will be made clear by the description below. Further, the advantages of the present invention will be evident from the following explanation in reference to the drawings.

### BRIEF DESCRIPTION OF DRAWINGS

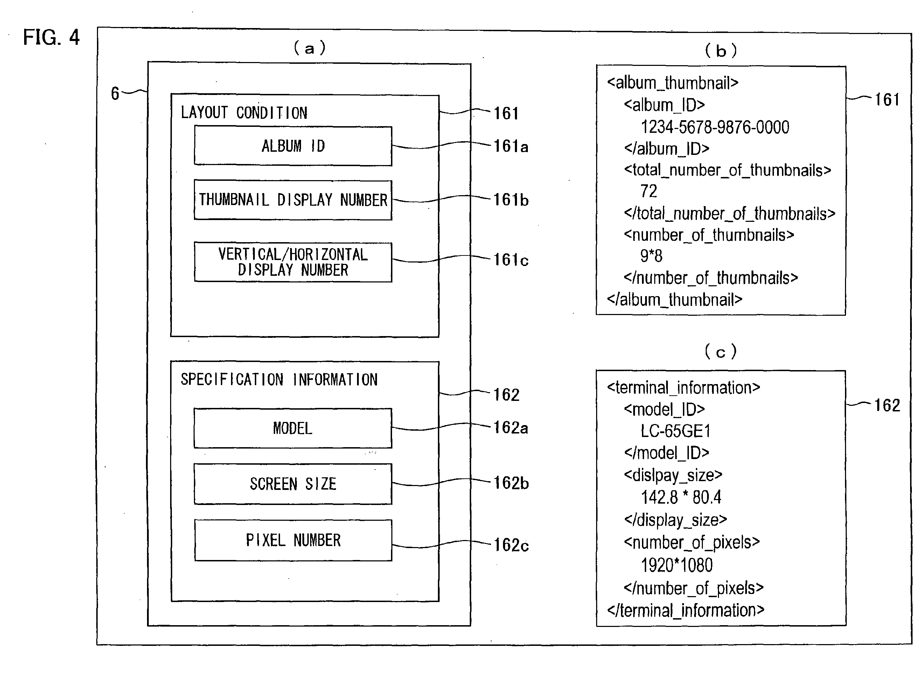

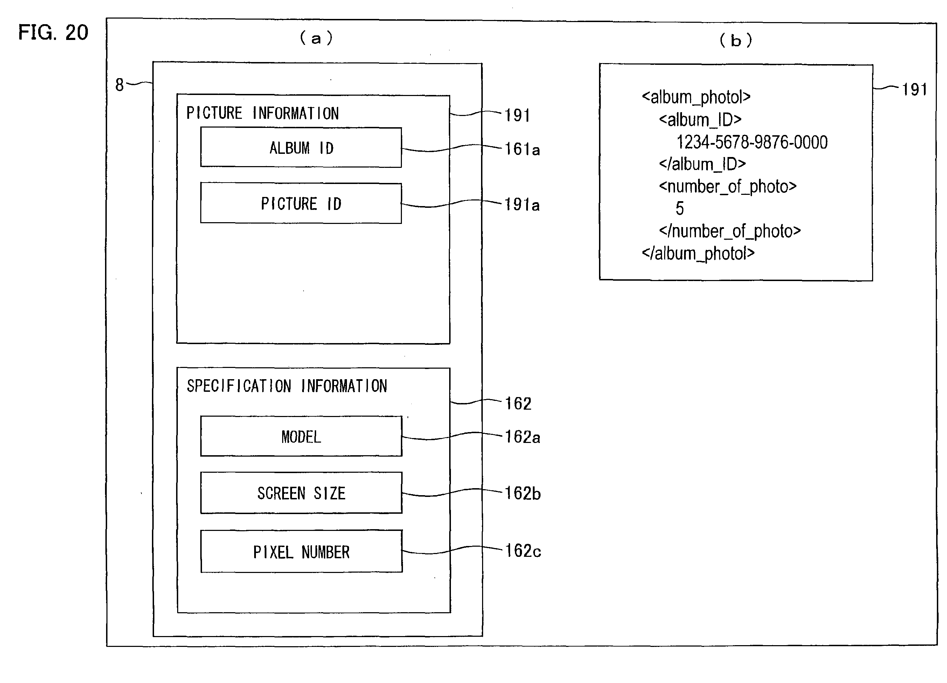

Figure 1 is a block diagram illustrating the structures of main parts of a display data generating apparatus according to an embodiment of the present invention.
Figure 2 is a block diagram schematically illustrating the structure of a network album system (image display system) according to the embodiment of the present invention.
Figure 3 is a sequence diagram illustrating a flow of processes carried out by apparatuses of the network album system according to the embodiment of the present invention.
   (a) of Figure 4 is a diagram schematically illustrating the structure of an album request message to be analyzed by a pattern data selecting section. (b) of Figure 4 is a diagram illustrating a specific example of a layout condition contained in the album request message. (c) of Figure 4 is a diagram illustrating a specific example of specification information contained in the album request message.

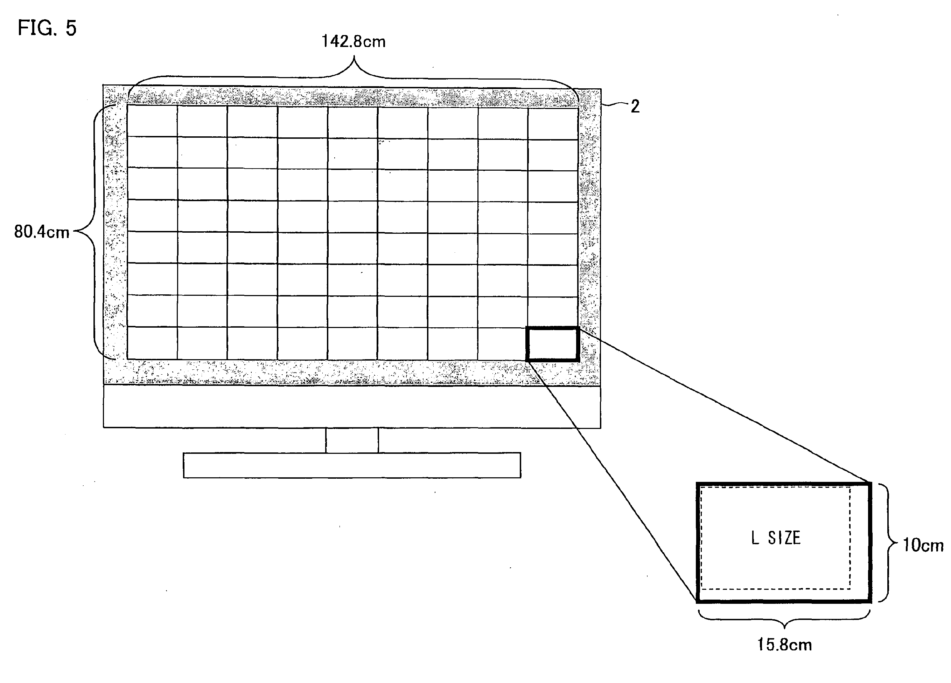

Figure 5 is an explanatory diagram illustrating procedures of finding the maximum display size of each thumbnail.

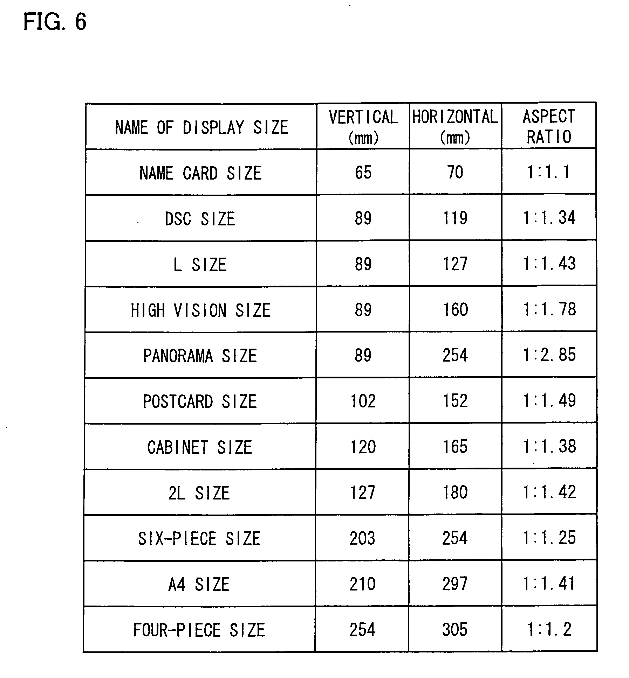

Figure 6 is a diagram illustrating an example of actual print size information stored in a display size storage section.

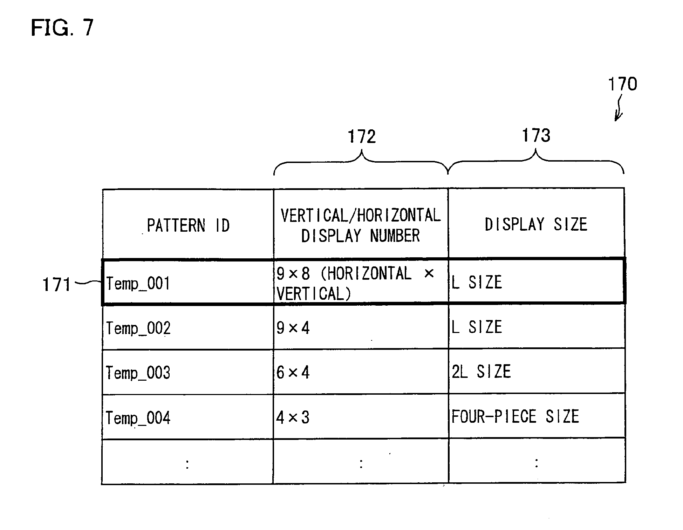

Figure 7 is a diagram illustrating examples of pattern data stored in a pattern data storage section.

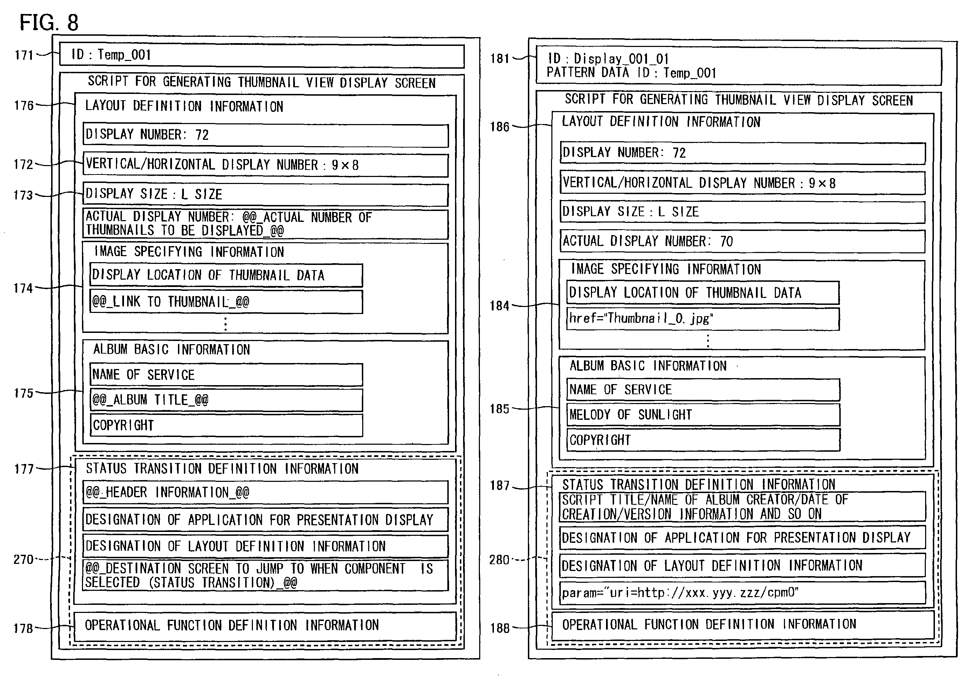

Figure 8 is a diagram schematically illustrating an example of pattern data selected by the pattern data selecting section, and an example of display control information generated in accordance with the pattern data.

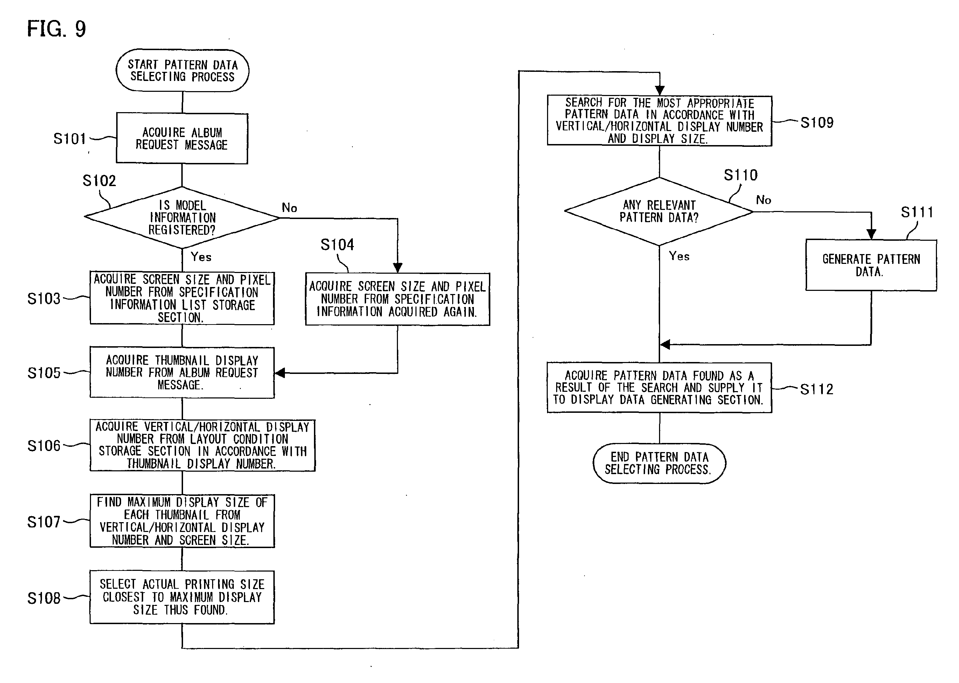

Figure 9 is a flowchart illustrating a flow of a pattern data selecting process carried out by the pattern data selecting section.

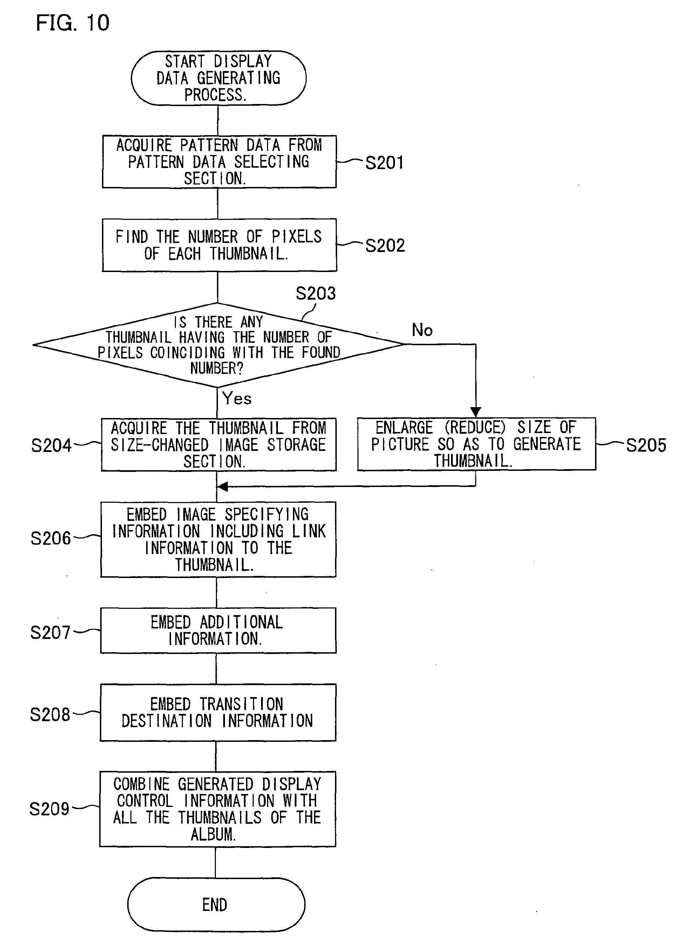

Figure 10 is a flowchart illustrating a flow of a display data generating process carried out by a display data generating section.

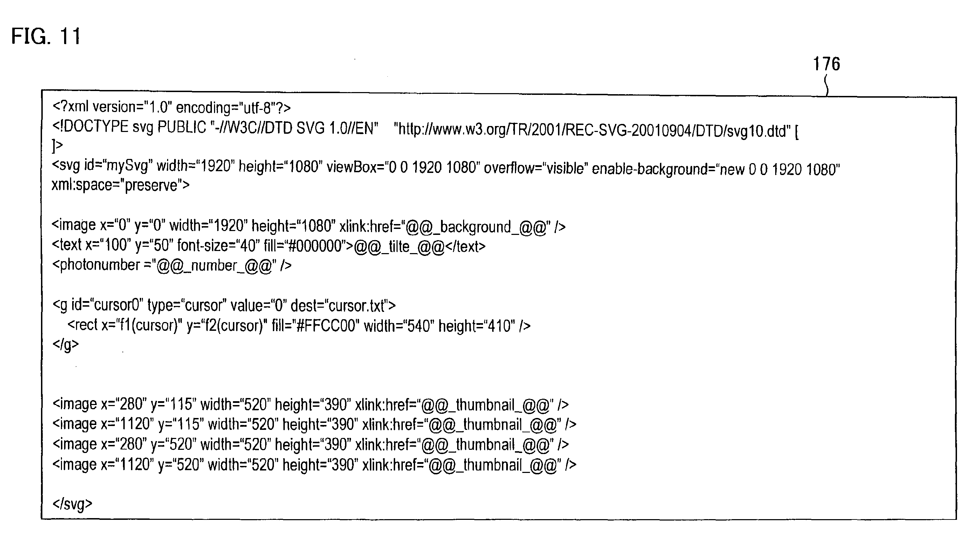

Figure 11 is a diagram illustrating a specific example of layout definition information of the pattern data.

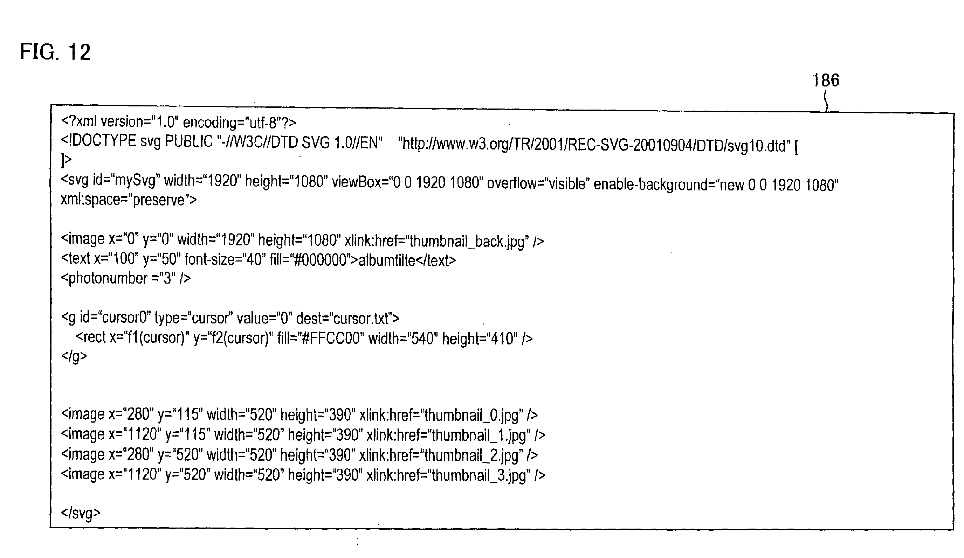

Figure 12 is a diagram illustrating a specific example of layout definition information of the display control information.

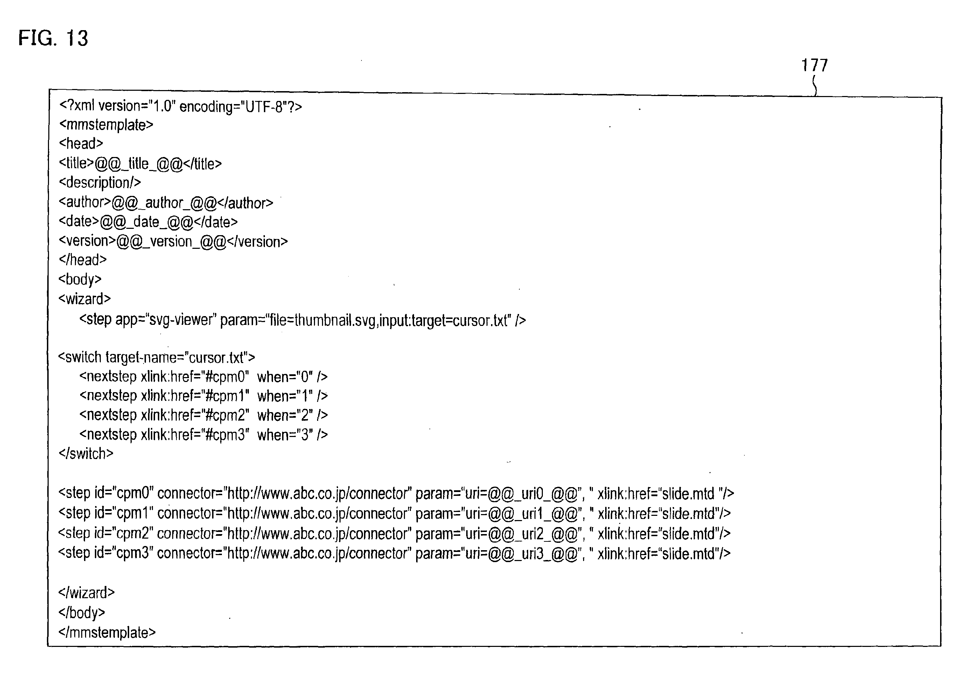

Figure 13 is a diagram illustrating a specific example of state transition definition information of the pattern data.

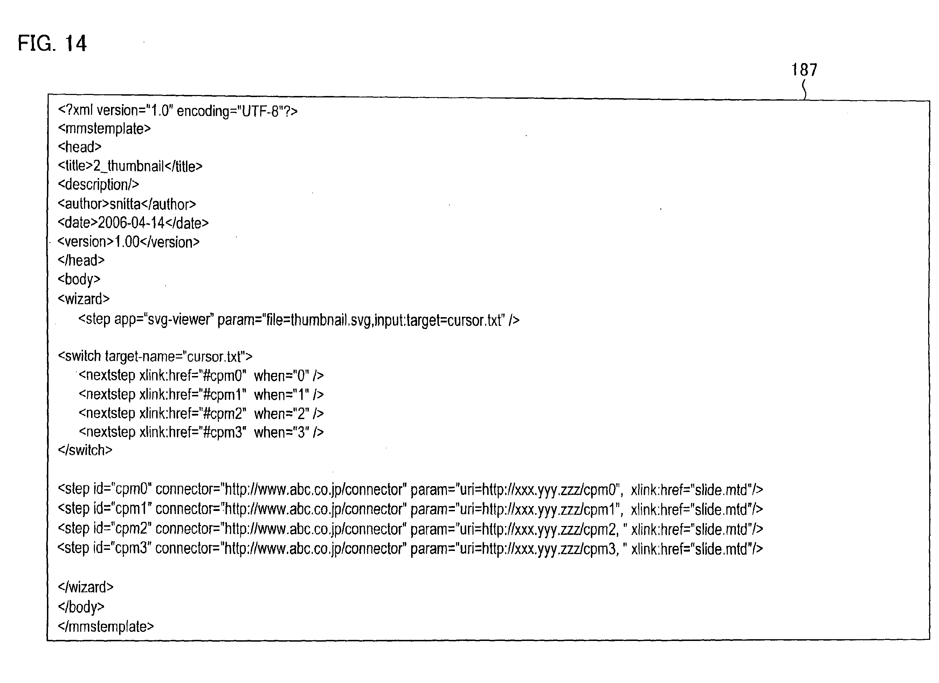

Figure 14 is a diagram illustrating a specific example of state transition definition information of the display control information.

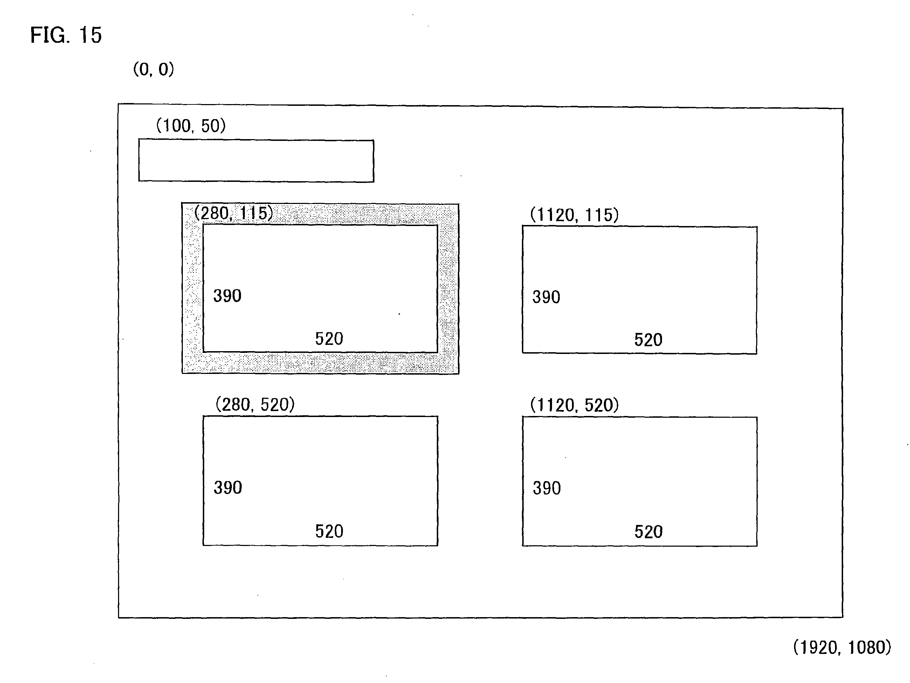

Figure 15 is a diagram illustrating a layout in the display screen of a television, which layout is defined by the layout definition information shown in Figure 12.

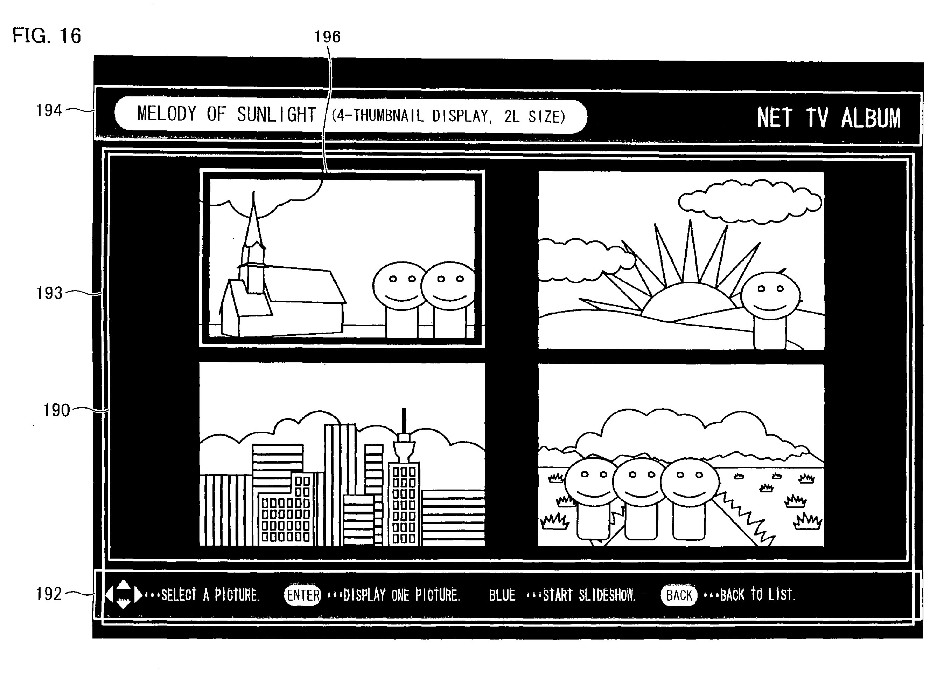

Figure 16 is a diagram illustrating an example of display of the screen of the television in cases where thumbnails are displayed in an actual printing size in accordance with display data.

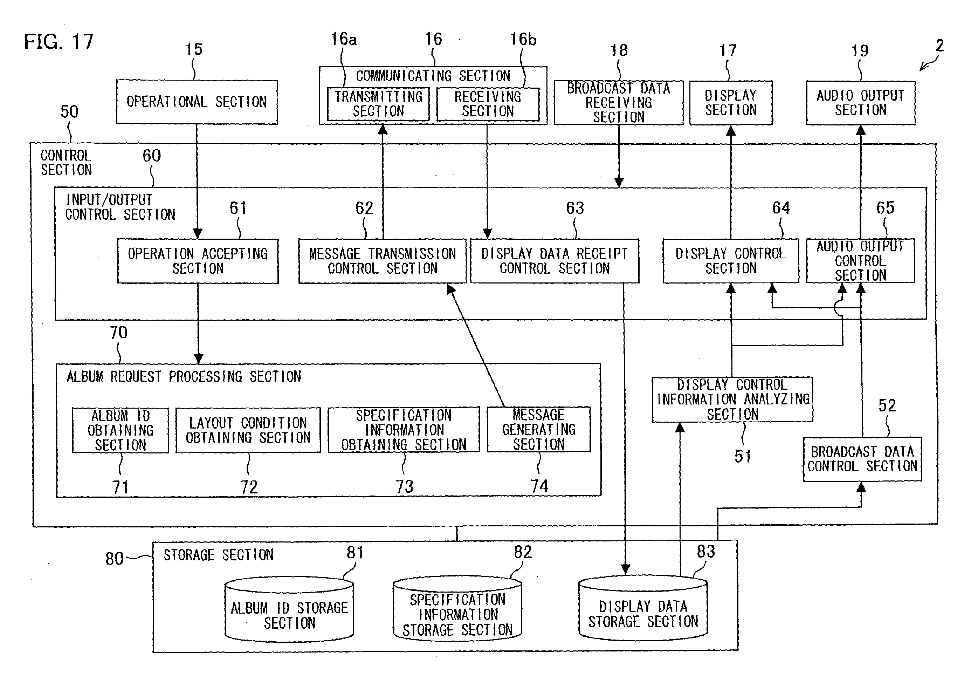

Figure 17 is a block diagram illustrating the structure of main parts of the television according to the embodiment of the present invention.

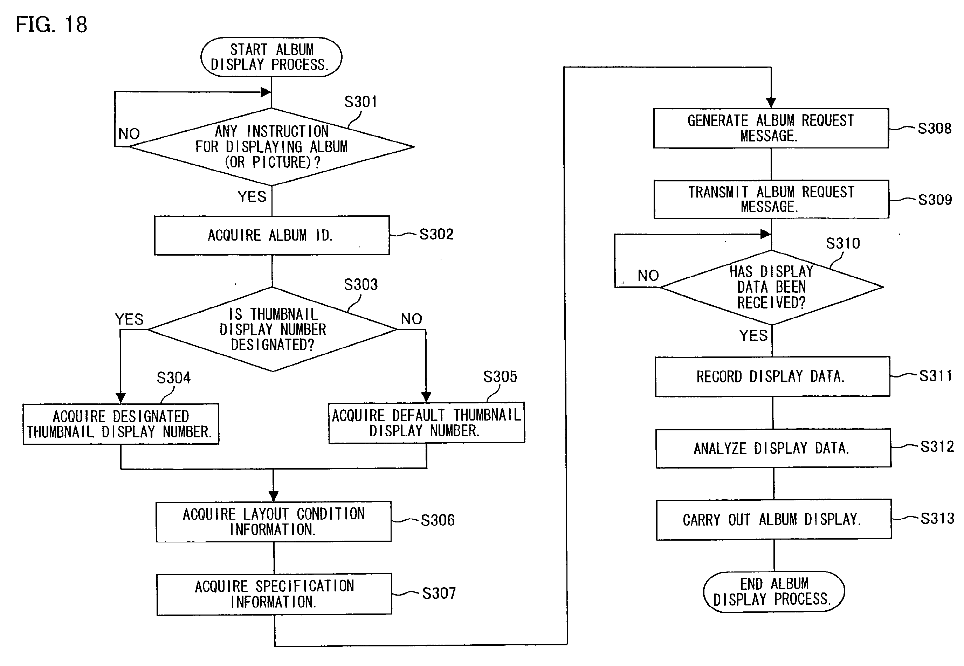

Figure 18 is a flowchart illustrating a flow of an album display process carried out by the television.

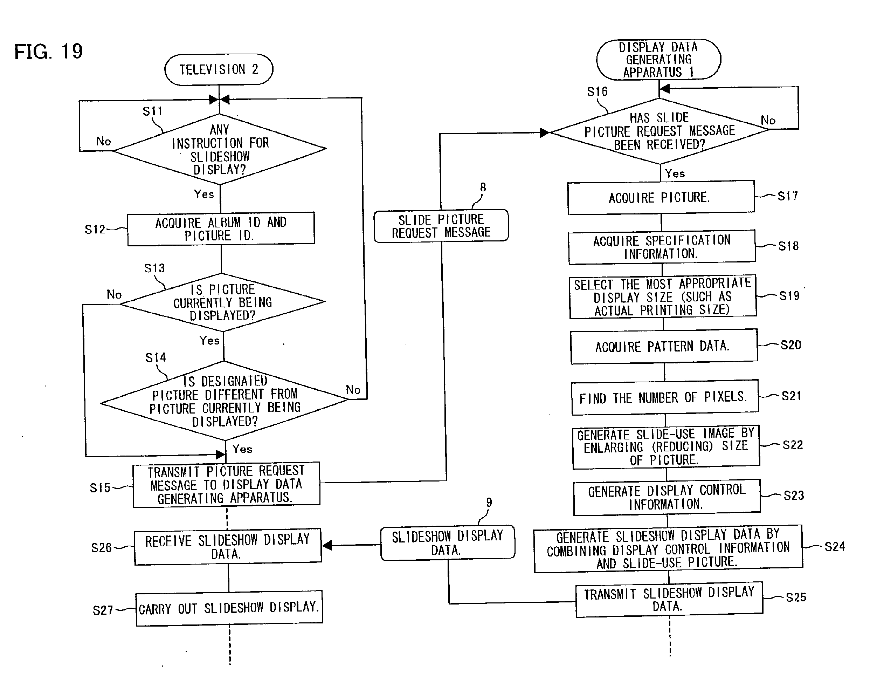

Figure 19 is a sequence diagram illustrating a flow of processes of apparatuses in a network album system according to another embodiment of the present invention.
   (a) of Figure 20 is a diagram schematically illustrating the structure of a slide picture request message generated by a message generating section. (b) of Figure 20 is a diagram illustrating a specific example of picture information included in the slide picture request message.

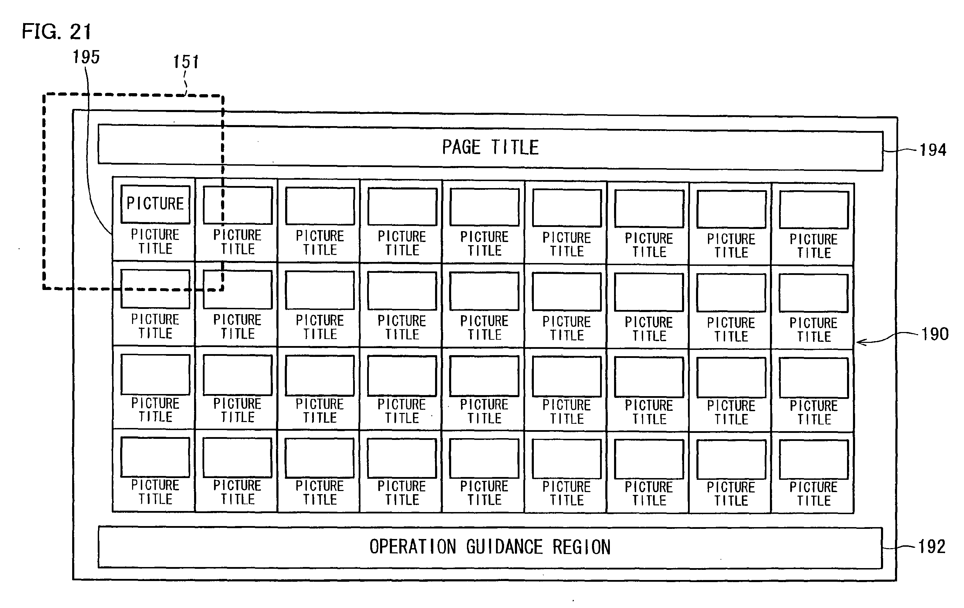

Figure 21 is a diagram illustrating an example of display of the screen of the television in cases where thumbnails are respectively displayed on predetermined locations in accordance with display control information of display data.

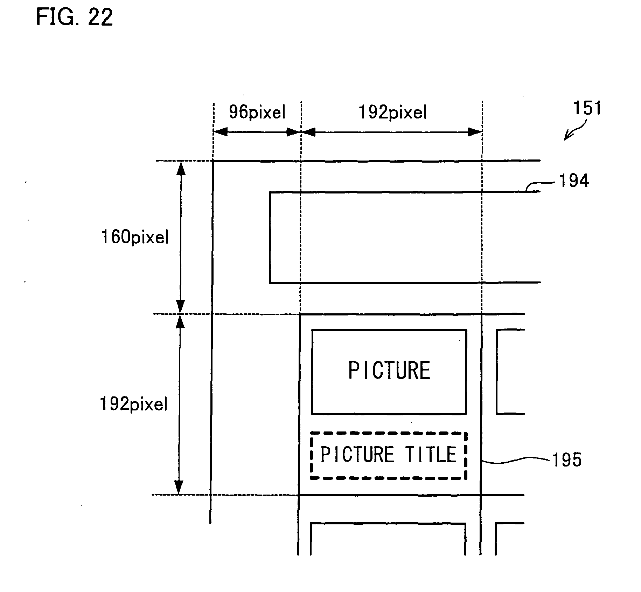

Figure 22 is an enlarged view of a portion surrounded by a broken line frame 151 shown in Figure 21.

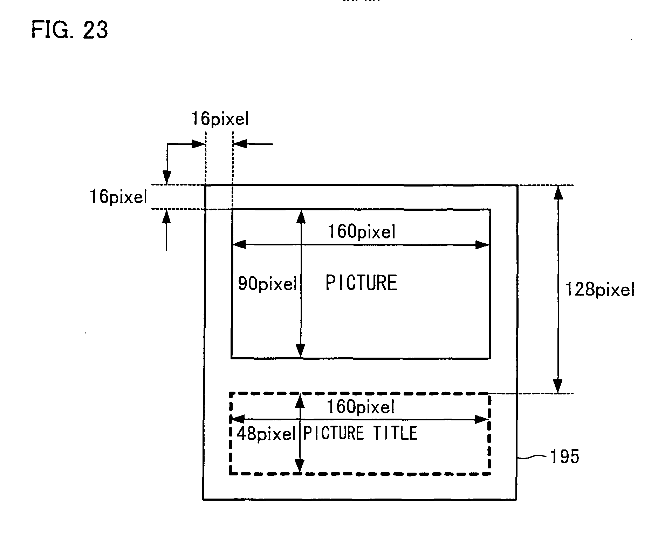

Figure 23 is an enlarged view of a thumbnail frame 195 shown in Figure 21 and Figure 22.

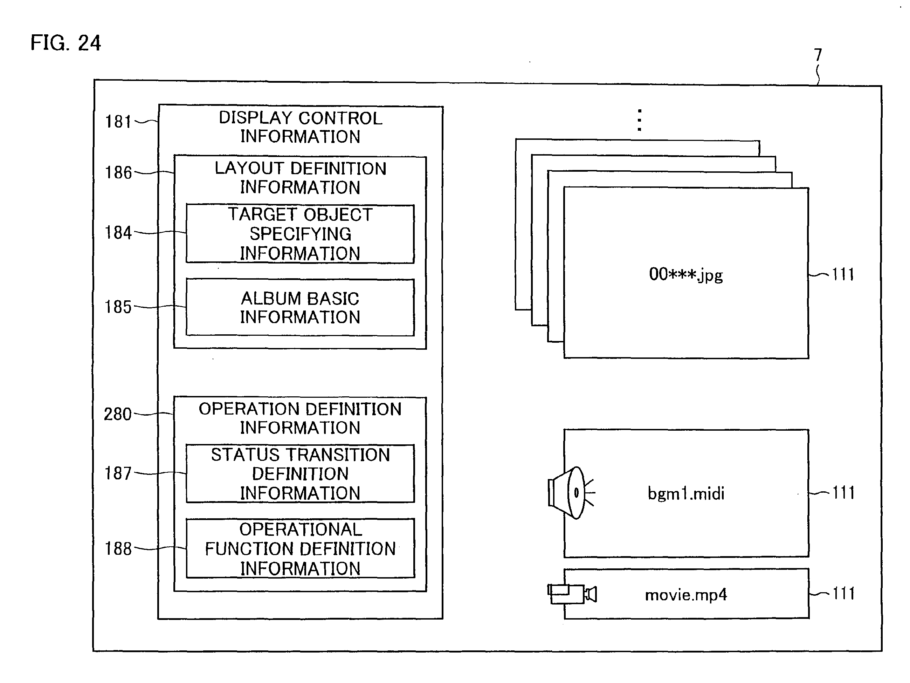

Figure 24 is a diagram schematically illustrating the data structure of the display data.

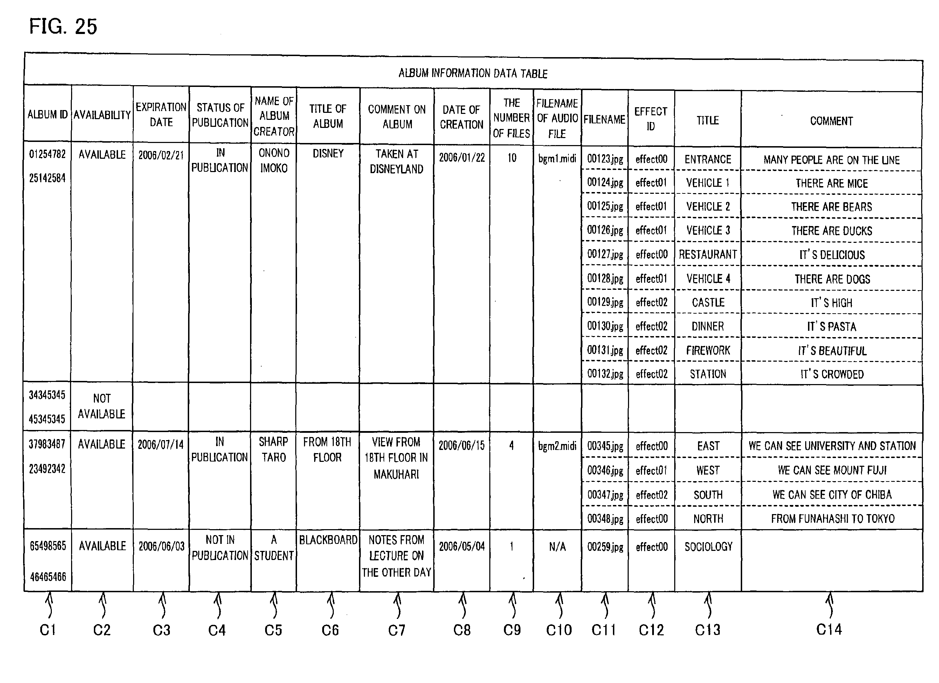

Figure 25 is a diagram illustrating an example of an album information data table stored in a network album DB.

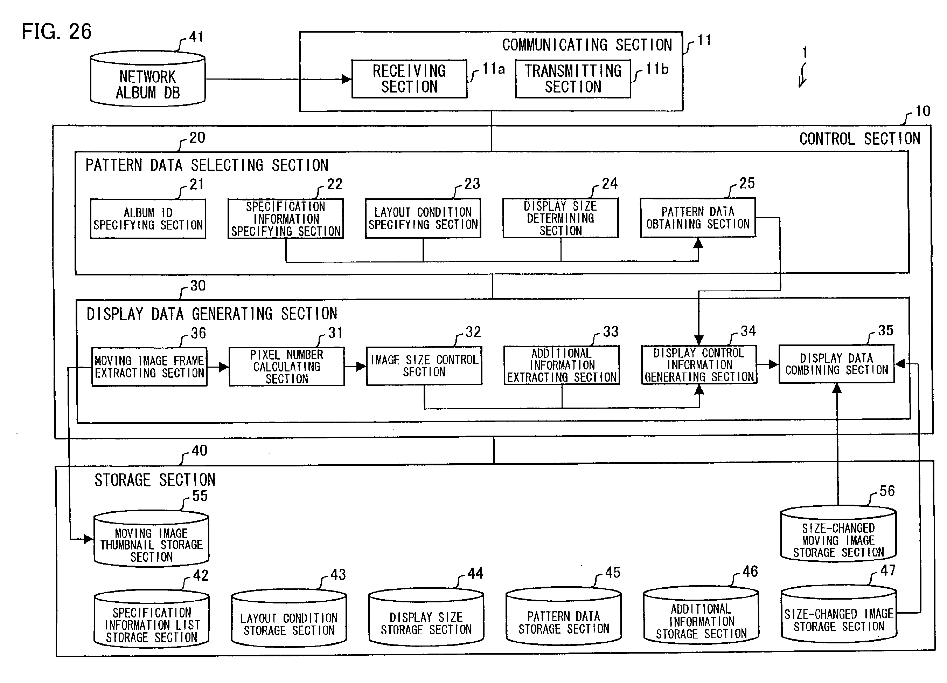

Figure 26 is a block diagram illustrating the structures of main parts of a display data generating apparatus according to another embodiment of the present invention.

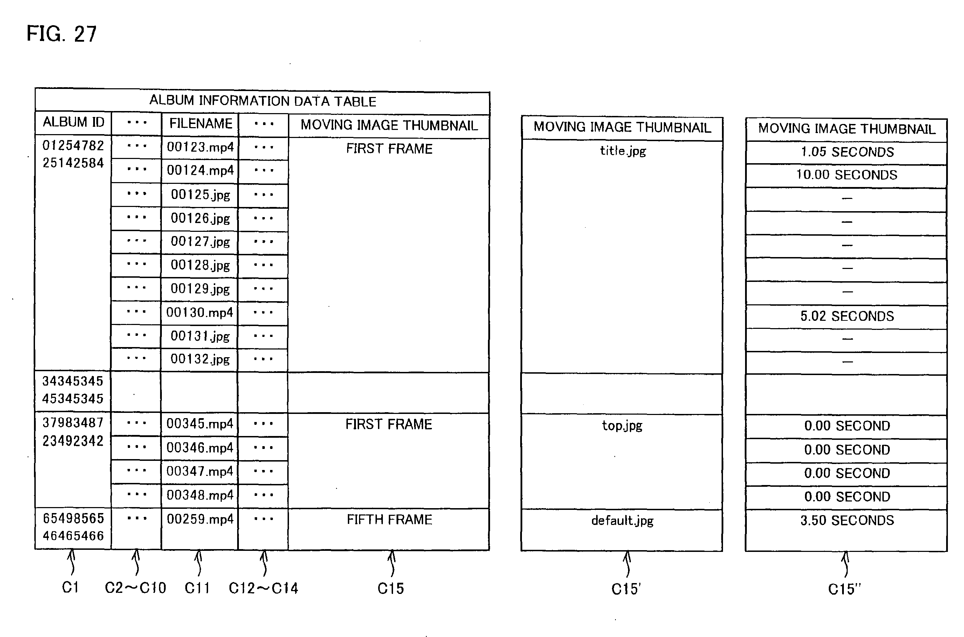

Figure 27 is a diagram illustrating another example of the album information data table stored in the network album DB.

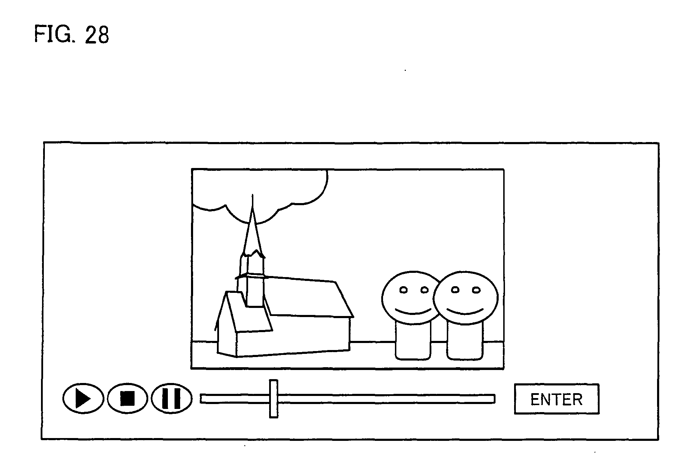

Figure 28 is a diagram illustrating an example of a GUI screen displayed on a PC of an album creator.

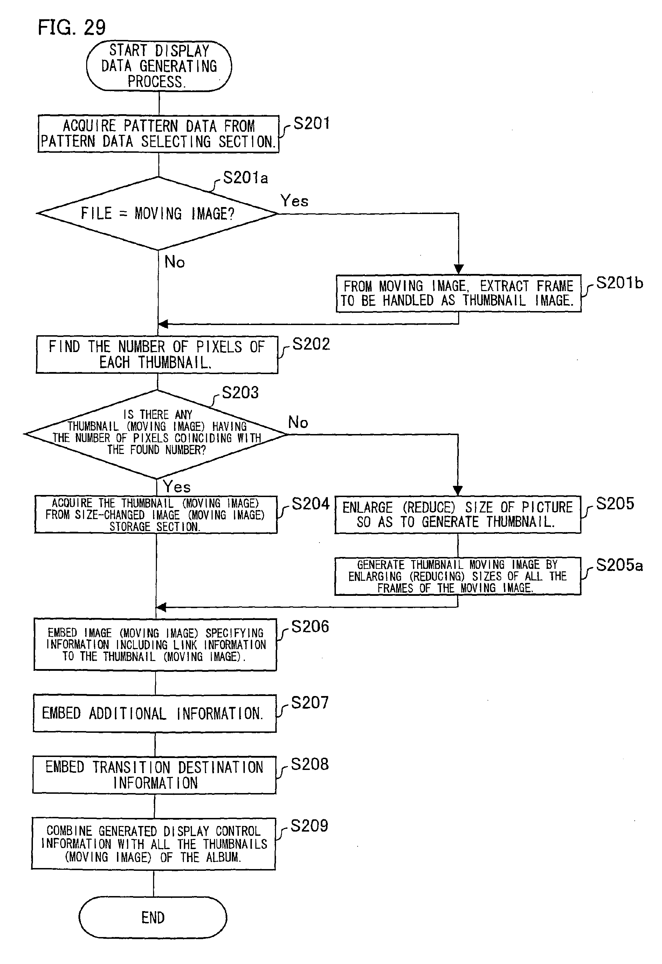

Figure 29 is a flowchart illustrating a flow of processes carried out by a display data generating section of the embodiment of the present invention.

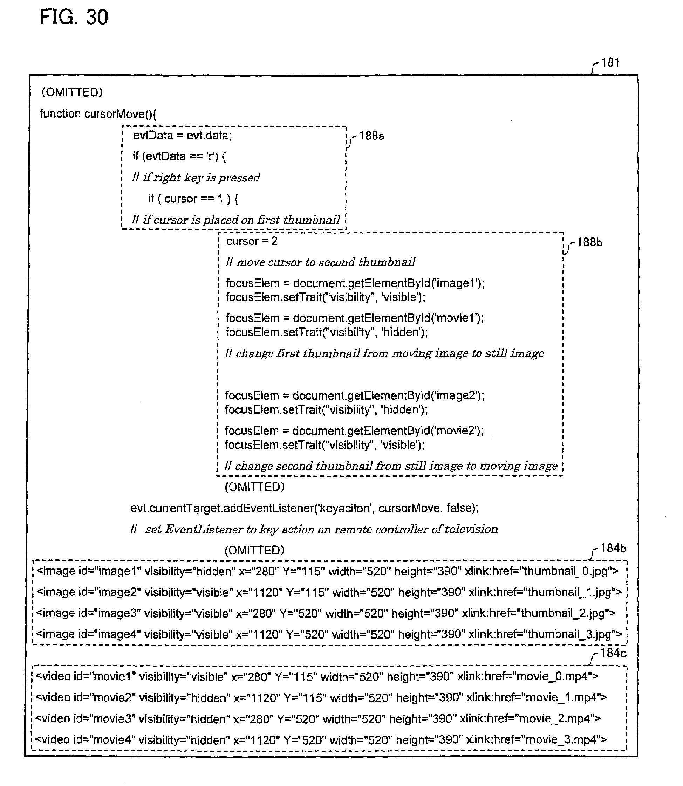

Figure 30 is a diagram concretely illustrating a part of the display control information contained in the display data.

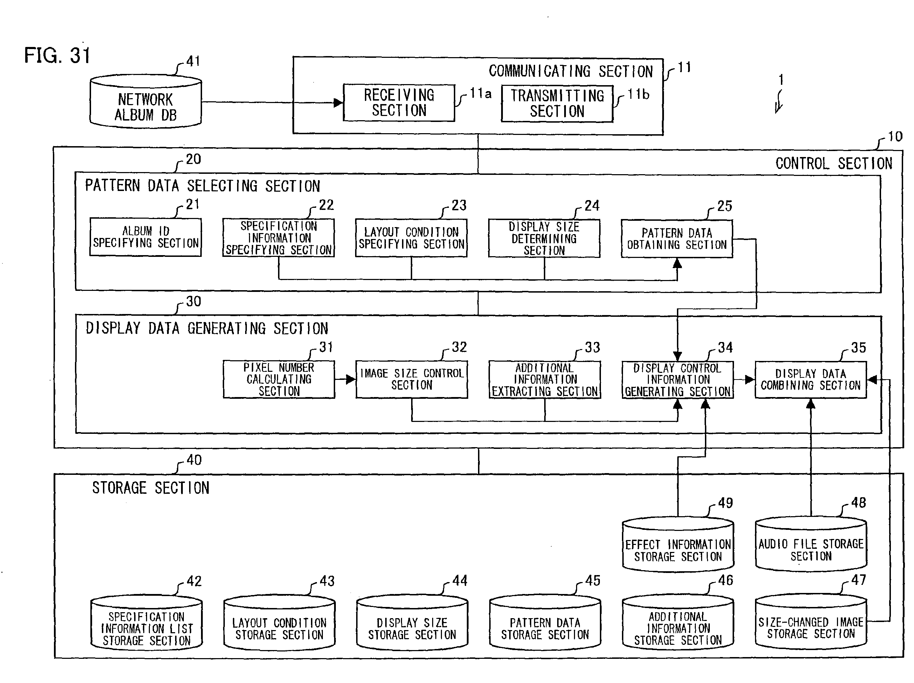

Figure 31 is a block diagram illustrating the structures of main parts of a display data generating apparatus according to still another embodiment of the present invention.

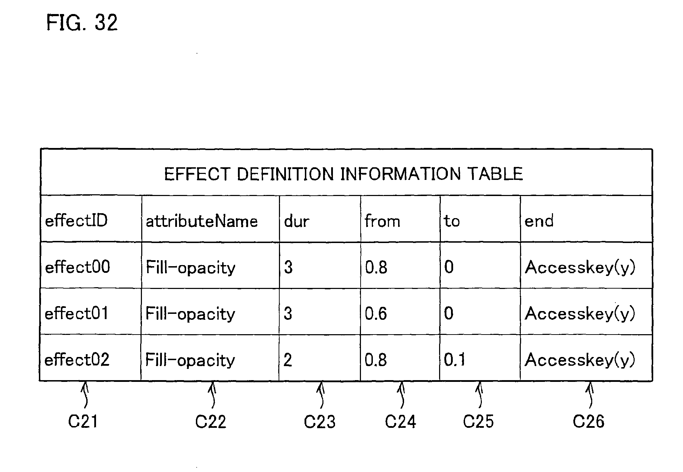

Figure 32 is a diagram illustrating an example of effect definition information stored in an effect information storage section.

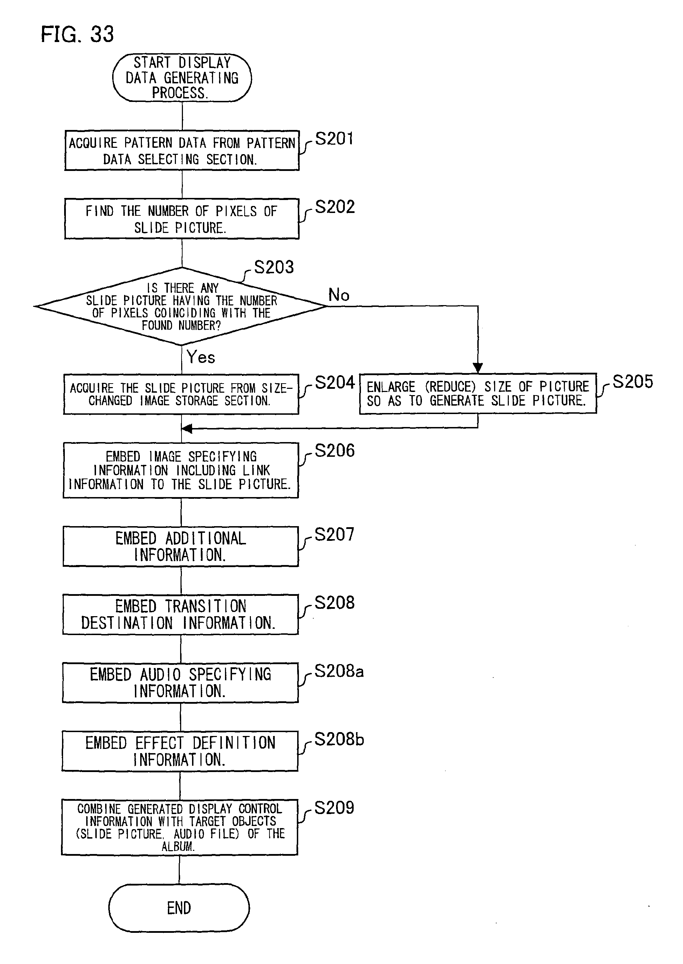

Figure 33 is a flowchart illustrating a flow of processes carried out by a display data generating section of the embodiment of the present invention.

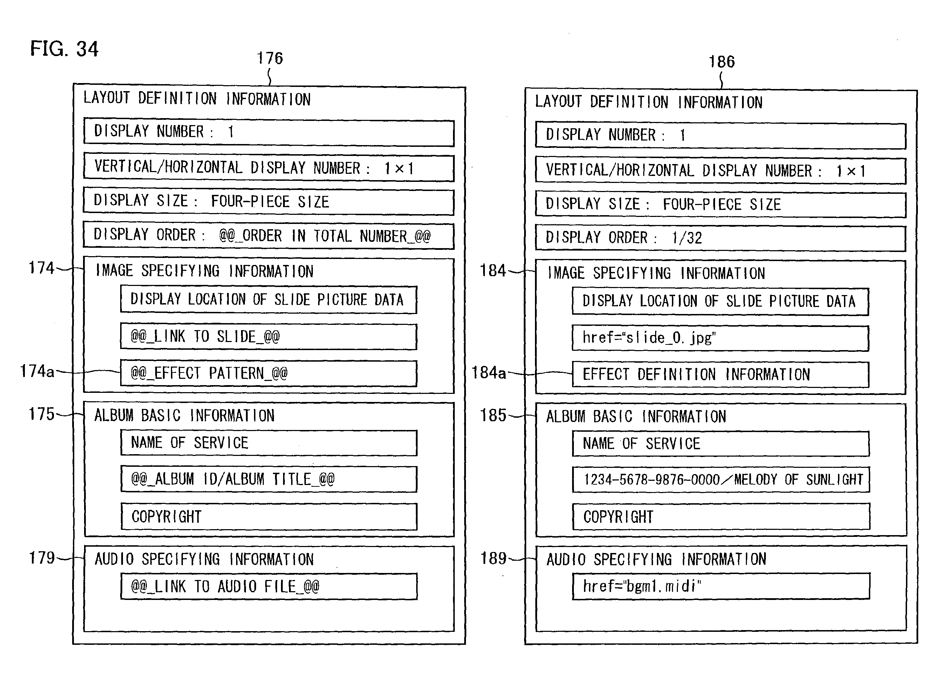

Figure 34 is a diagram schematically illustrating an example of layout definition information stored in pattern data, and an example of layout definition information contained in display control information, in the case of the embodiment of the present invention.

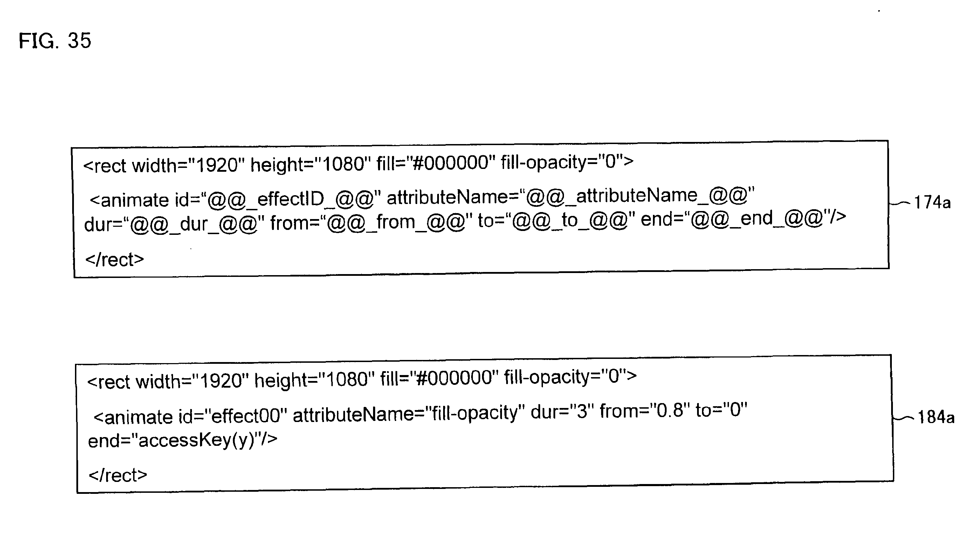

Figure 35 is a diagram illustrating respective specific examples of an effect pattern and the effect definition information.

### REFERENCE NUMERALS

- 1: Display Data Generating Apparatus (Image Data Providing Apparatus)
- 2: Television (Image Display Apparatus)
- 3: Album Managing Server
- 4: Computer
- 5: Album
- 5': Album
- 6: Album Request Message (Image Request Message)
- 7: Display Data
- 8: Slide Picture Request Message (Image Request Message)
- 9: Slideshow Display Data
- 10: Control Section
- 11: Communicating Section
- 15: Operational Section
- 16: Communicating Section
- 16a: Transmitting Section
- 16b: Receiving Section
- 17: Display Section
- 18: Broadcast Data Receiving Section
- 19: Audio Output Section
- 20: Pattern Data Selecting Section
- 21: Album ID Specifying Section
- 22: Specification Information Specifying Section (Specification Information Obtaining Means)
- 23: Layout Condition Specifying Section (Layout Condition Determining Means)
- 24: Display Size Determining Section (Display Area Size Calculating Means/Display Size Determining Means)
- 25: Pattern Data Obtaining Section
- 30: Display Data Generating Section
- 31: Pixel Number Calculating Section
- 32: Image Size Control Section (Display Image Generating Means)
- 33: Additional Information Extracting Section
- 34: Display Control Information Generating Section (Display Control Information Generating Means)
- 35: Display Data Combining Section
- 36: Moving Image Frame Extracting Section (Image Specifying Means)
- 40: Storage Section
- 41: Network Album Database
- 42: Specification Information List Storage Section
- 43: Layout Condition Storage Section
- 44: Display Size Storage Section
- 45: Pattern Data Storage Section
- 46: Additional Information Storage Section
- 47: Size-changed Image Storage Section
- 48: Audio File Storage Section
- 49: Effect Information Storage Section
- 50: Control Section
- 51: Display Control Information Analyzing Section
- 52: Broadcast Data Control Section
- 55: Moving Image Thumbnail Storage Section
- 56: Size-changed Moving Image Storage Section
- 60: Input/Output Control Section
- 61: Operation Accepting Section
- 62: Message Transmission Control Section
- 63: Display Data Receipt Control Section
- 64: Display Control Section (Display Control Means)
- 65: Audio Output Control Section
- 70: Album Request Processing Section
- 71: Album ID Obtaining Section
- 72: Layout Condition Obtaining Section
- 73: Specification Information Obtaining Section
- 74: Message Generating Section (Message Generating Means)
- 80: Storage Section
- 81: Album ID Storage Section
- 82: Specification Information Storage Section
- 83: Display Data Storage Section
- 100: Network Album System (Image Display System)

### BEST MODE FOR CARRYING OUT INVENTION

### [Embodiment 1]

The following describes an embodiment of the present invention, with reference to figures. In the present embodiment, an exemplary case is discussed in which a network album system employs an image data providing apparatus of the present invention and an image display apparatus of the present invention. The network album system is to display pictures. In the network album system, an album (picture (image) or a set of pictures) is uploaded from a communication terminal apparatus, such as a PC or a mobile phone, to an album managing server via a communication network such as the Internet. An image display apparatus having a communication function acquires the pictures in the album from the album managing server, and displays the pictures. More specifically, the image data providing apparatus generates display data for use in displaying the pictures in a predetermined size, and supplies the display data to the image display apparatus, with the result that the image display apparatus displays the pictures in the predetermined size intended by the image data providing apparatus.

In the present embodiment, the image display apparatus according to the present invention is explained as a television connected to the Internet and having a communication function. The image data providing apparatus according to the present invention is explained as a display data generating apparatus for generating display data for the television such that the television displays thumbnails of pictures of an album in a predetermined size. In the following description, it is assumed that the display data includes display control information and thumbnails (display images) of the display target pictures. The display control information defines how the thumbnails of the pictures are to be displayed. The display data generated by the image data providing apparatus of the present invention is not limited to the above, but it is possible to generate display data for displaying one image in a predetermined size or display data for displaying a plurality of images in slideshow in a predetermined size.

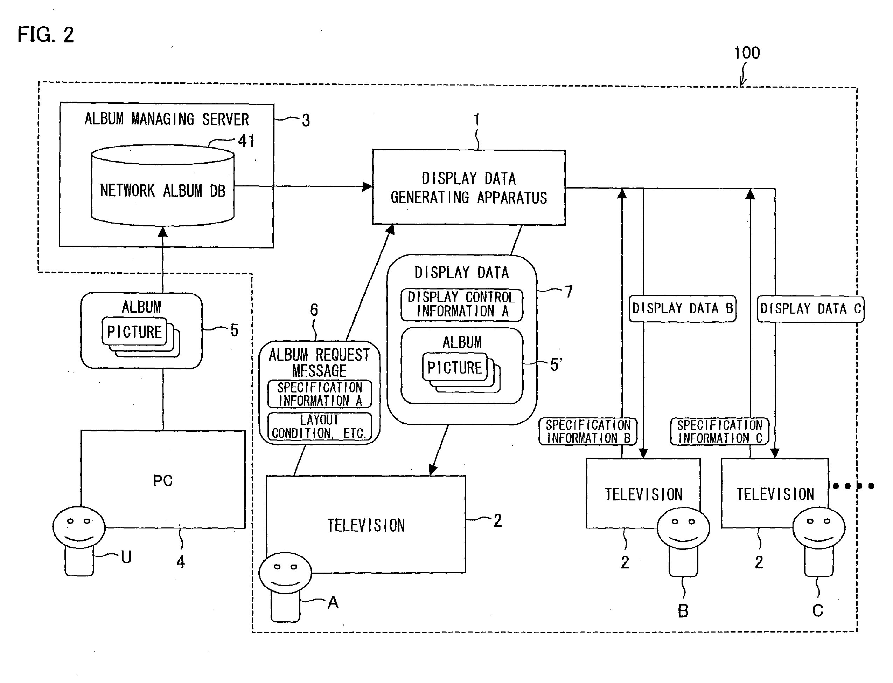

Note that a network album system 100 according to the present invention is not limited to the configuration shown in Figure 2. In the example shown in Figure 2, each of users' televisions 2 and a display data generating apparatus 1 directly exchange an album request message 6 and display data 7 therebetween. However, the network album system of the present invention is not limited to such a configuration. For example, between the television 2 and the display data generating apparatus 1, there may be provided a server apparatus for managing a website run by a service provider who provides such a network album service.

According to the configuration, when using the network album system via the television 2, the television 2 makes access to the server apparatus of the service provider and then displays a portal site in a general web browser. Then, switching is carried out from the web browser to the network album system's application that is used to make a request for display data of an album, and the application is launched accordingly. This makes it possible to prevent the television 2 from connecting to an apparatus other than the display data generating apparatus 1 and an album managing server 3, which are designated by the portal site in advance.

### [Summary of Network Album System]

Figure 2 is a block diagram showing a schematic configuration of the network album system (image display system) 100 according to the embodiment of the present invention. As shown in Figure 2, the network album system 100 includes the display data generating apparatus (image data providing apparatus) 1, at least one television (image display apparatus) 2, and the album managing server (image data providing apparatus) 3. These apparatuses are connected so as to be able to communicate with each other via the Internet.

The album managing server 3 manages albums each including at least one picture (set of pictures). The album managing server 3 includes a network album database (DB) 41 in which the albums are stored. An album 5 (or pictures) is transmitted by, e.g., an owner U of pictures, from a communication terminal apparatus such as a computer (PC) 4 to the album managing server 3. The album 5 is then stored in the network album DB 41.

In cases where a picture is uploaded from the communication terminal apparatus such as the PC 4 to the album managing server 3 (or where the pictures are uploaded directly from a mobile phone or a digital camera having a communication function), image capturing device information indicating a device by which the picture has been taken may be associated with the picture and be transmitted to the album managing server 3 together with the picture for the sake of identifying the image capturing device from which the picture has been transferred. Examples of such image capturing device information include the product name of a digital camera (or mobile phone) by which the picture has been taken, the model number thereof, and the like. With this, pictures uploaded from the same communication terminal apparatus can be managed based on image capturing devices, with the result that the pictures can be handled with ease in accordance with the specifications of the image capturing devices.

An example of this is as follows. That is, resolution of captured pictures, image size, and aspect ratio (and variations thereof) differ depending on the specifications of image capturing devices. Based on each of the specifications of the image capturing devices, the resolution, the image size, the aspect ratio, and the like are recorded as information concerning the pictures. This makes it possible to easily specify the information concerning the pictures, in accordance with the image capturing device information, with the result that the display data generating device 1 efficiently carries out the aforementioned process of generating the display data for use in displaying the pictures in the predetermined size.

The communication terminal apparatus is not limited to the PC 4 shown in Figure 2, as long as it has a function of transmitting the albums and pictures of the owner U to the album managing server 3. Besides the PCs, televisions each having a communication function, mobile phones, and PDAs (personal digital assistant) may be employed as the communication terminal apparatuses.

Each of the albums stored in the network album DB 41 is associated with an album ID (image identification information) so as to be identified uniquely. When the album ID is designated, every picture (set of pictures) contained in the album is selected. Further, each of the pictures contained in the album is associated with a picture ID (or filename of the picture data) so as to be identified uniquely. Accordingly, by designating an album ID and an picture ID (or filename), one corresponding picture is selected. The network album DB 41 stores an album information data table for managing albums. Details thereof will be described later.

In the present embodiment, by designating an album ID, all the picture(s) contained in the album corresponding to the album ID can be specified. By designating the album ID and a picture ID (image identification information), one corresponding picture therein can be specified.

The display data generating apparatus 1 generates the display data that is necessary for the television 2 upon displaying each picture of the album. The display data is indicative of information to be displayed on the image display apparatus. As described above, the display data in the present embodiment at least includes (i) the display control information over the television and (ii) the data representing the picture to be displayed. The display control information refers to one or more scripts for generating a display screen (hereinafter, also referred to as "display screen generating scripts"). The scripts instruct the image display apparatus how pictures should be displayed, i.e., what pictures should be displayed in what positions in what size. More specifically, the display control information includes: layout definition information for defining a layout in which the pictures are to be displayed; and image specifying information for specifying the pictures (or thumbnails of the pictures) and associating these specified pictures with respective display positions defined by the layout definition information. Further, the display control information may include text data indicating basic information etc., about the album, and the like.

The television 2 receives such display data, thus being allowed to display, in accordance with the display control information, the one or more pictures contained in the display data. The display screen generating scripts are prepared based on the ways of displaying, respectively. The display control information may include a plurality of display screen generating scripts. Examples of such display screen generating scripts include: a thumbnail view screen generating script for displaying thumbnails of a plurality of pictures; an image display screen generating script for displaying pictures in an album one by one in slideshow; and the like.

Each of the display screen generating scripts can be constituted by text data written in, e.g., XML (extensible Markup Langage). In this case, the layout definition information can be described as, e.g., SVG (Scalable Vector Graphics).

Further, each of the display screen generating scripts may include status transition definition information that defines processes to be performed by the television (concretely, transition to what display screen) in response to (i) an operation (e.g. selection of a picture, etc.) performed with respect to a picture or (ii) an operation (selection of an album, etc.) performed with respect to a network album. The status transition definition information can be described in, e.g., XML. Such status transition information is embedded in each of the display screen generating scripts, which are also XML data, and then transmitted to the television 2. Alternatively, such status transition information is transmitted to the television 2 as a script independent of these display screen generating scripts.

The display data generating apparatus 1 receives, from the television 2, the album request message (image request message) requesting the album to be displayed. The album request message 6 thus received includes specification information indicating the specification of the television 2. The display data generating apparatus 1 generates, in accordance with the specification information, the display data 7 that is based on the specification of the television 2. The display data 7 thus generated is supplied to the television 2.

For example, when the display data generating apparatus 1 receives, from a television 2 of a user A, specification information A contained in an album request message 6, the display data generating apparatus 1 generates display data 7 including display control information A generated so as to be based on the specification of the television 2 of the user A, and supplies it to the television 2 of the user A. Such display data 7 at least includes (i) an album 5' including pictures whose image sizes are adjusted in accordance with the specification of the television 2 of the user A, and (ii) display control information A including layout definition information for the pictures of the album. The pictures are generated so as to be based on the specification thereof, and the like.

Further, when the display data generating apparatus 1 receives an album request message (image request message) 6 from a television 2 of a user B, the display data generating apparatus 1 supplies, to the television 2 of the user B, display data B generated in accordance with specification information B so as to be based on the specification of the television 2. Likewise, when the display data generating apparatus 1 receives an album request message (image request message) 6 from a television 2 of a user C, the display data generating apparatus 1 supplies, to the television 2 of the user C, display data C generated in accordance with specification information C.

Each of the televisions 2 displays the pictures of the albums stored in the network album DB 41. The television 2 transmits to the display data generating apparatus 1 the album request message 6, which is a message requesting an album to be displayed thereon. In response, the television 2 receives the display data 7 from the display data generating apparatus 1. In accordance with the display control information contained therein, the television 2 displays the pictures of the album.

The album request message 6 includes (i) the information for specifying the album to be displayed, and (ii) the specification information (the number of pixels and screen size) of the television 2.

Details about the album request message 6 and the display data 7 will be described later.

Note that the network album DB 41 may be provided in the display data generating apparatus 1. In this case, the PC 4 transmits an album to the display data generating apparatus 1.

### [As to Display Data]

Figure 24 is a diagram schematically illustrating the data structure of the display data 7. As shown in Figure 24, the display data 7 according to the present embodiment includes (i) display control information 181 which describes a control instruction for the television 2 such that the television 2 displays a specific display screen or such that the television 2 carries out various application functions (hereinafter, referred to as "photo application functions") for the network album; and (ii) target objects 111. Examples of the target objects 111 include: (i) still images such as pictures to be displayed on the television 2, (ii) menu screens, or (iii) images of operation buttons. In the example shown in Figure 24, each of the target objects 111 included in the display data 7 is a JPEG picture (still image); however, the target object 111 is not limited to this. As the target object 111, data in any data format can be included in the display data 7 as long as the television 2 can handle the data so as to display the data. For example, moving image data, and/or text data may be included therein as the target object 111. The text data may be included in the display data 7 as an object (**.txt) other than the display control information 181. Alternatively, the text data may be defined in SVG data (**.svg) realizing the display control information 181.

In the present embodiment, the target objects 111 included in the display data 7 are not only the objects, such as images, moving images, or texts, which are to be subjected to the display process, but also objects in any formats, such as audio data, which are to be reproduced by the television 2 so as to be presented to the user. In order that such target objects 111 in any formats are reproduced by the television 2 so as to be presented to the user, the display control information 181 has descriptions for specifying the target objects 111 and defines various operations of the television 2.

In the present embodiment, the display control information 181 can be classified roughly into two types. One of the two types is layout condition information 186 for defining how the target objects 111 (i.e., pictures, GUI screens defined in SVG realizing the display control information 181, text data, moving images, audio data, or the like) are to be displayed (reproduced). In accordance with such layout condition information 186, the television 2 judges how the data included in the display data 7 should be displayed.

Examples of the layout definition information 186 include: (i) target object ID (identification information) for uniquely identifying the target objects 111 respectively; (ii) target object (image) specifying information indicating association with information indicating display positions of the target objects 111 and the display sizes thereof; and (iii) album basic information 185 defining ways of displaying various information (the title of the album, the title of each picture, comments on the album and the picture, and so on) associated with each display data.

The other one of the two types is operation definition information 280 which defines a predetermined operation that the television 2 should carry out in response to an event (e.g.: a predetermined period of elapsed time; start/ end of predetermined operations; reception of display data; and key input from a user) occurred in the television 2. In accordance with this operation definition information 280, the television 2 judges (i) a process to be carried out, (ii) a subject to which the process is carried out, (iii) a time at which the process is carried out, and (iv) a manner in which the process is carried out.

Examples of the operation definition information 280 includes: status transition definition information 187 that defines display data (display screen) to be displayed (requested and acquired) next in response to occurrence of an event; and operational function definition information 188 that defines a predetermined process (e.g. rotation of images, changes in colors, changes in text data, printing, reproduction of moving images and sound) of a photo application function, which processes are to be performed by the television 2 with respect to the display data being displayed. For example, for defining a process to be carried out by the television 2 in response to a user's key input, a script in which a type of key of a remote controller for operating the television 2 is associated with a detail of the process to be performed is described in the operational function definition information 188.

### [Processes in Network Album System]

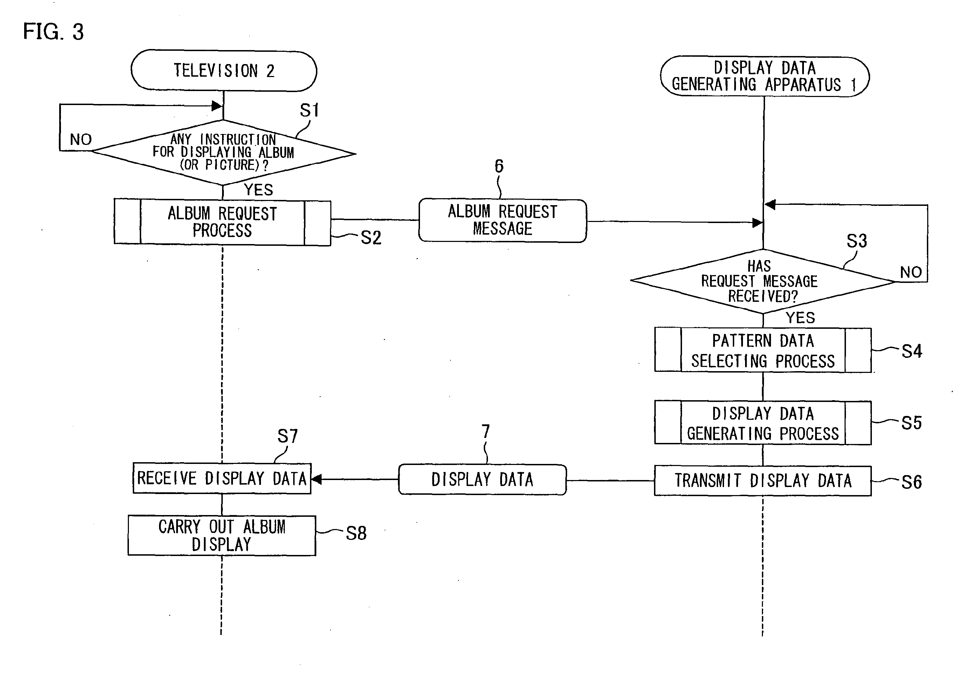

Figure 3 is a sequence diagram illustrating a flow of processes carried out by the apparatuses of the network album system 100 according to the embodiment of the present invention.

When the television 2 receives from a user an instruction signal instructing display of a specific album (or a specific picture) (YES in S1), the television 2 carries out an album request process so as to transmit an album request message 6 to the display data generating apparatus 1 (S2). Accordingly, the album request message 6 is transmitted to the display data generating apparatus 1.

When the display data generating apparatus 1 receives the album request message 6 from the television 2 (YES in S3), the display data generating apparatus 1 carries out a pattern data selecting process so as to select the most appropriate pattern data in accordance with the specification information of the television 2 (S4). Here, the wording "pattern data" refers to data including pattern information (or combination thereof) of a display screen generating script including template layout definition information. In other words, the pattern data is a template for the display control information. If the information (image specifying information) for actually specifying the display target album (pictures, thumbnails) is to say "contents", the pattern data is to say a "container" before the "contents" are put therein.

Next, the display data generating apparatus 1 generates, in accordance with the selected pattern data, display control information for use in displaying the designated album (picture), and then carries out a display data generating process so as to generate display data that includes the display control information and the album (picture) and that is based on the specification of the television 2 (S5).

The display data generating apparatus 1 transmits the display data 7 generated in S5, to the television 2 having made the request therefor (S6). The television 2 receives the display data 7 from the display data generating apparatus 1 (S7). Then, the television 2 displays the album (picture) contained in the display data 7, in accordance with the display control information (S8).

In this way, the display data generating apparatus 1 generates the display data 7 in accordance with the specification of the television 2, and causes the television 2 to display the pictures in the predetermined size.

Note that the album request process carried out by the television 2 in S2 will be described in detail later with reference to Figure 18. Further, the pattern data selecting process carried out by the display data generating apparatus 1 in S4 will be described in detail later with reference to Figure 9. The display data generating process carried out by the display data generating apparatus 1 in S5 will be described in detail later with reference to Figure 10.

Next, the following explains details about the structure of the display data generating apparatus 1 that carries out the processes of S4 and S5.

### [Structure of Display Data Generating Apparatus]

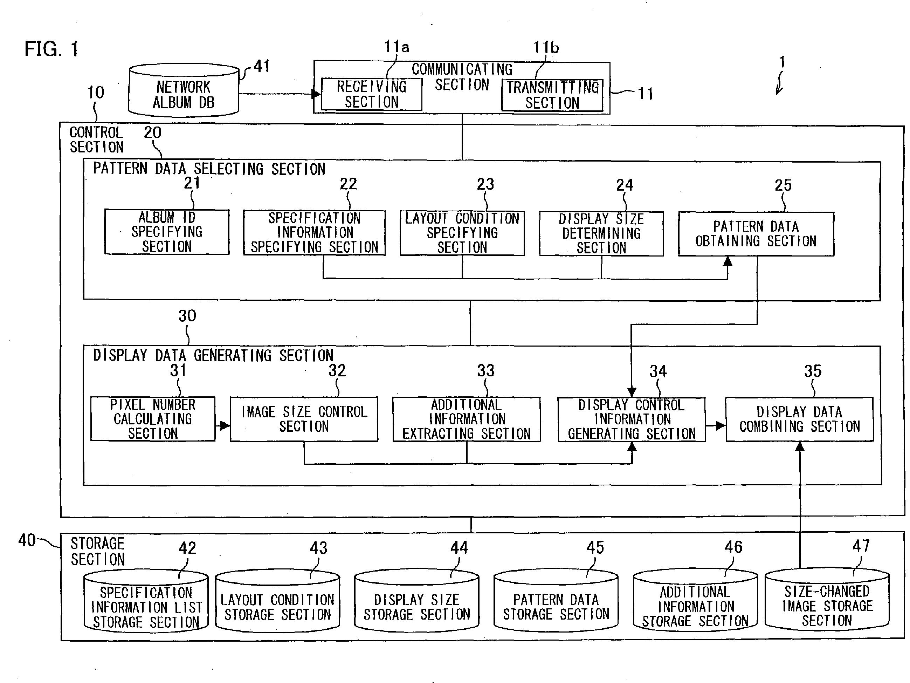

Figure 1 is a block diagram illustrating the structures of main parts of the display data generating apparatus 1 according to the embodiment of the present invention. As shown in Figure 1, the display data generating apparatus 1 includes a communicating section 11, a control section 10 carrying out general control over the display data generating apparatus 1, and a storage section 40.

The control section 10 controls operations of sections provided in the display data generating apparatus 1. Provided in the display data generating apparatus 1 are a pattern data selecting section 20 and a display data generating section 30. The control section 10 reads out various programs stored in the storage section 40, so as to control the respective sections in the display data generating apparatus 1 of the present invention, thereby performing the processes for generating the display data.

The storage section 40 stores (i) a control program to be executed by the control section 10, (ii) an OS program to be executed by the control section 10, and (iii) various data to be read out by the control section 10 when the control section 10 carries out the various processes for generating the display data. The storage section 40 is constituted by a non-volatile memory device such as a hard disk. The various data are respectively stored in various storage sections in the storage section 40, i.e., a specification information list storage section 42, a layout condition storage section 43, a display size storage section 44, a pattern data storage section 45, an additional information storage section 46, and a size-changed image storage section 47. In the present embodiment, the display data generating apparatus 1 is so configured as to make access to the network album DB 41 via a network; however, the present invention is not limited to this. The network album DB 41 may be provided in the storage section 40 of the display data generating apparatus 1.

The communicating section 11 communicates with the apparatuses provided outside the display data generating apparatus 1 in the network album system 100. Provided in the communicating section 11 are a receiving section 11a and a transmitting section 11b.

Specifically, the receiving section 11a receives the album request message 6 from the television 2, and the album request message 6 thus received by the receiving section 11a is transmitted to the pattern data selecting section 20 of the control section 10. The transmitting section 11b transmits the display data generated in response to the request from the television 2. That is, the transmitting section 11b transmits the display data transmitted from the display data generating section 30, to the television 2 having made the request.

For generation of the display data 7, the communicating section 11 communicates with the album managing server 3 (Figure 2) so as to make a request to the album managing server 3 for the album 5 (or picture) that is a target to be displayed, with the result that the communicating section 11 acquires the album 5 (picture).

Note that in cases where the network album DB 41 is provided in the display data generating apparatus 1, there is no need to acquire the album 5 (picture) via the communicating section 11. In this case, the album 5 (picture) is received from a communication terminal apparatus such as the PC 4 via the receiving section 11a, and is recorded onto the network album DB 41.

Figure 25 is a diagram illustrating an example of the album information data table stored in the network album DB 41. In the present embodiment, album information indicating attributes of an album is stored for each album and constitutes the album information data table.

A column C1 (data name "album ID") indicates album IDs for respectively identifying albums.

A column C2 (data name "availability") indicates whether or not each of the albums specified by the album IDs is available. In cases where this availability data indicates "not available", it implies that the album used to be managed by the album managing server 1, but contents of the album no longer exists (because the contents have been deleted or the like) and will not be available again in the future.

A column C3 (data name "expiration date") indicates a date on which the publication period set to the album expires.

A column C4 (data name "status of publication") indicates information on whether or not the album is set to be publicly accessible. In the present embodiment, the owner U of the pictures may arbitrarily set whether or not the album that he/she created is to be publicly accessible.

Columns C5 to C9 indicate basic information on the album. The column C5 indicates a creator of the album. The column C6 indicates the title of the album. The column C7 indicates comments that the creator of the album has made on the album. The column C8 indicates the date of creation thereof. The column C9 (data name "the number of files") indicates the number of pictures (moving images) contained in the album. The display data generating section 40 acquires those information, when necessary, to generate the display data for displaying the album.

A column C11 (data name "filename") indicates one or more picture IDs for identifying one or more pictures contained in the album. Each of the picture IDs may be anything, as long as each of the one or more pictures contained in one album is identifiable by the picture ID. In the case shown in Figure 25, the filename of the picture ("**.jpg") is directly handled as the picture ID. Note that the picture IDs may be respectively given to the pictures by the album managing server 3, or may be respectively given by the creator of the album.

A column C13 indicates a picture title that is given to each picture by the creator of the album. A column C14 indicates comments that the creator of the album has made on each of the pictures.

In generating the display data for displaying the pictures, the display data generating section 40 acquires those pieces of information when necessary.

Although the foregoing describes that the album information has a table structure constituted of 14 columns, the data structure of the album information of the present invention is not limited to this. The album information is configured suitably so as to contain information necessary for the album managing server 3 to manage the status of the album. For example, in cases where an age limitation is set on viewers of the album, an additional column may be provided to store a condition of ages of viewers who are allowed to view the album.

In the case shown in Figure 25, the plural pieces of album information are shown in the table structure as gathered plural records, but the data structure of the album information is not limited to this. The album information may have any data structure, as long as the information of each of the columns is stored in such a way as to be associated with the album ID.

Details about columns C10 and C12 will be described later.

The pattern data selecting section 20 of the control section 10 carries out the pattern data selecting process shown in Figure 3. The pattern data selecting section 20 includes an album ID specifying section 21, a specification information specifying section (specification information obtaining means) 22, a layout condition specifying section (layout condition determining means) 23, a display size determining section (display area size calculating means/display size determining means) 24, and a pattern data obtaining section 25.

First, the pattern data selecting section 20 analyzes the album request message 6 received from the television 2. In the present embodiment, the album request message 6 includes (i) the specification information indicating the specification of the television 2 having made the request, and (ii) the information indicating how the pictures are supposed to be disposed, i.e., the layout condition indicating a condition for determining the display layout of the thumbnails. The layout condition may include an album ID for specifying the requested album.
(a) of Figure 4 is a diagram schematically illustrating the structure of the album request message 6 analyzed by the pattern data selecting section 20. The album request message 6 includes the layout condition 161 and the specification information 162 as shown in (a) of Figure 4.
   In the present embodiment, the layout condition 161 includes (i) the album ID 161a for specifying the album requested by the television 2, (ii) a thumbnail display number 161b for designating the number of the thumbnails of the pictures to be displayed on the screen of the television 2 at a time, and (iii) vertical/horizontal display number (vertical and horizontal display number) 161c for designating the layout of the thumbnails, i.e., how many thumbnails are to be disposed in each column (each line in the vertical direction) on the screen of the television 2 and how many thumbnails are to be disposed in the each row (each line in the horizontal direction) thereon. The specification information 162 includes (i) a model 162a indicating the model of the television 2, (ii) a screen size 162b indicating the screen size of the monitor of the television 2, and (iii) a pixel number 162c indicating the number of pixels of the monitor of the television 2. Note that in cases where the display data generating apparatus 1 is so configured as to specify the specification of the television 2, i.e., the screen size 162b and the pixel number 162c in accordance with only the model 162a, the specification information 162 may be constituted by only the model 162a.
(b) of Figure 4 is a diagram illustrating a specific example of the layout condition 161 contained in the album request message 6. (c) of Figure 4 illustrates a specific example of the specification information 162 contained in the album request message 6.

The album ID specifying section 21 specifies the album ID 161a contained in the album request message 6. In the example shown in (b) of Figure 4, the album ID specifying section 21 analyzes the album request message 6 and specifies "1234-5678-9876-0000" as the album ID 161a accordingly.

The specification information specifying section 22 specifies the number of pixels and the screen size of the television 2 in accordance with the specification information 162 contained in the album request message 6. In the example shown in (c) of Figure 4, "142.8 cm (horizontal) × 80.4 cm (vertical)" is extracted as the screen size 162b, and "1920 dpi (horizontal) × 1080 dpi (vertical)" is extracted as the pixel number 162c.

In cases where the specification information 162 only includes the model 162a, the specification information specifying section 22 can be configured as follows. That is, the specification information specifying section 22 is configured to specify the number of pixels and the display size each corresponding to the model information represented by the model 162a, in reference to the specification information list storage section 42 that stores the model information indicating the model of the television 2, the information indicating the number of pixels, and the information indicating the display size such that they are associated with one another. Hence, in cases where the specification information 162 always includes the screen size 162b and the pixel number 162c, the specification information list storage section 42 does not need to be provided necessarily. Further, in cases where pictures are supposed to be displayed in a predetermined size without considering the screen size of the television 2, the specification information specifying section 22 may be configured to specify only the number of pixels.

In the present embodiment, the display data is prepared such that the predetermined number of pictures are displayed in the predetermined size and are all displayed within the screen of the television 2. Therefore, the specification information specifying section 22 specifies information indicating the number of pixels and the screen size, as the specification information. Note that in cases where the specification information 162 includes the display size 162b and the pixel number 162c as shown in (a) to (c) of Figure 4, the specification information specifying section 22 extracts them. Thus, there is no need to provide the specification information list storage section 42 in such a case.

The layout condition specifying section 23 specifies the layout condition for displaying the thumbnails of the pictures of the album corresponding to the album ID 161a contained in the album request message 6, i.e., specifies how the thumbnails are to be disposed (e.g., specifies how many thumbnails are to be displayed and how many thumbnails are to be disposed in each column and are to be disposed in each row when displaying the thumbnails in a lattice manner). In the example shown in (b) of Figure 4, the layout condition specifying section 23 specifies "72" as the thumbnail display number 161b, and specifies "9 (horizontal) × 8 (vertical)" as the vertical/horizontal display number 161c.

Note that in cases where the vertical/horizontal display number 161c is not contained in the layout condition 161, the layout condition specifying section 23 may be so configured as to specify the number of thumbnails to be displayed in each column and the number of thumbnails to be displayed in each row, in accordance with the number of the thumbnails to be displayed. The number of the thumbnails to be displayed is indicated by the thumbnail display number 161b. For example, the layout condition storage section 43 is so configured as to store the thumbnail display number and the vertical/horizontal display number such that they are associated with each other. The thumbnail display number and the vertical/horizontal display number are associated with each other in the layout condition storage section 43 in the following manners, for example. When the thumbnail display number is indicative of "72", the vertical/horizontal display number is indicative of "9 × 8". When the thumbnail display number is indicative of "36", the vertical/horizontal display number is indicative of "9 × 4". When the thumbnail display number is indicative of "24", the vertical/horizontal display number is indicative of "6 × 4". When the thumbnail display number is indicative of "12", the vertical/horizontal display number is indicative of "4 × 3". Such association between the thumbnail display number and the vertical/horizontal display number allows the layout condition specifying section 23 to specify the vertical/horizontal display number in accordance with the thumbnail display number.

Note that the various information specified by the respective sections of the pattern data selecting section 20 as a result of analyzing the album request message 6 are stored in an analysis result storage section (not shown) provided in the storage section 40, and are read out by the sections of the pattern data selecting section 20 and of the display data generating section 30 as required.

The display size determining section 24 determines the display size in which each thumbnail of the pictures of the album requested by the album request message 6 is to be displayed.

Here, the display size is the size in which each thumbnail is actually displayed on the screen of the television 2. For example, the size coincides with a predetermined actual size, such as "vertical (cm) × horizontal (cm) size", "L size", "postcard size", or "A4 size". Hence, the display size is different from the size of data of each picture (dots in the vertical direction × dots in the horizontal direction) and resolution (dpi).

The following explains procedures in which the display size determining section 24 determines the display size of each thumbnail, with reference to the examples of the album request message 6 shown in Figures 4.

The vertical/horizontal display number specified by the layout condition specifying section 23 in accordance with the layout condition 161 shown in (b) of Figure 4 is indicative of "9 (horizontal) × 8 (vertical)", and the vertical/horizontal display number specified by the specification information specifying section 22 in accordance with the specification information 162 shown in (c) of Figure 4 is indicative of "142.3 cm (horizontal) × 80.4 cm (vertical)".

In the present embodiment, the display size determining section 24 determines the size of each thumbnail such that the 72 thumbnails (9 × 8) are displayed within the screen of the television 2. As shown in Figure 5, the maximum display size (display area size) of each thumbnail is "approximately 15.8 cm (horizontal) × approximately 10 cm (vertical)".

The maximum display size may be determined conclusively as the display size of each thumbnail by the display size determining section 24; however, the display size of the thumbnail is not limited to this. In the present embodiment, an actual printing size is utilized as the predetermined display size. The actual printing size refers to the actual size of an output image obtained by printing the data of a picture.

As one example, in the present embodiment, for the actual printing size, standard sizes of output sheets (e.g., L size (89 mm × 127 mm)) for printing are used. From these standard sizes, the display size is determined. However, the variations of the display size are not limited to the above. For example, in cases where the actual printing size is the L size with a white frame, a size obtained by excluding the white frame portion from the above size (89 mm × 127 mm) may be prepared in advance as the actual printing size.

Among such plural types of actual printing size stored in the display size storage section 44, the display size determining section 24 specifies the most appropriate actual printing size in accordance with the predetermined condition, and determines it as the display size of the thumbnails.

In the example shown in Figure 5, the display size is determined with such an assumption that it is possible to display the thumbnails on the entire region of the display screen of the television; however, the present invention is not limited to this. For example, in cases where spaces each having a predetermined width are provided between the thumbnails or where items other than the thumbnails (operation button, input area, album basic information, etc.) are displayed, the display size determining section 24 is so configured as to determine the display size in consideration of regions to be allocated to the spaces or the items.

Figure 6 is a diagram illustrating an example of actual printing size information (display size information) stored in the display size storage section 44. In the present embodiment, based on the types of actual printing size, the display size storage section 44 stores information indicating size names, information indicating the vertical lengths of the actual printing sizes, and information indicating the horizontal lengths thereof, respectively. As shown in Figure 6, the aspect ratios of the actual printing sizes may be memorized for the types of size, respectively.

In the present embodiment, the display size determining section 24 makes reference to the display size storage section 44 so as to specify the largest actual printing size among actual printing sizes that are as large as or smaller than each thumbnail's maximum display size found as described above, and determines the largest actual printing size conclusively as the display size of the thumbnail.

This is specifically explained as follows with reference to the example of Figure 6. That is, the largest actual printing size that is as large as or smaller than the maximum display size "approximately 15.8 (horizontal) × approximately 10 cm (vertical)" is the "L size". Therefore, the display size determining section 24 specifies the "L size" as the display size.

The way that the display size determining section 24 specifies the actual printing size is not limited to the above. For example, the display size determining section 24 recognizes the aspect ratio of each picture of the album to be displayed, and selects either (i) an actual printing size having an aspect ratio that coincides with the aspect ratio of each picture of the album or (ii) an actual printing size having an aspect ratio that is the closest to the aspect ratio thereof.

In the above explanation, the display size determining section 24 determines the display size in accordance with (i) the screen size specified by the specification information specifying section 22 and (ii) the vertical/ horizontal display number specified by the layout condition specifying section 23; however, the present invention is not limited to this. For example, in cases where the layout of the thumbnails are made without any consideration of the screen size of the television 2, the display size determining section 24 may specify an actual printing size determined in advance, in accordance with the vertical/horizontal display number.

As such, the specified display size (e.g., "L size") possibly does not coincide with the maximum display size (e.g., "15.8 cm × 10 cm"). In such a case, if the specified display size is smaller than the maximum display size, unused spaces may be evenly given between the thumbnails as margins.

On the other hand, if the specified display size is larger than the maximum display size, the layout of the thumbnails may be defined such that the thumbnails are respectively scrolled within a region allocated to the thumbnails. Alternatively, a different actual printing size may be applied to certain thumbnails such that they are contained in their allocated areas. In this case, the display size determining section 24 determines the display size not for each album but for each picture of the album.

The pattern data obtaining section 25 acquires pattern data appropriate for displaying the pictures of the album requested by the album request message 6. Specifically, the pattern data obtaining section 25 acquires the most appropriate pattern data among a plurality of pattern data stored in the pattern data storage section 45, in accordance with (i) the vertical/horizontal display number specified by the layout condition specifying section 23 and (ii) the display size determined by the display size determining section 24.

Figure 7 is a diagram illustrating examples of the pattern data stored in the pattern data storage section 45. See a table 170, for example. The pattern data thus stored are rendered pattern data IDs associated with combinations of the vertical/horizontal display number 172 and the display size 173. In cases where pattern data other than the information shown in the table 170 is prepared, for example, where pattern data for a television of a specific type is prepared, model information concerning the television 2 may be stored therein.

In the above example, the pattern obtaining section 25 acquires pattern data 171 having a pattern ID "Temp_001", in accordance with (i) the vertical/horizontal display number "9 × 8" specified by the layout condition specifying section 23 and (ii) the display size "L size" specified by the display size determining section 24.

In this way, in response to the album request message 6 from the television 2, the pattern data selecting section 20 selects the pattern data 171 appropriate for generation of the display control information including the layout definition information that is based on the specification of the television 2.

The pattern data 171 thus selected by the pattern data selecting section 20 is recorded onto the storage section 40, and is read out by the display data generating section 30 as required for the sake of generating the display data that is based on the specification of the television 2. Details about the data structure of the pattern data 171 will be described later.

The display data generating section 30 of the control section 10 uses the pattern data selected by the pattern data selecting section 20, so as to carry out the display data generating process shown in Figure 3. More specifically, the display generating section 30 (1) generates the thumbnails by enlarging (reducing) the size of the pictures of the display target album such that they are displayed on the television 2 in the aforementioned display size, (2) generates the display control information by incorporating into the selected pattern data the image specifying information of the thumbnails that are to be displayed, and (3) combines the generated thumbnails with the display control information (and additional information thereof, if any) so as to generate the display data that is based on the specification of the television 2.

In order to carry out the display data generating process, the display data generating section 30 includes a pixel number calculating section 31, an image size control section (display image generating means) 32, an additional information extracting section 33, and a display control information generating section (display control information generating means) 34, and a display data combining section 35.

The pixel calculating section 31 finds a thumbnail pixel number for use in displaying the thumbnails of the pictures, designated as display targets, on the television 2 in the determined display size. The thumbnail pixel number is information indicating the number of pixels of each of the thumbnails respectively obtained by enlarging (or reducing) the pictures of the display target album. This information notifies the image size control section 32 to enlarge (or reduce) the sizes of the pictures by pixels in the horizontal and vertical directions so as to prepare the thumbnails that are to be displayed in the L size on the television 2 having, e.g., "1920 × 1080" pixels.

Accordingly, the image size control section 32 generates the thumbnails each having pixels corresponding to the thumbnail pixel number found by the pixel number calculating section 31, by enlarging (or reducing) the sizes of the pictures of the display target album such that each of the thumbnails has the pixels corresponding to the thumbnail pixel number.

Specifically, the image size control section 32 acquires the thumbnail pixel number found by the pixel number calculating section 31, and then acquires from the network album DB 41 (Figure 2) the data of the pictures of the album specified by the album ID specifying section 21. Then, the image size control section 32 carries out an image process of enlarging (or reducing) the sizes of the acquired pictures, thereby generating the thumbnails each having the number of pixels corresponding to the thumbnail pixel number. The thumbnails thus generated, i.e., the images obtained when the image size control section 32 has changed the sizes of the original pictures are recorded onto the size-changed image storage section 47.

For a specific album, the size-changed image storage section 47 may beforehand store thumbnails obtained by changing original pictures thereof to various sizes. In this case, the image size control section 32 makes reference to the size-changed image storage section 47. In cases where the size-changed image storage section 47 beforehand stores the thumbnails corresponding to the number of pixels found by the pixel number calculating section 31, the image size control section 32 merely acquires the thumbnails from the size-changed image storage section 47 instead of carrying out the image process of enlarging (or reducing) the sizes of the original pictures.

Upon displaying the thumbnails of the pictures of the display target album, the additional information extracting section 33 extracts additional information that is to be displayed together with the thumbnails. The additional information may be additional information common to all the display data, may be additional information for each album, or may be additional information for each picture (thumbnail).

For example, consider a case where the additional information extracting section 33 extracts additional information for each album, such as album title. In this case, the additional information extracting section 33 makes reference to the additional information storage section 46 so as to extract, in accordance with the album ID specified by the album ID specifying section 21, the album title that is so stored therein as to be associated with the album ID. On the other hand, in cases where the additional information is additional information for each picture, the additional information is appropriately extracted in accordance with the picture ID.

Meanwhile, in cases where each selected pattern data describes additional information to be extracted, the additional information extracting section 33 extracts appropriate additional information from the additional information storage section 46 in accordance with the description.

Examples of the additional information include: (i) an icon for displaying, in the form of a list, commands that the user can input; (ii) guidance for the commands; (iii) the title of the album; (iv) attribute information of the pictures; (v) operation information indicating history of processes carried out with respect to the pictures; (vi) the name of a service site providing the network album service; (vii) copyright information; and the like. However, the additional information is not limited to these. Alternatively, information concerning an actual printing size, i.e., information indicating an actual printing size in which the thumbnails are to be displayed may be extracted as the additional information.

Further, the additional information extracting section 33 may make access to the album information data table (Figure 25) of the network album DB 41 so as to directly extract, in accordance with the album (picture) ID, various information associated with either the album or the pictures.

The additional information extracted by the additional information extracting section 33 as described above is embedded in the selected pattern data, thus constituting a part of the display control information.

The display control information generating section 34 embeds, into the pattern data selected by the pattern data selecting section 20, (i) the image specifying information generated by the image size control section 32 and specifying the thumbnails that are to be displayed and (ii) the additional information extracted by the additional information extracting section 33, so as to generate the display control information corresponding to the album request message 6.

Figure 8 is a diagram schematically illustrating respective examples of (i) the pattern data selected by the pattern data selecting section 20, and (ii) the display control information obtained by embedding the contents (image specifying information/additional information) into the pattern data.

The selected pattern data 171 is a "container" merely containing template information that does not contain any "contents" (image specifying information/additional information), as described above. The "contents" in the pattern data 171 are represented by "@@_***_@@" as shown in Figure 8. These portions are replaced with actual values by the display control information generating section 34 after the display target album and the thumbnails of the pictures of the album are specified.

The display control information generating section 34 makes reference to the size-changed image storage section 47 so as to specify the thumbnails, generated by the image size control section 32, of the pictures of the display target album. Then, the display control information generating section 34 generates link information to each of the thumbnails thus specified, and embeds the link information into the image specifying information of the layout definition information 176. In the example shown in Figure 8, the display control information generating section 34 embeds image specifying information 184 *href="Thumbnail_0.jpg"* into a location (target object specifying information 174) storing the link information to the thumbnails. Such image specifying information 184 are embedded for the thumbnails contained in the display target album, respectively. Each of the image specifying information 184 thus embedded serves as the image specifying information. In this way, the "contents" are embedded into the layout definition information 176, with the result that the layout definition information 186 is generated. Accordingly, the display control information is completed.

Further, the display control information generating section 34 embeds the additional information extracted by the additional information extracting section 33, into the storage locations in the pattern data 171, respectively. In the example shown in Figure 8, the display control information generating section 34 embeds the title *"melody of sunlight"* of the display target album into a location (album basic information 175) that stores the title of an album, with the result that the album title 185 is obtained. The title *"melody of sunlight"* is extracted by the additional information extracting section 33.

As described above, the display control information generating section 34 embeds the "contents" into the pattern data so as to generate the display control information 181. The display control information 181 is generated in response to the album request message 6, and is display control information for displaying the thumbnails in the predetermined size on the television 2.

Further, the embedded "contents" are not limited to the above examples. For example, a background image stored as the additional information and used upon displaying the album may be embedded. Further, the number of thumbnails that can be displayed, and the actual number of thumbnails in the album do not necessarily coincide with each other, so that the number of thumbnails to be actually displayed may be embedded. Alternatively, data indicating a transition destination to which transition is made when a specific thumbnail is selected may be embedded into the status transition definition information 177. In this way, the "contents" (the data indicating the transition destination, header information, and the like) are embedded, with the result that the status transition definition information 187 is generated. Further, a "content" (script describing how to operate in response to occurrence of event) is embed into the operational function definition information 178 of the pattern data 171, with the result that the operational function definition information 188 is generated. Accordingly, the display control information is completed.

The display data combining section 35 combines (i) the display control information generated by the display control information generating section 34 with (ii) the thumbnails specified in accordance with the image specifying information of the display control information, thereby generating the display data for displaying the album on the television 2.

The display data thus generated is made up of (i) the display control information for defining how the thumbnails are to be displayed in accordance with the specification of the television 2, and (ii) the album including the thumbnails obtained through the appropriate size-enlargement (side-reduction) carried out in accordance with the specification of the television 2 such that they are to be displayed in the predetermined display size on the television 2.

The television 2 receives such display data, thus being allowed to display the thumbnails of the album in the predetermined display size (e.g., actual printing size) in accordance with the display control information.

In the above explanation, each thumbnail is displayed in a size in which the picture is printed; however, the display data generating apparatus 1 of the present invention is not limited to this. For example, the display data generating apparatus 1 is capable of causing the television 2 to display, in an actual size, image data indicating, e.g., a magazine, a newspaper, or the like, each of whose sizes is larger than the size of the picture.

In recent years, televisions 2 each including a display section 17 having a large screen have been pervasive, and it is therefore possible to display an image on such televisions 2 in a large size such as a spread size, a size in which a magazine or newspaper is spread.

For example, information concerning the "newspaper (magazine) spread size" is beforehand stored in the actual printing size information shown in Figure 6. This makes it possible that the display data generating section 30 generates such display data that causes the display section 17 of each of the televisions 2 to display a display target object such as an image, a moving image, or the like in the actual newspaper (magazine) spread size.

### [Processes carried out by the display data generating apparatus]

Explained next is a flow of the processes carried out by the display data generating apparatus 1, with reference to Figures 9 and 10.

Figure 9 is a flowchart illustrating a flow of the pattern data selecting process carried out by the pattern data selecting section 20.

When receiving the album request message 6 from the television 2 via the communicating section 11, the pattern data selecting section 20 acquires, e.g., the layout condition 161 and the specification information 162 each shown in (a) of Figure 4 (S101). On this occasion, the album ID specifying section 21 acquires the album ID 161a from the album request message 6 so as to specify the display target album.

Next, the specification information specifying section 22 makes reference to the model 162a of the specification information 162 so as to judge whether or not the information indicating the model of the television 2 is registered in the specification information list storage section 42 (S102). In cases where the specification information specifying section 22 judges that the information indicating the model of the television 2 is registered in the specification information list storage section 42 (YES in S102), the specification information specifying section 22 acquires the specification information of the television 2 from the specification information list storage section 42 (S103). The specification information of the television 2 is associated with the information indicating the model of the television 2 (the model 162a). Specifically speaking, the specification information thus acquired are (i) the screen size and (ii) the pixel number. This makes it possible to specify the specification information for use in image display on the television 2, even when the screen size 162b and the pixel number 162c are not contained in the album request message 6.

On the other hand, in cases where the specification information specifying section 22 judges that the information indicating the model of the television 2 is not registered in the specification information list storage section 42 (NO in S102), the display data generating apparatus 1 requests the television 2 to transmit specification information 162 including the information indicating the screen size and the number of pixels. Then, from the specification information 162 thus received, the display data generating apparatus 1 acquires the display size 162b and the pixel number 162c (S104). This makes it possible to acquire the screen size 162b and the pixel number 162c, even in the case of receiving the specification information 162 including only the model 162a.

Note that, in cases where the specification information 162 always includes the screen size 162b and the pixel number 162c, the display data generating apparatus 1 may not include the specification information list storage section 42.

Next, in accordance with the layout condition 161, the layout condition specifying section 23 specifies the layout in which the pictures of the album requested by the album request message 6 are going to be displayed, i.e., specifies the layout condition. In this case, the layout condition specifying section 23 extracts the thumbnail display number 161 b from the layout condition 161 so as to specify the total number of the pictures of the album to be displayed all together on the screen at the same time (S105). For example, the total number is 72 as shown in (b) of Figure 4.

Next, in accordance with the thumbnail display number thus specified, the layout condition specifying section 23 specifies how many thumbnails are going to be displayed in each column on the screen and how many thumbnails are going to be displayed in each row thereon. Specifically, the layout condition specifying section 23 acquires, from the layout condition storage section 43, the vertical/horizontal display number "9 (horizontal) × 8 (vertical)" associated with the thumbnail display number "72" specified as above (S106).

Next, the display size determining section 24 finds the maximum display size of each thumbnail in accordance with (i) the vertical/horizontal display number specified in S106 and (ii) the screen size specified in S103 or S104 (S107). For example, the maximum display size is "approximately 15.8 cm (horizontal) × approximately 10 cm (vertical)" as shown in Figure 5.

Next, the display size determining section 24 selects an actual printing size closest to the maximum display size thus found, among the various types of printing size stored in the display size storage section 44. Here, the actual printing size closest to the maximum display size is the largest one of the actual printing sizes that are as large as or smaller than the maximum display size. Further, the display size determining section 24 may recognize the aspect ratio of each picture of the display target album and may select, as the actual printing size closest to the maximum display size, an actual printing size having an aspect ratio closest to the aspect ratio of the picture.

Finally, the pattern data obtaining section 25 makes reference to the pattern data storage section 45 so as to acquire the most appropriate pattern data in accordance with the vertical/horizontal display number and the display size specified in the aforementioned steps. Here, if pattern data relevant to the condition is so stored in the pattern data storage section 45 as to be associated with the vertical/horizontal display number and the display size (YES in S 1 10), the pattern data obtaining section 25 acquires the pattern data relevant to the condition, and then supplies it to the display data generating section 30 (S112). On the other hand, if there is found no pattern data relevant to the condition (NO in S110), new pattern data for the television 2 may be generated such that the pictures are displayed in the aforementioned display size in accordance with the vertical/horizontal display number (S111). In this case, the pattern data obtaining section 25 supplies this newly generated pattern data to the display data generating section 30 (S112).

Note that: the above explanation assumes that the information specified in S106 and indicating how many thumbnails are going to be displayed in each column on the screen and how many thumbnails are going to be displayed in each row thereon is fixedly determined. However, the present invention is not limited to this. The layout condition specifying section 23 may be so configured as to appropriately find the vertical/horizontal display number in accordance with the specified thumbnail display number and the screen size (aspect ratio of the screen) of the television 2.

For example, the layout condition specifying section 23 may be configured to find the aspect ratio of the maximum display size of each thumbnail, for each of conceivable combinations of displaying the specified number of the thumbnails, i.e., for each of combinations of the number of thumbnails to be displayed in each column and the number of thumbnails to be displayed in each row. The aspect ratio of the maximum display size of each thumbnail is found in accordance with the specified aspect ratio of the screen, i.e., the specified screen size. Then, the layout condition specifying section 23 recognizes the aspect ratio of each picture of the specified album, and recognizes a combination of the number of thumbnails to be displayed in each column and the number of thumbnails to be displayed in each row, which combination attains the maximum display size whose aspect ratio is the closest to the aspect ratio of each display target picture. Then, the layout condition specifying section 23 determines the combination as the vertical/horizontal display number.

More specifically, for example, consider a case where six thumbnails are to be disposed on a screen having a aspect ratio (horizontal : vertical) of 4 : 3. In this case, there are the following four ways of displaying the thumbnails in each column and each row: "1 × 6 (horizontal × vertical)", "2 × 3", "3 × 2", and "6 × 1". In cases where the vertical/horizontal display number is "1 × 6", the aspect ratio of the maximum size of each thumbnail is "2 : 9". In cases where the vertical/horizontal display number is "2 × 3", the aspect ratio thereof is "8 : 9". In cases where the vertical/horizontal display number is "3 × 2", the aspect ratio thereof is "2 : 1". In cases where the vertical/horizontal display number is "6 × 1", the aspect ratio thereof is "8 : 1". Among these vertical/horizontal display numbers, a combination attaining the maximum display size whose aspect ratio is the closest to the aspect ratio of each display target picture is determined as the vertical/horizontal display number. Alternatively, the maximum display size may be found, and the vertical/horizontal display number may be specified depending on whether or not the display size storage section 44 memorizes an actual printing size as large as or smaller than the maximum display size thus found.

With this, by merely designating the thumbnail display number upon transmitting the album request message 6, the user of the television 2 can obtain the display data for use in displaying the thumbnails of the pictures of the album in an appropriate display size in an appropriate layout made according to the number of the thumbnails to be displayed.

Figure 10 is a flowchart illustrating a flow of the display data generating process carried out by the display data generating section 30.

The display data generating section 30 acquires the pattern data (pattern data 171 shown in Figure 8) selected by the pattern data selecting section 20 (S201).

The pixel number calculating section 31 finds the thumbnail pixel number required in obtaining the thumbnails from the pictures (S202). Specifically, the pixel number calculating section 31 finds the thumbnail pixel number in accordance with (i) the pixel number 162c specified by the specification information specifying section 22 and indicating the number of the pixels of the television 2, and (ii) the actual printing size (e.g., L size) determined by the display size determining section 24.

Next, the image size control section 32 changes the number of pixels of each of the pictures of the display target album such that the number of pixels coincides with the thumbnail pixel number found by the pixel calculating section 31. In other words, the size of each picture is enlarged or reduced. On this occasion, the image size control section 32 makes reference to thumbnails stored in the size-changed image storage section 47. In cases where the thumbnails corresponding to the pictures of the album and having the found thumbnail pixel number has been already stored therein (YES in S203), the image size control section 32 acquires the thumbnails stored therein, from the size-changed image storage section 47 (S204). On the other hand, in cases where no thumbnails having the desired number of pixels do not exist in the size-changed image storage section 47 (NO in S203), the sizes of the pictures of the display target album are enlarged (or reduced) in accordance with the thumbnail pixel number, with the result that relevant thumbnails are newly generated (S205).

When the thumbnails to be displayed are specified as described above, the display control information generating section 34 embeds the image specifying information, which includes the link information to the thumbnails, into the layout definition information of the thumbnail view display screen generating script of the selected pattern data 171 (S206). Further, in cases where there is additional information extracted by the additional information extracting section 33, the display control information generating section 34 embeds the additional information into the layout definition information, too (S207).

Figure 11 is a diagram illustrating a specific example of the layout definition information 176 of the pattern data 171. Figure 12 is a diagram illustrating a specific example of the layout definition information 186 obtained by embedding necessary information into the layout definition information 176. As described above, the information serving as "actual contents" are embedded into the portions indicated by "@@_***_@@" respectively, thereby completing the layout definition information 186 of the display control information.

In cases where the pattern data 171 contains the status transition definition information 177, the display control information generating section 34 embeds, into the status transition definition information 177 of the pattern data 171, status transition definition information specified by the pattern data, the album, or the script (S208).

Figure 13 is a diagram illustrating a specific example of the status transition definition information 177 of the pattern data 171. Figure 14 is a diagram illustrating a specific example of the status transition definition information 187 obtained by embedding necessary information into the status transition definition information 177.

Now, see the examples shown in Figure 13 and Figure 14. Embedded into the status transition definition information 177 are (i) the header information (script title/name of album creator/date of creation/version information, etc) serving as the additional information, and (ii) transition destination information (e.g., param="uri=http://xxx.yyy.zzz/cpm0") indicating a linked destination to which transition is made in response to selection of an element, such as a thumbnail or a button, displayed on the screen. As a result, the status transition definition information 187 of the display control information is completed.

The display control information generating section 34 embeds all the necessary information into the pattern data 171, thereby generating the display control information 181. The display control information thus completed is combined with all the thumbnails of the album by the display combining section 35, with the result that the display data for the television 2 is generated (S209).

Figure 15 is a diagram illustrating a layout of the display screen of the television 2. The layout is defined by the layout definition information shown in Figure 12.

As shown in Figure 15 and Figure 12, the respective positions of the thumbnails are defined by (i) the coordinate of the initial point (upper left end of an image) of each thumbnail and (ii) the information indicating the display size (width and height).

Figure 16 is a diagram illustrating a display example of the screen of the television 2 when the television 2 displays four thumbnails in an actual printing size (2L size) in accordance with display data. As shown in Figure 16, apart from the thumbnails, the display control information of the display data may define respective positions where information such as the title of the album, the number of displayed thumbnails, and the display size (title display region 194) are presented. In such a case, a region for displaying things other than the thumbnails is secured. For attainment of this, instead of the display size, information indicating the size of a thumbnail display region 190 on the screen is acquired as the specification information. Then, various processes are carried out according to the size of the thumbnail display region 190 so as to prepare the display data.

Further, it is possible to define the status transition definition information such that: when one picture is selected from the thumbnails displayed on the screen shown in Figure 16, only the picture is displayed in the most appropriate predetermined display size (e.g., the display size may be an actual printing size) fully on the screen. Further, a region 192 for displaying operation buttons may be provided in a region (e.g., lower portion of the screen) other than the thumbnail display region 190, and buttons may be displayed therein such as a button used to instruct termination of the display of the album, and a button used to make transition to a selection screen for an album ID.

Note that Figure 16 illustrates the example in which the operation button display region 192 for displaying the operation buttons are secured so as not to overlap with the thumbnail display region 190; however, the present invention is not limited to this. For example, the display control section 64 can be configured to cause the display section 17 to output the display data such that translucent operation buttons are displayed on the region in which the thumbnails are displayed. This allows the operation button display region 192 to overlap with the thumbnail display region 190 on the display section 17, with the result that there is no need to take the operation button display region 192 into consideration when determining the display size of each thumbnail. In this way, it is possible to define the thumbnail display region 193 including the operation button display region 192, as a region for displaying thumbnails.

In the example shown in Figure 16, all the thumbnails are positioned in the landscape manner; however, the present invention is not limited to this. In cases where a thumbnail needs to be displayed in the portrait manner, another actual printing size may be applied to the thumbnail such that the determined layout is kept, i.e., such that the thumbnail is displayed in the portrait manner within the region secured for the thumbnail with such an assumption that the thumbnail is to be displayed in the landscape manner. Alternatively, in cases where a part of the thumbnails are to be displayed in the portrait manner in the regions each having the actual printing size and secured for the thumbnails with such an assumption that the thumbnails are to be displayed in the landscape manner, each of the thumbnails in the portrait manner may be scrolled within its display region. With this, even when an album contains thumbnails in both the landscape manner and the portrait manner, the thumbnails can be displayed with the use of one display data.

The display data generated by the display data generating apparatus 1 as described above is received by the television 2. The television 2 displays the thumbnails of the pictures of the album in the actual printing size (e.g., L size), in accordance with the layout defined by the display control information that is based on the specification of the television 2.

With this, by viewing the thumbnails displayed on the television 2, the user can precisely recognize how the pictures look like when they are printed in the actual printing size, and enjoy viewing the pictures on the television 2 in the same manner as he/she views printed pictures put in a product album.

The following fully explains the television 2, which generates the album request message 6 so as to request the display data generating apparatus 1 for the data of the album and displays the requested album in accordance with the display data generated by the display data generating apparatus 1.

### [Configuration of Television]

Figure 17 is a block diagram illustrating the structures of main parts of the television 2 according to the embodiment of the present invention. As described in Figure 17, the television 2 includes an operational section 15, a communicating section 16, a display section 17, a broadcast data receiving section 18, an audio output section 19, a control section 50 for carrying out general control over the television 2, and a storage section 80.

The control section 50 controls various operations of the respective sections provided in the television 2. Provided inside the control section 50 are: an input/output control section 60, an album request processing section 70 for generating the display data request message 6, a display control information analyzing section 51 for analyzing the display control information of the display data 7, and a broadcast data control section 52 for controlling the broadcast data receiving section 18 and extracting audio data and visual data from the received broadcast data. The control section 50 reads out various programs from the storage section 80 so as to control the respective sections of the television 2 of the present invention, and carries out various processes to display the album.

The storage section 80 stores: a control program to be executed by the control section 50, an OS program to be executed by the control section 50, and various data to be read out by the control section 50 when the control section 50 carries out the various processes to display the album. The storage section 80 is constituted by a nonvolatile memory device such as a flash memory. The various data are respectively stored in various storage sections inside the storage section 80. Specifically, the various data are stored in an album ID storage section 81, a specification information storage section 82, and a display data storage section 83. The broadcast data received is stored in a broadcast data storage section (not shown) of the storage section 80.

The communicating section 16 communicates with apparatuses outside the television 2 in the network album system 100 via a communication network. Provided inside the communicating section 16 are a transmitting section 16a and a receiving section 16b.

Concretely, the transmitting section 16a transmits, to the display data generating apparatus 1, the display data request message 6 generated by the album request processing section 70. The receiving section 16b receives the display data 7 (Figure 2) from the display data generating apparatus 1. The display data 7 received via the receiving section 16b is recorded onto the display data storage section 83. The display data 7 is read out by the input/output control section 60 or the display data analyzing section 51 as required.

The display section 17 outputs various data stored in the storage section 80, such as display data and thumbnails of albums. The display section 17 is constituted by, e.g., a display apparatus such as an LCD (liquid crystal display), a PDP (plasma display panel), or a CRT (cathode-ray tube) display.

The operational section 15 is used by the user to input an instruction signal for operating the television 2. The operational section 15 is constituted by, for example, a remote controller for controlling the television 2 remotely, an operational button provided in the television 2, or a mouse or a keyboard connected to the television 2 with or without a wire. The instruction signal supplied from the user via the operational section 15 is transmitted to the respective sections of the control section 50 via the input/output control section 60. In this way, the user operates the television 2.

The broadcast data receiving section 18 receives broadcast data (audio data or visual data of TV programs, or information such as electronic program guide) transmitted from broadcasting stations via broadcasting waves. The broadcast data receiving section 18 is constituted by a tuner, a demodulating section, a TS (transport stream) decoder, and the like. The broadcast data received by the broadcast data receiving section 18 is decoded and then recorded onto the storage section 80 via the input/output control section 60.

The audio output section 19 is realized by a speaker for outputting audio data contained in the broadcast data. Further, in cases where the display control information analyzing section 51 processes display data to which an auditory effect is rendered, the audio output section 19 may output an audio file indicated by the display data. The audio file is acquired from either inside or outside of the television 2. Details about the auditory effect will be described later.

The input/output control section 60 controls exchange of information between (i) the respective sections (operational section 15, communicating section 16, display section 17, broadcast data receiving section 18, audio output section 19) of the television 2 and (ii) the album request processing section 70, the display control information analyzing section 51, or the broadcast data control section 52 in the control section 50. The input/output control section 60 includes an operation accepting section 61, a message transmission control section 62, a display data receipt control section 63, a display control section 64, and an audio output control section 65.

The operation accepting section 61 receives the instruction signal supplied by the user via the operational section 15, and transmits this instruction signal to the respective sections of the album request processing section 70. For example, when the user supplies, via the operational section 15, the television 2 with an instruction signal (album display instruction signal) for displaying a desired album, an instruction signal for generating the display data request message 6 is transmitted to the album request processing section 70.

The message transmission control section 62 controls the transmitting section 16a of the communicating section 16 such that the transmitting section 16a transmits the display data request message 6 generated by the album request processing section 70. The display data receipt control section 63 receives the display data 7 that the receiving section 16b of the communicating section 16 has received from the display data generating apparatus 1. The display data 7 thus received is recorded onto the display data storage section 83 by the display data receipt control section 63.

The display control section 64 controls the display section 17 such that various data stored in the storage section 80 are displayed on the display section 17. The display control section 64 reads out the thumbnails contained in the display data stored in the display data storage section 83, and causes the readout thumbnails to be displayed in accordance with the display control information also contained in the display data. More specifically, the display control information analyzing section 51 analyzes the display control information, and the display section 17 displays one or more thumbnails in accordance with the result of this analysis (e.g. coordination information on an initial point for positioning each thumbnail, information for specifying the thumbnail associated with the coordinate information, and so on).

Alternatively, the display control section 64 receives, from the broadcast data control section 52, visual data contained in the broadcast data, and supplies it to the display section 17. With this, the visual data of the broadcast data received by the television 2 is provided to the user.

The audio output control section 65 controls the audio output section 19 such that audio data of the broadcast data stored in the storage section 80 is outputted. The audio output control section 65 receives the audio data from the broadcast data control section 52, and supplies it to the audio output section 19. With this, the audio data of the broadcast data received by the television 2 is provided to the user.

The broadcast data receiving section 18, the audio output section 19, the audio output control section 65, and the broadcast data control section 52 are used in the case where the image display apparatus of the present invention is applied to the television 2. Therefore, those sections are not to limit the configurations of the image display apparatus of the present invention. If the image display apparatus is not to be realized as the television 2, the image display apparatus does not necessarily have to include those sections.

The display control section 64 may have such a function as to divide the display region of the display section 17 into a plurality of display regions, and as to control the display regions such that different display screen images are displayed thereon respectively. For example, the display control section 64 divides the display region of the display section 17 into two display regions, causes the visual data contained in the broadcast data to be displayed on a first display region of the display regions, and causes the pictures of the album to be displayed on a second display region thereof. This is the case of 2-division screen display. Further, the display control section 64 divides the display region into three display regions, and causes an electronic program guide or a web page on the Internet to be displayed on a third display region. This is the case of 3-division screen display.

However, even while the television 2 carries out such 2-division (3-division) screen display, the display data generating apparatus 1 provides the display data 7 to the television 2 with such an assumption that the thumbnail view display screen is attained on the display region used during the normal full screen display operation, as described above. This requires the television 2 to display the received display data 7 fully on the screen. Otherwise, it is impossible to display each picture in the predetermined display size intended by the display data generating apparatus 1.

In view of this, in response to reception of the display data 7 from the display data generating apparatus 1, the display control section 64 switches to the full-screen-display control over the display section 17 that is currently carrying out 2-division (3-division) screen display. As a result of such control over the display section 17 by the display control section 64, the display data 7 is displayed fully on the screen in accordance with the result of the analysis carried out by the display control information analyzing section 51. With this, the display data 7 supplied from the display data generating apparatus 1 is always displayed fully on the screen, even in cases where the display control section 64 has been carried out control over the plurality of regions until just before the reception of the display data 7. Accordingly, the pictures are always displayed in the predetermined size intended by the display data generating apparatus 1.

In cases where the display data generating apparatus 1 is so configured as to generate display data 7 for multi-division screen display as requested, the television 2 can acquire, from the display data generating apparatus 1, display data 7 for attaining thumbnail view in the 2-division (3-division) screen display. Specifically, the television 2 designates necessary display data 7 such that the number of divisions of the screen is designated, and generates a relevant album request message 6. This allows the display data generating apparatus 1 to specify an appropriate thumbnail display region in accordance with the designation, generate display data 7, and supply it to the television 2.

The album request processing section 70 generates the album request message 6. More specifically, in response to the user's album display instruction, the album request processing section 70 generates the album request message.

The album request processing section 70 includes an album ID obtaining section 71, a layout condition obtaining section 72, a specification information obtaining section 73, and a message generating section (message generating means) 74.

The album ID obtaining section 71 acquires an album ID contained in the album display instruction signal inputted by the user via the operational section 15. The album ID thus acquired by the album ID obtaining section 71 constitutes the album ID 161a in the album request message 6 shown in (a) of Figure 4. This allows the display data generating apparatus 1 to recognize the album to be supplied to the television 2.

Note that such an album ID may be stored in advance in the album ID storage section 81. More specifically, the album ID may be stored in the album ID storage section 81 in advance upon product shipment. Alternatively, an album ID inputted as a result of the user's operation may be stored therein. In these cases, the display control section 64 causes the display section 17 to display the album IDs stored in the album ID storage section 81, so as to allow the user to select an album ID. The album ID obtaining section 71 makes reference to the album ID storage section 81 so as to specify, in accordance with the selection signal inputted via the operational section 15, the album ID of the album desired by the user.

With this, the user can make an instruction for displaying the album, without directly inputting an album ID, i.e., by merely selecting a displayed album ID. This simplifies the user's operation.

The layout condition obtaining section 72 acquires layout condition information contained in the album instruction signal. Here, the layout condition is indicative of how the pictures are supposed to be disposed, i.e., is indicative of a condition for determining the display layout of the thumbnails, as described above. It is assumed in the present embodiment that the layout condition is information indicating the number of thumbnails to be simultaneously displayed on the display screen of the display section 17, and/or information indicating how many thumbnails are to be displayed in each column on the display screen and how many thumbnails are to be displayed in each row thereon when displaying the thumbnails in a lattice manner on the display screen.

The layout condition information acquired by the layout condition obtaining section 72 constitutes either the thumbnail display number 161b or the vertical/horizontal display number 161 c each contained in the album request message 6 shown in (a) of Figure 4. This makes it possible for the display data generating apparatus 1 to determine how the pictures of the albums are going to be disposed and displayed on the television 2.

As described above, the layout condition acquired by the layout condition obtaining section 72 may be constituted only by the thumbnail display number. In accordance with the thumbnail display number, the display data generating apparatus 1 determines, with the use of the above configuration, the appropriate number of thumbnails to be displayed in each column on the screen and the appropriate number of thumbnails to be displayed in each row thereon. The user of the television 2 merely designates (i) the information (album ID/picture ID) for specifying the album (picture) to be displayed and (ii) the layout condition (the number of thumbnails to be displayed simultaneously), and transmits these information to the album request message 6.

Meanwhile, consider a case where the thumbnail display number is stored in the storage section 80 in advance by default. In this case, if the album display instruction signal inputted by the user does not contain any layout condition information specifying the number of thumbnails to be displayed, the layout condition obtaining section 72 can be so configured as to acquire, as the layout condition from the storage section 80, the default thumbnail display number stored therein.

The specification information obtaining section 73 acquires the specification information concerning image display of the television 2. For example, the specification information obtaining section 73 acquires specification information of the display section 17. The specification information of the television 2 is stored in the specification information storage section 82 in advance. When the specification information obtaining section 73 receives the album display instruction signal, the specification information obtaining section 73 acquires the specification information of the display section 17. A specific example of the specification information thus acquired is model information indicating the model of the television 2, screen size information indicating the size of the screen of the display section 17, the number of pixels of the display section 17, resolution thereof, pitch thereof, or the like.

The specification information thus acquired by the specification information obtaining section 73 constitutes the model 162a, the screen size 162b, the pixel number 162c, or the like each contained in the album request message 6 shown in (a) of Figure 4. This allows the display data generating apparatus 1 to specify the specification information concerning the image display of the television 2, process the pictures of the album such that the pictures are displayed in the predetermined display size, and generate the most appropriate display control information.

The message generating section 74 generates the album request message 6 including the various information used to make a request for the album and respectively acquired from the album display instruction signal by the album ID obtaining section 71, the layout condition obtaining section 72, and the specification information obtaining section 73. The album request message 6 (e.g., (a) of Figure 4) generated by the message generating section 74 is transmitted to the message transmission control section 62, and then is transmitted to the display data generating apparatus 1 via the communicating section 16.

### [Process in Television]

Figure 18 is a flowchart illustrating a flow of the album display process carried out by the television 2.

When the operation accepting section 61 receives the album display instruction signal (YES in S301), the album ID obtaining section 71 acquires the album ID contained in the album display instruction signal (S302).

Next, the layout condition obtaining section 72 judges whether or not the album display instruction signal contains the thumbnail display number as the layout condition (S303). In cases where the layout condition obtaining section 72 judges that the album display instruction signal contains the thumbnail display number (YES in S303), the layout condition obtaining section 72 acquires the thumbnail display number contained therein (S304). Meanwhile, in cases where the layout condition obtaining section 72 judges that the album display instruction signal does not contain the thumbnail display number (NO in S303), the layout condition obtaining section 72 acquires the default thumbnail display number stored in advance in the storage section 80 (S305).

In cases where the album display instruction signal further contains the other layout condition information such as the vertical/horizontal display number, the layout condition obtaining section 72 may acquire such layout condition information (S306).

Next, the specification information obtaining section 73 acquires the specification information of the television 2 from the specification information storage section 82 (S307).

The message generating section 74 generates the album request message 6 including (i) the album ID acquired by the album ID obtaining section 71 in S302, (ii) the thumbnail display number acquired by the layout condition obtaining section 72 in either S304 or S305, and (iii) the specification information, acquired by the specification information obtaining section 73 in S307, of the television 2 (S308).

The message transmission control section 62 controls the communicating section 16 such that the album request message 6 generated by the message generating section 74 in S308 is transmitted to the display data generating apparatus 1 (S309). When the display data receipt control section 63 receives the display data from the display data generating apparatus 1 in reply to the album request message 6 (YES in S310), the display data receipt control section 63 records the received display data onto the display data storage section 83 (S311).

The display control information analyzing section 51 reads out the display data from the display data storage section 83, analyzes the display control information contained in the display data, and transmits the analysis result to the display control section 64 (S312).

The display control section 64 reads out the thumbnails of the pictures of the album stored in the display data storage section 83, and causes the display section 17 to display the thumbnails in the predetermined display size in accordance with the analysis result acquired from the display control information analyzing section 51 (S313).

### [Embodiment 2]

Explained in the foregoing embodiment is the display data generating apparatus 1 that uses the thumbnail view display screen generating script of the display control information, so as to generate the display data for use in displaying the thumbnails of the album in the predetermined display size (actual printing size) on the television 2.

However, the display data generating apparatus 1 of the present invention is not limited to this, but can be such a display data generating apparatus 1 that uses a slideshow display screen generating script so as to generate display data for use in displaying pictures in a predetermined display size (e.g., actual printing size) one by one in slideshow on the television 2.

### [Processes in Network Album System]

Figure 19 is a sequence diagram illustrating a flow of processes carried out by the apparatuses of the network album system (image display system) 100 according to this embodiment of the present invention.

When the television 2 (Figure 17) receives from the user an instruction signal (slideshow display instruction signal) for slideshow display (YES in S11), the album ID obtaining section 71 acquires an album ID and a picture ID each contained in the slideshow display instruction signal (S12). Then, the album request processing section 70 detects an operation of the display control section 64 so as to judge whether or not a picture is currently being displayed (S13).

In cases where the album request processing section 70 judges that the television 2 is currently displaying a picture (YES in S13), the album request processing section 70 compares (i) the picture ID of the picture that is currently being displayed with (ii) the picture ID acquired in S12 (S14). In cases where the picture IDs coincide with each other (NO in S14), the picture that the slideshow display instruction signal instructs to be displayed is currently being displayed, so that the sequence goes back to S11. As a result, the television 2 is brought into a state in which the television 2 waits for a new instruction. On the other hand, in cases where the album request processing section 70 judges that the picture that the slideshow display instruction signal instructs to be displayed is different from the picture currently being displayed (YES in S14), the message generating section 74 generates a slide picture request message (image request message) 8 so as to make a request to the display data generating apparatus 1 for the picture designated by the slideshow display instruction signal, and then the slide picture request message 8 thus generated is transmitted to the display data generating apparatus 1 (S15).
(a) of Figure 20 is a diagram schematically illustrating the structure of the slide picture request message 8 generated by the message generating section 74. (b) of Figure 20 is a diagram illustrating a specific example of picture information 191 contained in the slide picture request message 8. Differences between the slide picture request message 8 shown in (a) of Figure 20 and the album request message 6 shown in (a) of Figure 4 lie in that the slide picture request message 8 includes the picture information 191 instead of the layout condition 161 and that the picture information 191 includes a picture ID 191a instead of the display size 162b and the vertical/horizontal display number 161 c. The picture ID 191 a uniquely specifies the picture.

Next, when the display data generating apparatus 1 (Figure 1) receives from the television 2 such a slide picture request message 8 shown in (a) of Figure 20 (YES in S16), the display data generating apparatus 1 starts a process of generating the slideshow display data having the display control information including the slideshow display screen generating script that is based on the specification information of the television 2.

The album ID specifying section 21 acquires the album ID and the picture ID each contained in the picture information 191 of the slide picture request message 8 (S17). Then, the specification information specifying section 22 acquires the specification information 162 of the television 2 from the slide picture request message 8 (S18). A procedure of acquiring the specification information is the same as the procedure explained in Embodiment 1, so that explanation thereof is omitted here.

Next, from the display sizes memorized in the display size storage section 44, the display size determining section 24 determines a display size (e.g., actual printing size) in which the picture specified by the picture ID is to be displayed (S19). The procedure of determining the display size is the same as that of Embodiment 1. However, in the slideshow display, one picture is displayed at one time, so that the most appropriate actual printing size for the picture is selected such that the picture is displayed in an actual size on the screen of the television 2. The most appropriate actual printing size may be, e.g., the largest one of the actual printing sizes that is as large as or smaller than the screen, or an actual printing size having an aspect ratio closest to the aspect ratio of the screen.

In accordance with the actual printing size determined in S19, the pattern data obtaining section 25 acquires the most appropriate pattern data from the pattern data storage section 45 (S20). In cases where there is no appropriate pattern data in the pattern data storage section 45, a new pattern data may be generated.

Next, the pixel number calculating section 31 of the display data generating section 30 finds the number of pixels of the picture such that the picture specified by the picture ID is displayed on the television 2 in the display size (e.g., actual printing size) determined in S19 (S21). On this occasion, the pixel number calculating section 31 makes reference to the information specified by the specification information specifying section 22, i.e., the pixel number 162c.

The image size control section 32 generates a slide-use picture (display image) by changing the number of pixels of the picture such that it coincides with the pixel number found by the pixel number calculating section 31 (S22).

Next, the display control information generating section 34 embeds, into the pattern data acquired in S20, the image specifying information for specifying the slide-use picture, thereby generating the display control information (S23). As is the case with Embodiment 1, the display control information may be completed by embedding therein the additional information extracted by the additional information extracting section 33 and/ or the transition destination information.

The display data combining section 35 combines the display control information generated in S23 with the slide-use picture generated in S22, so as to generate slideshow display data 9 (S24). Then, the communicating section 11 transmits the slideshow display data 9 to the television 2 in reply to the slide picture request message 8 (S25).

The television 2 receives the slideshow display data 9 (S26). In accordance with the display control information included in the slideshow display data 9, the television 2 displays, in the aforementioned display size (e.g., actual printing size), the slide-use picture included in the slideshow display data 9 (S27).

### (Process of Endless Loop)

The slideshow display process in the television 2 of the present embodiment is realized by making requests (slide picture request messages 8) to the display data generating apparatus 1 for pictures one by one, receiving corresponding slideshow display data 9 from the display data generating apparatus 1, and displaying the pictures one after another in slideshow. Slides are prepared based on the pictures respectively and are automatically displayed one by one from one slide to the next during the slideshow display at a predetermined interval or are displayed from one to the next in response to an input of the user's instruction. When the slide of the last picture of the album is displayed, the television 2 may carry out a process (slide terminating process) of terminating the slideshow and making a request for a different display screen. Alternatively, the television 2 may carry out a process (endless loop process) of making a request for the slideshow display from the first picture all over again.

It is considered that the endless loop process of the slideshow can be used to, e.g., demonstrate the image display apparatus at shops by keeping on displaying the same album in slideshow thereon. However, in such a use, the display data generating apparatus 1 keeps on receiving slide picture request messages 8 from the television 2 endlessly at predetermined intervals and keeps on providing slideshow display data 9 accordingly. This imposes too much loads on the display data generating apparatus 1.

Even if the television 2 is capable of storing slideshow display data 9 received once and of using the slideshow display data 9 so as to carry out the endless loop process, the slideshow display data 9 as many as the pictures to be displayed in slideshow need to be requested and acquired at least one time for the slideshow. As the album contains more pictures, the loads imposed on the display data generating apparatus 1, which continuously receives requests for the slideshow display data 9, are increased. In cases where a plurality of televisions 2 simultaneously carry out such a process of making requests to the display data generating apparatus 1 for the slideshow display, further increase of loads on the display data generating apparatus 1 is inevitable.

In view of this, in order to reduce the loads imposed on the display data generating apparatus 1, it is preferable to arrange the display data generating apparatus 1 such that the display data generating apparatus 1 detects a condition set in advance, changes the contents of the display control information to be supplied to one or more televisions 2, and carries out display control over the televisions 2.

For example, in cases where a television 2 carries out an operation imposing great loads on the display data generating apparatus 1 such as an operation for repeating slideshow display, the display data generating apparatus 1 changes the display control information into the most appropriate state. Examples of the display control information thus changed include: (i) display control information to which a description is added so as to lengthen intervals in the slideshow carried out by the television 2, and (ii) display control information to which the status transition definition information is added such that transition is made to a display screen different from the slideshow display screen. Alternatively, the display data generating apparatus 1 may carry out a process of stopping the supply of the slideshow display data 9; or the like.

In each of the embodiments described above, the display data generating apparatus 1 for generating display data for use in displaying still images in a predetermined size on the television (image display apparatus) 2 is explained as the image data providing apparatus of the present invention. However, the image data providing apparatus of the present invention is not limited to this. That is, the image data providing apparatus according to the present invention can be configured to generate display data for use in displaying a moving image in a predetermined size on the image display apparatus.

Specifically, the image size control section (display image generating means) 32 changes the number of pixels of all the images, which constitute the moving image, such that the moving image is displayed in the predetermined size, thereby generating a display moving image. In the meanwhile, the display control information generating section (display control information generating means) 34 generates display control information, which defines where the display moving image is going to be positioned.

This allows the image display apparatus to display the display moving image contained in the display data, in the predetermined display size in accordance with the display control information.

### [Embodiment 3]

Explained in each of the above embodiments is the display data generating apparatus 1 for generating the display data which causes the television 2 to display the still images of the album in the predetermined display size (actual printing size).

However, the display data generating apparatus 1 of the present invention is not limited to this, and is capable of generating such display data that causes the television 2 to display, in a predetermined display size in accordance with display control information, a moving image contained in the display data. The following explains such a display data generating apparatus 1 that generates display data causing the television 2 to display thumbnails of moving images included in an album.

### [Configuration of Display Data Generating Apparatus]

Figure 26 is a block diagram illustrating the configurations of the main parts of the display data generating apparatus 1 according to this embodiment of the present invention. The display data generating apparatus 1 shown in Figure 26 is different from the one shown in Figure 1, in that the display data generating section 30 of the display data generating apparatus 1 shown in Figure 26 further includes a moving image frame extracting section 36.

In cases where an album to be displayed in thumbnail view includes a moving image, the moving image frame extracting section 36 specifies a still image to be used as a thumbnail (display image for the moving image) for the moving image. Specifically, the moving image frame extracting section 36 extracts, from the moving image, a frame that is to be used as the thumbnail. Alternatively, the moving image frame extracting section 36 acquires a representative image of the moving image, which representative image is associated with the moving image. A moving image storage section for storing such a moving image may be provided in the album managing server 3, or may be provided in the storage section 40 of the display data generating apparatus 1.

Further, the network album DB 41 of the album managing server 3 stores an album information data table for use in managing albums including moving images. Figure 27 is a diagram illustrating an example of the album information data table stored in the network album DB 41 in the present embodiment.

The album information data table is different from the album information data table shown in Figure 25, in the following points: (i) moving images are included in albums as shown in a column C11, and (ii) a column C 15 (15', 15 ") having a data name "moving image thumbnail" are added such that designation information for designating a thumbnail image to be extracted from a moving image is stored therein.

In accordance with the designation information thus stored in the column C 15 having the data name "moving image thumbnail", the moving image frame extracting section 36 extract one frame from each of the moving images contained in the album. The frame thus extracted by the moving frame extracting section 36 is used by the aforementioned sections of the display data generating apparatus 1 as a thumbnail image to be used for thumbnail display.

The following explains some methods by which the moving image frame extracting section 36 extracts a frame from a moving image, with reference to Figure 27.

### (Extracting Method 1)

In the present embodiment, a specific frame to be extracted from a moving image is determined in advance for each album, and the moving image frame extracting section 36 is configured to extract the determined frame from the moving image.

In the example shown in the column C15 of Figure 27, designation information indicating a frame arbitrarily counted from the first frame of the moving image to be displayed in thumbnail view, i.e., designation information indicating a frame to be extracted from the moving image is stored therein for each album.

When an album requested by the television 2 is specified, the moving image frame extracting section 36 extracts a frame from a moving image of the album in accordance with designation information associated with the album ID of the album. For example, consider a case of generating a thumbnail display screen corresponding to an album ID "01254782 25142584". In this case, the designation information indicates "the first frame", so that the moving image frame extracting section 36 extracts the first frame from a moving image whose filename is "00123.mp4", in accordance with the designation information. The first frame thus extracted is handled as a thumbnail image.

Instead of each album, the designation information may be set for each moving image in each album.

### (Extracting Method 2)

In the present embodiment, a representative image for each album is prepared in advance, and the moving image frame extracting section 36 is configured to extract the representative image as a thumbnail image.

In the example shown in a column C15' of Figure 27, the filename of each representative image is stored therein for each album. A representative image storage section for storing such a representative image may be provided in the album managing server 3, or may be provided in the storage section 40 of the display data generating apparatus 1.

In accordance with the album ID of a requested album, the moving image frame extracting section 36 acquires the filename of a representative image, and then extracts, from the representative image storage section, the representative image having the filename thus acquired. The representative image thus extracted serves as a thumbnail image for all the moving images in the album.

The representative image may be, e.g., (i) an image of title screen indicating the titles of the moving images, or (ii) an album creator's favorite image in the album.

Instead of each album, the representative image may be set for each moving image in each album.

### (Extracting Method 3)

In the present embodiment, a time at which a frame to be handled as a thumbnail image appears is determined in advance for each moving image, and the moving image frame extracting section 36 is configured to extract, as the thumbnail image, the frame appearing the determined time.

In the example shown in a column C 15" of Figure 27, a time (appearing time) at which a frame to be extracted appears is recorded for each moving image of each album. The moving image frame extracting section 36 acquires from the column C15" an appearing time (1.05 seconds) associated with (i) the album ID of a requested album and (ii) the filename (e.g., "00123.mp4") of a moving image from which the thumbnail image is extracted. Then, the frame appearing 1.05 seconds after the beginning of the moving image "00123.mp4" is extracted from the moving image, and is handled as the thumbnail of the moving image.

Note that the appearing time may be set for each album such that the appearing time is the same among moving images of the album.

The thumbnail image extracted by the moving image frame extracting section 36 with the use of any of the above extracting methods is recorded onto the moving image thumbnail storage section 55, and then is supplied to the pixel number calculating section 31 for the sake of calculating a pixel number. As described above, the pixel number calculating section 31 finds the thumbnail pixel number of the image, extracted by the moving image frame extracting section 36, such that the thumbnail of the image is displayed on the television 2 in a predetermined display size (actual printing size). It is explained above how the display data generating section 30 prepares the display data 7 for use in the thumbnail display, so that the explanation therefor will not be repeated.

Even in cases where the album includes the moving image, the television 2 displays the thumbnail of the image representing the moving image, in the predetermined size in accordance with the display data 7 generated by the display data generating apparatus 1 (Figure 16).

In the above explanation, the designation information for designating the frame to be extracted is stored in advance in the column C15 (15', 15"); however, the creator of the album may arbitrarily determine the designation information.

Now, think the following example. The album managing server 3 (Figure 2), which manages the pictures and moving images of albums, supplies the PC 4 of the creator of the album (owner U in the example shown in Figure 2) with a GUI screen shown in Figure 28.

The owner U operates a playback button, a stop button, a pause button, and a slide bar of the GUI screen displayed on the PC 4, in order to display a desired frame. With the desired frame displayed, the owner U presses an enter button, thereby designating the desired frame of the owner U as the thumbnail image of the moving image.

The designation information thus obtained is recorded onto the album information data table of the network album DB 41 so as to be associated with the moving image. The designation information may be any information as long as the designation information allows the display data generating apparatus 1 to accurately select the frame designated by the user. As described above, the designation information may be expressed by any of (i) the filename of the thumbnail image thus designated, (ii) the order of the frame, and (iii) the appearing time.

Meanwhile, the display control information can be generated so as to control the television 2 such that when a cursor 196 is placed on a thumbnail image displayed in such a manner as shown in Figure 16 and representing a certain moving image of moving images included in an album, the television 2 reproduces only the moving image corresponding to the thumbnail image on which the cursor 196 is placed.

Specifically, the display data generating apparatus 1 generates a thumbnail moving image (display moving image) by enlarging/reducing the size of each frame of the moving image such that not only the frame to be handled as the thumbnail image but also all the frames of the moving image are displayed in the predetermined display size, and the display data generating apparatus 1 incorporates the thumbnail moving image into the display data 7. For control over display of the thumbnail moving image on the television 2, the display generating apparatus 1 describes operational function definition information 188 in the display control information 181.

In accordance with the display data 7 generated in this way, the television 2 realizes a thumbnail moving image display/ reproducing function.

The following explains a flow of a process in which the display data generating apparatus 1 generates the display data 7 that allows the television 2 to realize the thumbnail moving image display/reproducing function.

### [Flow in Display Data Generating Apparatus]

Figure 29 is a flowchart illustrating the flow of the process carried out by the display data generating section 30 in the present embodiment. A difference between the process shown in Figure 29 and the process shown in Figure 10 lies in that: in cases where a moving image is included in the album (YES in S201a), the moving image frame extracting section 36 extracts a frame of the moving image as the thumbnail image (S201b) before the pixel number calculating section 31 finds the number of pixels of the thumbnail image. Another difference therebetween is addition of a step (S205a) in which the image size control section 32 generates a thumbnail moving image to be used for thumbnail display. The other steps are the same as the steps shown in Figure 10, except that not only the thumbnail image but also the thumbnail moving image are handled. For this reason, explanation for the other steps is omitted.

First, in cases where the moving image frame extracting section 36 judges that there is included a moving image in the requested album (YES in S201a), a frame of the moving image is extracted by using any of the extracting methods described above (S201b). Then, the pixel number is found in S202, and then the image size control section 32 judges whether or not the display data generating apparatus 1 stores a thumbnail moving image having the number of pixels corresponding to the pixel number thus found. The thumbnail moving image obtained by changing the size of the original moving image is stored in the size-changed moving image storage section 56 (Figure 26).

In cases where there is stored a relevant thumbnail moving image in the size-changed moving image storage section 56, the thumbnail moving image thus stored is used (S204). Otherwise, the image size control section 32 generates a thumbnail moving image by enlarging (reducing) the size of each frame of the moving image in accordance with the pixel number found by the pixel number calculating section 31 (S205a).

Then, necessary information are embedded in the manner described above, thus completing the display control information. Finally, the display data combining section 35 combines (i) the display control information thus generated with (ii) the thumbnail image of the album and the thumbnail moving image thereof (and audio file), thereby generating the display data 7 (S209).

Here, in the display control information generated by the display control information generating section 34, a script is described to cause the television 2 to carry out reproduction control of the thumbnail moving image.

Figure 30 is a diagram concretely illustrating a part of such display control information 181 generated by using the aforementioned method and contained in the display data 7.

The script shown in Figure 30 allows the television 2 to display the thumbnail image, extracted by the moving image frame extracting section 36, in the predetermined display size even in cases where the album contains a moving image and to reproduce only the moving image on which the user places the cursor 196 (Figure 16) by operating the operational section 15.

The control information 181 shown in Figure 30 includes image specifying information 184b, moving image specifying information 184c, and operational function definition information 188 made up of an event definition 188a and a function definition 188b.

The image specifying information 184b includes (i) link information for specifying the thumbnail image extracted from the moving image by the moving frame extracting section 36, and (ii) information indicating a display location (coordinate location on the television 2) where the thumbnail image is to be displayed. The moving image specifying information 184c includes (i) link information for specifying the thumbnail moving image that the image size control section 32 has generated by changing the size of each frame of the original moving image such that the moving image is displayed in the predetermined size, and (ii) information indicating a display location where the thumbnail moving image is to be displayed. In accordance with such a script, the television 2 displays the four thumbnail moving images as shown in the example of Figure 16 and reproduces each of the moving images within its display location.

The event definition 188a defines an event triggering execution of a process, defined by the function definition 188b, in the television 2. The operational function definition information 188 shown in Figure 30 defines that: in cases where a right key of the operational section 15 is pressed during the state shown in Figure 16 (state in which the cursor 196 is placed on the first thumbnail moving image), the cursor 196 is moved to be placed on the second thumbnail image, the first thumbnail moving image is stopped being displayed, the first thumbnail image is displayed instead, the second thumbnail image is stopped being displayed, and the second thumbnail moving image is displayed instead.

The acquirement of the display data 7 including such display control information 181 allows the television 2 to not only display, in the predetermined size, the thumbnail image of the moving image included in the album but also reproduce, in the predetermined size in response to the user's selection of the thumbnail image, the moving image corresponding to the thumbnail image.

This will be explained more specifically with reference to Figure 17. First, the message generating section 74 of the television 2 generates an album request message 6 requesting an album including moving images, and then the television 2 transmits it to the display data generating apparatus 1 via the message transmission control section 62 and the communicating section 16.

In reply, the display data receiving control section 63 receives display data 7 from the display data generating apparatus 1 via the receiving section 16b. The display data 7 has been generated by the display data generating apparatus 1 in accordance with the aforementioned method. Therefore, the display data 7 at least includes (1) respective thumbnail images (display image) of the moving images, (2) thumbnail moving images (display moving image), and (3) display control information 181 including layout definition information 186 and operational function definition information 188. The thumbnail images and the thumbnail moving images serve as the target objects 111. The layout definition information 186 defines the respective positions of the target objects 111 such that the target objects 111 are displayed in a predetermined size. The operational function definition information 188 defines that the television 2 operates such that when the cursor 196 is placed on a thumbnail, which is a still image displayed on the television 2, a corresponding moving image is reproduced instead of displaying the thumbnail.

The display control information 181 thus received is analyzed by the display control information analyzing section 51. In accordance with the result of the analysis carried out by the display control information analyzing section 51, the display control section 64 causes the display section 17 to display a thumbnail display screen corresponding to the album including the moving images (see Figure 16, for example). The thumbnail images and the thumbnail moving images are displayed in the actual printing size as defined by the display control information 181.

In cases where a signal instructing the cursor 196 to move so as to newly select a thumbnail image is inputted via the operational section 15, the display control section 64 stops display of the thumbnail image thus selected by the cursor 196 and causes display of the thumbnail moving image corresponding to the thumbnail image, in accordance with the operational function definition information 188 analyzed by the display control information analyzing section 51. A thumbnail moving image having been reproduced until the selection is stopped being displayed and a corresponding thumbnail image is displayed instead.

As such, even in cases where an album includes moving images, the network album system 100 of the present invention makes it possible that thumbnail images and thumbnail moving images are displayed in a predetermined display size on the television 2.

In the above explanation, it is assumed that the display data generating apparatus 1 provides the thumbnail images to the television 2 in reply to the request made by the television 2 for the images, and that the display data generating apparatus 1 provides the thumbnail images and/or the thumbnail moving images thereto in reply to the request for the moving images. However, the network album system 100 of the present invention is not limited to this. The network album system 100 may be configured such that: in reply to a request made by the television 2 for a image, the display data generating apparatus 1 provides thereto a thumbnail moving image associated with the image thus requested.

### (Modified Example 1 - Speedup function for display)

The following explains a function given to the display data generating apparatus 1 so as to shorten time taken to display requested display data on the television 2.

In the explanation of each of the embodiments, every time the display data generating apparatus 1 receives an album request message 6 generated by the television 2, the display generating apparatus 1 generates display data 7 for use in displaying an album corresponding to the contents of the album request message 6.

However, the display data generating apparatus 1 of the present invention is not limited to the above configuration. The display data generating apparatus 1 may be configured to record display control information and/or display data 7 once generated, onto a generated-data storage section (not shown) of the storage section 40.

The display data generating section 30 makes reference to the result of analysis carried out with respect to the album request message 6 from the television 2 by the respective sections of the pattern data selecting section 20 of the display data generating apparatus 1. In cases where the display data generating section 30 confirms that data required in displaying the requested album is stored in the generating data storage section, the display data generating section 30 does not newly generate any display data 7 but retrieves the required data from the generated-data storage section among the generated data stored therein. The data thus retrieved from the generated-data storage section by the display data generating section 30 is transmitted as the display data 7 from the transmitting section 11b to the television 2.

This makes the display data generating process faster than that in the case where the display data 7 is generated, from scratch, for the requested album.

Further, in cases where the network album DB 41 storing albums is not provided inside the display data generating apparatus 1 but is provided in a separate apparatus such as the album managing server 3 as is the case with the network album system 100 shown in Figure 2, it is necessary to make access to the album managing server 3 via a communication line so as to acquire a target picture. By reusing the generated data stored in the generated-data storage section of the above configuration, it is possible to shorten time taken to acquire the target picture and reduce loads on the communication line. Thus, this configuration is particularly effective in the network album system 100 in which a picture needs to be acquired from the network album DB 41 via the communication line such that the display data generating apparatus 1 generates the display data 7.

In some case, the content of an album is likely to be updated (deletion, addition, replacement of pictures, and so on) by an owner U of pictures from the moment at which the display data 7 has been generated. In such a case, the generated data stored in the generated-data storage section cannot be reused even when a request is made for the album. Therefore, the display data generating section 30 needs to be configured to judge whether or not an updating process has been carried out since the last time the display data 7 was generated.

For example, flags indicating whether or not updating has been done may be stored in the network album DB 41 so as to be associated with the albums managed in the network album DB 41, respectively. In accordance with each of such flags, the display data generating section 30 judges whether or not updating has been done.

In the explanation of each of the embodiments described above, the display data 7 generated by the display data generating apparatus 1 for the sake of attaining the thumbnail view display screen contains the image data representing each of the thumbnails to be displayed. In the explanation above, the television 2 reads out, one by one in accordance with the display control information, the thumbnails contained in the display data 7, and displays them simultaneously. Hence, the display process carried out by the display control section 64 takes time.

In view of this, the display data generating apparatus 1 can be configured to convert the display data containing the plurality of thumbnails into data representing one image, and to provide it to the television 2 as the display data 7.

Specifically, the display data generating section 30 generates, in accordance with the pattern data, the display data 7 (thumbnail view display screen) including the image data respectively representing the thumbnails to be displayed, as described above. Then, from the display data 7 thus generated, a display data converting section (not shown) provided inside the display data generating section 30 recreates display data 7 in which the thumbnail view display screen is handled as one image. The recreation of the display data 7 is carried out by compressing the data, which attains the thumbnail view display screen, with the use of an irreversible compressing method such as JPEG.

With this, not a plurality of images but one image is read out and is subject to the display process, so that speed of executing the processes becomes much faster. No matter how many the thumbnails are to be displayed in the thumbnail view, the thumbnail view is attained by the only one image. This is especially effective in the case of providing display data 7 containing a large number of thumbnails.

### (Modified Example 2 - Image size control)

In the explanation of each of the embodiments, the image size control section 32 of the display data generating apparatus 1 controls the image size of each of the pictures in accordance with the specification information (the number of pixels of the display section and the screen size) of the television 2 such that the image is displayed on the television 2 in the predetermined display size.

The image size control section 32 can be configured to make reference to other specification information concerning the image display on the television 2, i.e., specification information other than the aforementioned specification information, so as to change the image size of the picture. Specifically, the image size control section 32 can be configured to acquire specification information concerning resources required for the image display on the television 2, such as a memory size, performances of a display panel and a backlight, and a performance of a drawing chip.

This makes it possible for the display data generating apparatus 1 to generate the most appropriate display data 7 (slideshow display data 9) in accordance with the information concerning the resources of the television 2 such that the pictures are displayed on the television 2 in the most appropriate way.

The information concerning the resources may be specified in the specification information list storage section 42 in accordance with the model of the television 2, as is the case with the aforementioned information indicating the number of pixel and the information indicating the screen size.

### (Modified Example 3 - Example of layout in thumbnail view display screen)

Further, the display control information generating section 34 of the display data generating apparatus 1 can be configured to generate display control information defining the layout of the pictures such that the thumbnails of the pictures of the album are viewable more easily when they are displayed on the television 2 in the thumbnail view display. In other words, the display control information generating section 34 can be configured to generate display data 7 including information defining (i) the layout of the pictures (coordinate position of initial point), (ii) the number of pixels of each picture in the vertical direction and the number thereof in the horizontal direction, and the like. This allows the pictures to be displayed respectively in the display positions, intended by the display data generating apparatus, in such a manner that the pictures are viewable more easily.

This will be explained more in detail as follows. That is, in cases where a thumbnail view display screen is generated by combining a plurality of thumbnails and is compressed in accordance with an irreversible compressing method such as JPEG, the display control information generating section 34 generates, in accordance with the characteristics of the compressing algorithm, display control information for use in positioning the thumbnails. By displaying the thumbnail view display screen in accordance with such display control information, it is possible to restrain deterioration of image quality in the thumbnail view display screen for the user's eyes of the television 2.

For example, consider a case where thumbnails each having 160 pixels x 96 pixels are displayed, on the screen of the display section 17 (television 2) having 1920 pixels × 1080 pixels, in such a manner that the thumbnails are positioned in columns of four and in rows of nine. In such a case, it is desirable that the thumbnails be positioned as shown in Figure 21.

In the example shown in Figure 21, the display section 17 has a display region in which a title display region 194 and an operation button display region 192 are provided and in which a region other than the title display region 194 and the operation button display region 192 is defined to be a thumbnail display region 190. Now, the thumbnail display region 190 is further divided, in order to define thumbnail frames 195 for use in displaying the 36 thumbnails in columns of four and in rows of nine within the thumbnail display region 190.

Figure 22 is an enlarged view of a portion of the layout of the pictures actually displayed on the display section 17 of the television 2, which portion is a portion surrounded by a broken line frame 151 shown in Figure 21. In the example shown in Figure 22, the display control information defines that a thumbnail frame 195 for the first thumbnail has an initial point (i.e., the initial point of the thumbnail display region 190) determined by: x = 96 pixel and y = 160 pixel. Further, each of the thumbnail frames 195 is defined to have vertical sides each corresponding to 192 pixels and horizontal sides each corresponding to 192 pixels.

Figure 23 illustrates an enlarged view of the layout of the thumbnail frame 195 displayed on the display section 17.

The display control information generating section 34 of the display data generating apparatus 1 generates display control information defining that each thumbnail is disposed 16 pixels away from each of the vertical sides of the thumbnail frame 195 and 16 pixels away from the upper horizontal side thereof as shown in Figure 23.

In JPEG, an image is divided into small blocks (MCU: Minimum Coded Unit) of 16 pixels × 16 pixels, and the small blocks are processed. Hence, by disposing the thumbnail 16 pixels away from each of the vertical sides of the thumbnail frame 195 and 16 pixels away from the upper horizontal side thereof in this way, it is possible to obscure noise (mosquito noise) appearing on the periphery of the thumbnail image. This restrains deterioration of the image quality for the user's eyes.

In cases where all the pictures contained in an album are to be displayed in thumbnail view, the sizes (the respective numbers of pixels in the vertical and horizontal directions) of the pictures of the album are less likely to be identical to one another. Therefore, when the size of each of the pictures is reduced, with the aspect ratio of the picture fixed, such that either one of each of the vertical sides and each of the horizontal sides of the picture corresponds to 160 pixels (value dividable by 16), the other one is likely to correspond to pixels whose value is not dividable by 16.

In such a case, the image size control section 32 for generating the thumbnails may carry out a process of trimming all the ends of each picture such that each of the respective numbers of pixels in the vertical and horizontal directions becomes a multiple number of 16. Alternatively, the image size control section 32 may carry out a process of reducing (enlarging) the size of each picture, with the aspect ratio unfixed, such that each of the respective numbers of pixels in the vertical and horizontal directions becomes a multiple number of 16.

### (Modified Example 4 - Rendering visual and auditory effects during thumbnail/ slideshow display)

Further, the display control information generating section 34 of the display data generating apparatus 1 is capable of generating such display control information that defines an operation of rendering an effect and outputting a sound so as to work on visual sense (and auditory sense), according to an album (or picture/moving image) to be displayed on the television 2. The wording "effect" refers to a visual effect rendered to an object (such as an album's picture that is to be displayed in slideshow) when displaying (or stopping displaying) the object. Specific examples of such a visual effect include: a fade-in (fadeout) effect, a slide-in (slide-out) effect, an enlarging effect, a blinking effect, and the like. Another example of such an visual effect is: (i) an animation effect rendered to an object (a character) other than a picture, (ii) an effect of zooming on the character, (iii) a panning effect, (iv) a scrolling effect, or the like. By rendering the animation effect, it is possible to obtain, e.g., such an animation that the character runs around on the screen.

In the present embodiment, as shown in Figure 25, the album information data table manages information about an audio file for each album, and manages information about an effect for each picture, for example.

The column C10 (data name "audio filename") indicates the filename of an audio file associated with each album. The television 2 uses the audio file so as to output a sound (music, sound effect, or the like) during thumbnail display or slideshow display of the album.

The column C12 (data name "effect ID") indicates an effect ID for identifying an effect associated with each picture contained in the album. In order to cause the television 2 to execute the effect thus specified by the effect ID, the display data generating apparatus 1 describes, in the display control information, an operation that the television 2 should carry out with regard to the effect.

Figure 31 is a block diagram illustrating the configurations of main parts of a display data generating apparatus 1 that generates display data to which the visual and auditory effects are added. The display data generating apparatus 1 herein is different from the display data generating apparatus 1 shown in Figure 1, in the following point: when generating display control information, a display control information generating section 34 of the display data generating apparatus 1 herein makes reference to an audio file storage section 48 and an effect information storage section 49 further provided in the storage section 40.

The audio file storage section 48 stores the audio file. The audio file stored therein is in a file format that the television 2 can handle. A specific example of the format of the audio file is the midi format. The television 2 acquires the audio file from the display data generating apparatus 1, and sends it to the audio output section 19 via the audio output control section 65 (Figure 17).

Alternatively, the display data generating section 30 may generate the display data 7 including the audio file, and send it to the television 2.

The effect information storage section 49 stores effect definition information defining the effects. Figure 32 is a diagram illustrating an example of such effect definition information stored in the effect information storage section 49.

In the example shown in Figure 32, 6 columns are provided for one effect.

A column C21 "effect ID" indicates the aforementioned effect ID. A column C22 indicates an attribute of a target object (picture, herein) to be changed by the effect. For example, an effect attribute name "Fill-opacity" indicates an effect of changing opacity of the target object. This effect is not the only effect but is a mere example. Any effect may be defined which changes any attribute of the target object.

A column C23 "dur" indicates duration (seconds, herein) during which the effect is applied. For example, in cases where the column C23 indicates "3 seconds", the effect (changing in opacity) is applied for 3 seconds.

A column C24 "from" indicates an initial value of the target object. Specifically, the column C24 indicates opacity that the picture has before the application of the effect. In cases where "from" indicates "0.8", the picture starts to be displayed at an opacity of 0.8. Note that: as the value of opacity is smaller, the picture is more transparent.

A column C25 "to" indicates a final value of the target object. Specifically, the column C25 indicates the opacity that the picture has after applying the effect thereto for the seconds indicated by "dur". In cases where "to" indicates "0", the picture is changed to have an opacity of 0.

A column C26 "end" indicates a key (button) which is provided in the television 2 and to which a function of aborting the effect is assigned. Specifically, the value indicated in "end" specifies one of keys provided in the operational section 15 of the television 2 shown in Figure 17. In cases where the key specified by "end" and provided in the operational section 15 is pressed down during execution of the effect in the television 2, the television 2 aborts the execution of the effect.

For example, consider a case where an effect having an effect ID "effect00" shown in Figure 32 is applied to a picture. In this case, in accordance with the effect definition information, the television 2 changes the opacity of the picture from 0.8 to 0 gradually within 3 seconds during slideshow display of the picture. In cases where a button "y" (yellow button) is pressed down by the user, the television 2 aborts the effect.

The three types of effect definition information are illustrated in the example shown in Figure 32. However, they are not only the effect definition information. Various types of effect definition information may be stored.

The television 2 operates as above in accordance with the operational function definition information 188 described in the operation definition information 280 (Figure 8).

The following fully explains how the display data generating apparatus 1 operates to generate the display control information 181 into which the visual and auditory effects are embedded. The description below exemplifies a case where the display data generating apparatus 1 generates, in reply to a request from the television 2, display data 7 for use in slideshow display. However, the present invention is not limited to this. Also in the case of thumbnail display, display data 7 including the visual and auditory effects may be generated.

Figure 33 is a flowchart illustrating a flow of the process carried out by the display data generating section 30 in the present embodiment. The flow shown in Figure 33 is different from the flow shown in Figure 10, in the following point: before the display data combining section 35 carries out combining in S209, the display control information generating section 34 carries out a process of embedding audio specifying information and the effect definition information. Processes of S201 to S208 in Figure 33 are the same as those in Figure 10, except that the slide picture is processed instead of the thumbnail. For this reason, explanation therefor will not be repeated here.

Figure 34 is a diagram schematically illustrating (i) an example of the layout definition information 176 contained in the pattern data 171 and (ii) an example of the layout definition information 186 contained in the display control information 181, in the case of the present embodiment.

In the present embodiment, the layout definition information 176 of the pattern data 171 (Figure 8) acquired from the pattern data storage section 45 by the pattern data obtaining section 25 of the display data generating apparatus 1 further includes target object (audio) specifying information 179. Further, the target object (image) specifying information 174 includes an effect pattern 174a, which is a template for an effect and is associated with the slide picture.

After S208, the display control information generating section 34 generates the audio specifying information 189 by embedding the audio filename (i.e., the link information to the audio file) into the audio specifying information 179 shown in Figure 34 (S208a). The audio filename to be embedded thereinto is extracted from the album information data table stored in the network album DB 41, in accordance with the album ID (and the picture ID) specified by the album ID specifying section 21. For example, consider a case where it is determined that the first picture of the album whose album ID is "01254782 25142584" in the example shown in Figure 25 is to be displayed in slideshow. In this case, the display control information generating section 34 extracts the audio filename "bgm1.midi" in accordance with the album ID and embeds, into the audio specifying information 179, the link information linking to the audio file having the audio filename "bgm1.midi", with the result that the audio specifying information 189 is generated. In accordance with the audio specifying information 189, during the slideshow display, the television 2 acquires, from the display data generating apparatus 1, the audio file having the audio filename "bgm1.midi", thus being allowed to reproduce the audio file.

Next, the display control information generating section 34 embeds the attribute information of the effect into the effect pattern 174a, thereby generating effect definition information 184a (S208b).

Figure 35 is a diagram illustrating respective specific examples of the effect pattern 174a and the effect definition information 184a shown in Figure 34. Portions each sandwiched between "@@_" and "_@@" respectively correspond to the attribute information (the columns C21 to C26) of the effect in the effect definition information table shown in Figure 34. That is, the display control information generating section 34 extracts the six attribute information of the specified effect from the columns, and embeds them into the portions indicated by "@@_***_@@", respectively, thereby generating the effect definition information 184a.

This will be explained specifically as follows, with reference to the aforementioned example of Figure 25. Assume that it is determined that the first picture (picture ID: 00123.jpg) of the album having the album ID "01254782 25142584" is going to be displayed in slideshow. The display control information generating section 34 specifies the effect in accordance with the album ID and the picture ID. In the above example, the album ID and the picture ID are associated with the effect ID "effect00", so that the effect having the effect ID "effect00" is specified as the effect to be rendered to the picture.

Next, in accordance with the specified effect ID, the display control information generating section 34 extracts the attribute information of the effect from the columns of the effect definition information table of the effect information storage section 49, respectively. The display control information generating section 34 embeds these extracted attribute information into corresponding locations respectively, thereby generating the effect definition information 184a. The effect definition information 184a shown in Figure 35 describes that the opacity of a white rectangular to be placed onto the picture, the target object, is going to be changed from 0.8 to 0 gradually within 3 seconds. For aborting such an opacity changing process when the yellow key (Accesskey(y)) of the operational section 15 of the television 2 is pressed down, a change process aborting function is assigned to the yellow key.

Finally, the display data combining section 35 combines (i) the display control information 181 generated by the display control information generating section 34 with (ii) the target object 111 (slide picture, audio file, etc.,), thereby generating the display data 7.

As described above, the acquisition of the display data 7 allows the television 2 to present the thumbnails and the slide pictures to the user with the auditory and/or visual effects rendered thereto in accordance with the display control information 181 including the audio specifying information 189 and the effect definition information 184a. Specifically speaking, in cases where the effect definition information 184a is described, the television 2 displays the picture in S27 of Figure 19 as defined by the effect definition information 184a.

Note that the slideshow display data may not contain the audio specifying information 189 for each display data representing a picture. For example, the audio specifying information 189 is provided therein only for the display data that is used to display the first picture, and the display control information 181 is described such that sound corresponding to the audio specifying information 189 keeps on being reproduced during display of pictures coming after the first picture.

Further, as described above, in the present embodiment, the operation of aborting the application of the effect (effect processing) is described in the effect definition information 184a by the display data generating apparatus 1 such that the operation is associated with such an event as to press down the yellow button. This allows the user to abort the effect processing at any timing by operating the key.

In cases where an effect is applied during processing of the slideshow display data, great loads are imposed on the television 2, with the result that responsiveness to the user's key operation becomes slow. This results in bad operationality. A reason for such slow responsiveness is that effect processing generally imposes great loads on CPU.

However, according to the above configuration, the television 2 aborts the effect processing as soon as the yellow key is pressed down and displays the target picture immediately thereafter. Thus, the effect processing unwanted by the user is aborted, so that the loads on the television 2 are reduced. This increases processing efficiency of the television 2.

Pressing down the yellow key is not only the event triggering the process of aborting. For example, the display control information generating section 34 may describes such a script that call-up of an operation menu GUI screen triggers the aborting of the effect processing.

Alternatively, the display control information generating section 34 may describe such a script that the effect processing is aborted and transition is made to a designated slide immediately after key operation is made during the effect processing so as to instruct transition to the next slide or previous slide.

Further, in cases where the user does not want execution of effect processing imposing great loads, a GUI screen may be displayed such that it is possible to make a selection of enabling or disabling the effect via the operation menu. If the user selects to disable the effect in this case, the script is described such that the television 2 never carries out the effect processing from beginning.

In the above explanation, the effect and/or sound are applied to a still image to be displayed, such as a picture. However, the present invention is not limited to this. The effect and/or sound can be applied to moving images, which are displayed in thumbnail view or in slideshow.

In the above explanation, one effect processing is defined for one object; however, the present invention is not limited to this. For one object, a plurality of effect definition scripts may be described in the display control information. This allows the user to select to enable or disable an effect via the menu, and to select, from effects defined in the effect definition scripts, a desired effect to be rendered to the object.

For example, two animations (effects) are prepared which concern how a certain character spends a spring day. It is defined in the display control information that one of the two animations is for boys and the other is for girls. In accordance with such display control information, the television 2 displays the character with a selected one of the two animations.

In the present embodiment, the effect definition information table is provided in the display data generating apparatus 1, and the effect definition information is included in the display data 7 and is supplied to the television 2. However, the present invention is not limited to this. The same effect can be exhibited in cases where the effect definition information table is provided in the television 2. In this case, by merely describing a script in which an effect ID and a picture is associated, the display data generating apparatus 1 obtains a script indicating an effect to be rendered to the picture.

In accordance with the effect ID contained in the display data 7, the television 2 makes reference to the effect definition information table provided therein, renders an appropriate effect to an appropriate picture, and presents it to the user.

This makes it possible to realize such a network album system that is capable of providing, according to users' preferences, album contents diversified such that individual users enjoy the album contents more.

The present invention is not limited to the description of the embodiments above, but may be altered by a skilled person within the scope of the claims. An embodiment based on a proper combination of technical means disclosed in different embodiments is encompassed in the technical scope of the present invention.

Finally, each of the display data generating apparatus 1 and the respective blocks of the television 2, especially the pattern data selecting section 20, the display data generating section 30, and the album request processing section 70 may be constituted by hardware logic or by software with the use of a CPU as follows.

That is, each of the display data generating apparatus 1 and the television 2 includes: (i) a CPU (central processing unit) for executing instructions of a control program realizing each function; (ii) a ROM (read only memory) storing the above program; (iii) a RAM (random access memory) for expanding the program; (iv) a storage device (recording medium), such as a memory, storing the program and various types of data; and the like. Therefore, the object of the present invention is achieved by: (i) providing, in each of the display data generating apparatus 1 and the television 2, a recording medium which stores a computer-readable program code (executable program, intermediate code program, a source program) of the control program of each of the display data generating apparatus 1 and the television 2 that are software for realizing the function, and (ii) causing a computer (CPU, or MPU) to read out and execute the program code stored in the recording medium.

Examples of the recording medium are: tapes such as a magnetic tape and a cassette tape; magnetic disks such as a floppy® disk and a hard disk; disks such as a CD-ROM (compact disk read only memory), a magnetic optical disk (MO), a mini disk (MD), a digital video disk (DVD), and a CD-Recordable (CD-R); and the like. Further, the storage medium may be: a card such as an IC card (inclusive of a memory card) or an optical card; or a semiconductor memory such as a mask ROM, an EPROM (electrically programmable read only memory), an EEPROM (electrically erasable programmable read only memory), or a flash ROM.

Further, each of the display data generating apparatus 1 and the television 2 may be so arranged as to be connectable to a communication network, and the program code may be supplied to the display data generating apparatus 1 and the television 2 via the network. The communication network is not particularly limited. Specific examples thereof are: the Internet, intranet, extranet, LAN (local area network), ISDN (integrated services digital network), VAN (value added network), CATV (cable TV) communication network, virtual private network, telephone network, mobile communication network, satellite communication network, and the like. Further, a transmission medium (channel) constituting the communication network is not particularly limited. Specific examples thereof are: (i) a wired channel using an IEEE 1394, a USB (universal serial bus), a power-line communication, a cable TV line, a telephone line, a ADSL line, or the like; or (ii) a wireless channel using IrDA, infrared rays used for a remote controller, Bluetooth®, IEEE 802.11, HDR (High Data Rate), a mobile phone network, a satellite connection, a terrestrial digital network, or the like. Note that the present invention can be realized by a form of a computer data signal (a series of data signals) embedded in a carrier wave realized by electronic transmission of the program code.

### (Supplementary Description)

Firstly, it is preferable that in addition to the above configuration, the image data providing apparatus further include: a receiving section for receiving an image request message, which requests supply of the image, from the image display apparatus together with the specification information; and a transmitting section for transmitting, to the image display apparatus, (i) the display image that the image size control section 32 has generated by changing, in accordance with the specification information, the number of pixels of the image requested by the image request message, and (ii) the display control information generated by the display control information generating section 34.

According to the above configuration, the image providing apparatus generates the display image by changing, in accordance with the specification of the image display apparatus, the number of pixels of the image requested by the image display apparatus, and generates the display control information in accordance with the specification thereof. The display image and the display control information are transmitted to the image display apparatus in reply to the request from the image display apparatus.

This makes it possible to supply the display image and the display control information such that the image requested by the image display apparatus is to be displayed thereon in the predetermined display size.

The image data providing apparatus may be arranged such that: the specification information specifying section 22 acquires information indicating a display screen size of the image display apparatus, as the specification information, and the display control information generated by the display control information generating section 34 defines the position of the display image such that the display image is to be disposed within the screen of the image display apparatus.

According to the above configuration, in consideration of the size of the display screen of the image display apparatus, the display control information generating section 34 generates the display control information for defining the position of the display image such that the display image is to be displayed within the screen of the image display apparatus.

This allows the image display apparatus to display the display image, in the display size intended by the image data providing apparatus, such that the display image does not run off from the screen. Accordingly, the user is allowed to view the display image, which is displayed within the screen in the display size intended by the image data providing apparatus.

Further, the image data providing apparatus may be arranged such that: the display control information generated by the display control information generating section 34 defines respective positions of a plurality of display images to be displayed simultaneously on the screen of the image display apparatus.

According to the above configuration, the display control information generating section 34 generates the display control information for defining the respective positions of the plurality of display images to be displayed on the screen simultaneously. In other words, the display control information thus generated defines the position of each display image on the screen of the image display apparatus.

This makes it possible for the image display apparatus to simultaneously display, on its screen, the plurality of display images in the display size intended by the image data providing apparatus.

It is preferable that the predetermined display size be a standard size of a sheet for printing.

With this, when the user sees the display image displayed on the image display apparatus in the same size as the standard size of a sheet for printing, the user can precisely recognize how the display image looks like if the display image is printed in the standard size.

Examples of the standard size of a sheet for printing include: the DSC size of a picture, the L size thereof, the 2L size thereof, the 6-piece size thereof, the 4-piece size thereof, and the like. By viewing the display image thus displayed in each of such standard sizes on the screen of the image display apparatus, the user can enjoy viewing the display image in the same manner that he/she views pictures put in a product album.

The image data providing apparatus according to the present invention may further include: a layout condition specifying section 23 (layout condition determining means) for determining, in accordance with layout condition information contained in an image request message that has been received from the image display apparatus and that requests supply of the image, a layout in which the display image is to be disposed within the screen of the image display apparatus, wherein: the display control information generating section 34 generates, in accordance with the layout thus determined, the display control information for defining the position of the display image.

According to the above configuration, the image request message requesting the supply of the images is supplied from the image display apparatus together with the layout condition information, and the layout condition specifying section 23 determines, in accordance with the layout condition information thus supplied, the layout in which the display image is to be disposed within the screen of the image display apparatus. Then, the display control information generating section 34 generates the display control information defining that the display image is to be disposed in the layout thus determined.

This makes it possible to provide the display image and the display control information such that the image requested by the image display apparatus is displayed in the predetermined display size on the image display apparatus in accordance with the condition of disposing the image.

The layout is determined by the layout condition specifying section 23 as follows. Consider a case where one display image is to be disposed. In this case, the layout is determined by determining to dispose the display image in, e.g., the center of the screen, the upper left portion thereof, or the like. Meanwhile, consider a case where a plurality of display images are to be disposed. In this case, the layout is determined by determining a form in which the display images are disposed. For example, the display images are disposed in the form of a lattice, a circle, a lozenge, or the like. Alternatively, the layout is determined by determining the total number of the display images to be displayed simultaneously on the screen, or by specifying where on the screen a specific display region only in which the images are disposed is.

Further, the layout condition specifying section 23 can determine, as the layout in accordance with the layout condition information, at least a vertical and horizontal display number indicating the number of images to be disposed in each column on the screen of the image display apparatus and the number of images to be disposed in each row on the screen.

In this way, by determining the vertical and horizontal display number indicating the number of images to be disposed in each column and the number of images to be displayed in each row when displaying the images in the form of a lattice, it is possible to specify the layout in which the display images are to be disposed. This allows generation of the display control information.

In cases where a plurality of types of display size information for defining display sizes of images to be displayed on the screen of the image display apparatus are determined in advance, it is preferable that in addition to the above configuration, the image data providing apparatus further include: a display size determining section 24 (display area size calculating means) for finding a display area size of the image on the screen of the image display apparatus in accordance with (i) the information indicating the display screen size of the image display apparatus and acquired by the specification information specifying section 22 as the specification information, and (ii) the vertical and horizontal display number determined by the layout condition specifying section 23; and a display size determining section 24 (display size determining means) for determining, in accordance with the display area size, the display size of the image from the display sizes indicated by the plurality of types of display size information, wherein: the image size control section 32 generates the display image such that the display image is displayed in the display size determined by the display size determining section 24.

According to the above configuration, the information concerning the plurality of types of display size is set for the predetermined display size in which the images are displayed on the image display apparatus.

The display area size determining section 24 finds a display area size for each image on the screen of the image display apparatus (i.e., the size of a display region allocated to each display image) in accordance with (i) the display screen size of the image display apparatus and (ii) the vertical/horizontal display number indicating how many images are to be disposed in each column and how many images are to be disposed in each row.

Then, in accordance with the display area size thus found, the display size determining section 24 selects a size from the plurality of types of display size set in advance, thereby determining the size in which the display images are to be displayed.

In this way, it is possible to display the display images on the image display apparatus in an appropriate display size in accordance with the determined vertical/horizontal display number and the display screen size of the image display apparatus.

Accordingly, it is possible to, for example, provide a display image obtained by changing the number of pixels of its original image such that the image is displayed on the image display apparatus in an appropriate display size selected in accordance with a vertical/horizontal display number requested by the image display apparatus.

In cases where there are a plurality of images to be displayed, the display size for each image may be determined in accordance with a display area size found for the display region of each image.

Further, the layout condition information may indicate the total number of images to be displayed simultaneously within the screen of the image display apparatus.

According to the above configuration, as the layout condition information, the layout condition specifying section 23 acquires the information indicating the total number of images to be displayed. In accordance with the total number, the layout condition specifying section 23 determines the vertical and horizontal display number.

This allows the image data providing apparatus to generate, in accordance with the total display number requested by the image display apparatus, the display images and the display control information such that the images requested by the image display apparatus are displayed on the image display apparatus in the appropriate layout and in the predetermined display size, and to provide these display images and display control information to the image display apparatus.

Accordingly, even when no vertical and horizontal display number is designated, the image display apparatus, which requests images, can display the desired images in the desired and appropriate layout and in the size intended by the image data providing apparatus, by merely designating the total display number.

The image data providing apparatus may further include: a moving image frame extracting section 36 (image specifying means) for specifying, in accordance with designation information set in advance, either an image contained in a moving image or an image associated with the moving image, wherein: the image size control section 32 generates a display image of the moving image by changing the number of pixels of the image specified by the moving image frame extracting section 36.

According to the configuration, the moving image frame extracting section 36 specifies one image from the moving image or specifies the image associated with the moving image.

The image size control section 32 changes the number of pixels of the image specified by the moving image frame extracting section 36, so as to generate the display image of the moving image.

That is, in cases where the target object to be displayed on the image display apparatus is not a still image but a moving image, instead of the moving image, the image size control section 32 specifies the image corresponding to the moving image and generates the display image of the image.

This allows the image display apparatus to display the still image corresponding to the moving image, in the predetermined size on its screen instead of the moving image. As such, irrespective of whether the target object to be displayed is a moving image or a still image, the image display apparatus can display the target object in the predetermined size.

Note that the designation information may be any information as long as it allows the moving image frame extracting section 36 to uniquely specify the image corresponding to the moving image. For example, in cases where there is a storage section in which the image is so stored as to be associated with the moving image, the designation information may be the image ID specifying the image, the filename of the image, the memory address indicating the storage location of the image, or the like. Alternatively, the designation information may be (i) a frame number for designating a frame of a plurality of frames contained in the moving image, (ii) time code (time at which the frame appears), or the like.

Alternatively, the image data providing apparatus may be arranged such that: the image size control section 32 generates a display moving image by changing the number of pixels of a plurality of images contained in a moving image such that the moving image is to be displayed in a predetermined display size on the image display apparatus, and the display control information generated by the display control information generating section 34 defines a position of the display moving image.

According to the above configuration, the image size control section 32 changes the number of pixels of the plurality of images contained in the moving image, so as to generate the display moving image. The display control information generating section 34 generates the display control information that defines the position of the display moving image.

This allows the image display apparatus to display, in accordance with the display control information, the display moving image on its screen in the predetermined display size. The display moving image is data obtained by changing the number of pixels of the moving image such that the moving image is displayed in the predetermined size.

As such, in cases where the target object to be displayed is a moving image, the image display apparatus can display the moving image in the predetermined size.

It is preferable that the image data providing apparatus further include: a moving image frame extracting section 36 for specifying, in accordance with designation information set in advance, either an image contained in a moving image or an image associated with the moving image, wherein: the image size control section 32 generates a display image of the moving image by changing the number of pixels of the image specified by the moving image frame extracting section 36, the image size control section 32 generates a display moving image by changing the number of pixels of a plurality of images contained in the moving image such that the moving image is to be displayed in a predetermined size on the image display apparatus, and the display control information generated by the display control information generating section 34 defines a display position of the display image and the display moving image when the display image and the display moving image are selectively displayed according to a user's operation carried out with respect to the image display apparatus.

According to the above configuration, in addition to the generation of the display image of the moving image by changing the number of pixels of the image specified by the moving image frame extracting section 36, the image size control section 32 generates the display moving image by changing the number of pixels of the plurality of images contained in the moving image.

Then, the display control information generating section 34 generates the display control information that defines the display position of the display image and the display moving image, each generated by the image size control section 32, on the screen of the image display apparatus. Specifically, the display control information defines the display position of the display image and the display moving image when the display image and the display moving image are selectively displayed according to the user's operation on the image display apparatus.

In this way, in accordance with the display control information, the image display apparatus selectively displays, according to the user's operation, (i) the display moving image that is data obtained by changing the number of pixels of the moving image such that the moving image is displayed in the predetermined display size and (ii) the display image corresponding to the moving image.

Next, the aforementioned image display apparatus is preferably applied to an image display apparatus having a large monitor screen, such as a large television.

Conventionally, an image display apparatus for displaying an image has been realized mostly by a personal computer (PC). However, conventionally, such a PC has a small monitor screen, so that there have been limitations in the number of images to be displayed at one time and the size of each image. For this reason, a plurality of images have not been conventionally displayed at one time in an arbitrary and predetermined size (e.g., actual printing size of a picture).

However, recently, large screen televisions connectable to a network have been pervasive, with the result that pictures are displayed on such large screen televisions. These large screen televisions are capable of displaying a larger number of pictures at one time in a larger size, as compared with the conventional case of displaying pictures on the small monitor screen of the PC.

This makes it possible to realize a service of displaying a plurality of images in a predetermined size (e.g., actual printing size of a picture) at one time. Such a service cannot be realized in the PC having a small monitor screen. The image data providing apparatus according to the present invention is capable of generating display images and display control information, by each of which a plurality of images are displayed on an image display apparatus having a large monitor screen, such as the large screen televisions, at one time in an arbitrary and predetermined size (e.g., actual printing size of a picture).

Further, the image display apparatus can be arranged such that: the display control section 64 controls the display section such that the display image or the display moving image is displayed within the screen of the image display apparatus so as to be disposed as defined by the display control information.

According to the above configuration, the display control section 64 controls the display section in accordance with the display control information such that the display image or the display moving image is displayed so as to be disposed within the screen of the image display apparatus.

In this way, the display image or the display moving image is displayed on the image display apparatus so as to be disposed within the screen of the image display apparatus.

Further, the image display apparatus can be arranged such that: the display control section 64 controls the display section such that a plurality of display images or display moving images are displayed simultaneously on the screen of the image display apparatus so as to be disposed as defined by the display control information.

According to the above configuration, the display control section 64 controls the display section in accordance with the display control information such that the plurality of display images or display moving images are displayed simultaneously on the screen of the image display apparatus.

This allows the image display apparatus to display the plurality of display images or display moving image simultaneously on its screen in accordance with the display control information.

Note that it is preferable that the predetermined display size be a standard size of a sheet for printing.

With this, when the user sees each of the display images displayed on the image display apparatus in the same size as the standard size of a sheet for printing, the user can precisely recognize how the display image looks like if the display image is printed in the standard size.

Examples of the standard size of a sheet for printing include: the DSC size of a picture, the L size thereof, the 2L size thereof, the 6-piece size thereof, the 4-piece size thereof, and the like. Alternatively, the standard size may be a spread size of a magazine or newspaper. By viewing the display images thus displayed in each of such standard sizes on the screen of the image display apparatus, the user can enjoy viewing the display images in the same manner that he/she views pictures put in a product album.

The image data providing apparatus and the image display apparatus may be realized by a computer. In such a case, the present invention encompasses control programs for the image data providing apparatus and the image display apparatus, and a computer-readable recording medium storing each of the control programs. The control programs cause a computer to function as the aforementioned respective means so as to realize the image data providing apparatus and the image display apparatus by the computer, respectively.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

An image data providing apparatus of the present invention is capable of providing, to an image display apparatus, information (display data/slideshow display data) necessary to display an image in a predetermined display size. Therefore, the image data providing apparatus is applicable to an image display system in which an image (or moving image) is provided to an image display apparatus and displays operation of the image display apparatus is controlled. The image data providing apparatus of the present invention is capable of causing an image display apparatus to display a plurality of images (or moving image) in a predetermined size intended by the image data providing apparatus, so that an image display apparatus of the present invention is preferably applicable to an image display apparatus having a large monitor.

## Claims

1. An image data providing apparatus, being **characterized by** comprising:
specification information obtaining means for acquiring specification information of an image display apparatus, which specification information concerns display of an image;
display image generating means for generating a display image by changing the number of pixels of the image in accordance with the specification information such that the image is displayed on the image display apparatus in a predetermined display size; and
display control information generating means for generating display control information for defining a position of the display image on a screen of the image display apparatus in accordance with the specification information.

2. The image data providing apparatus as set forth in claim 1, further comprising:
a receiving section for receiving an image request message, which requests supply of the image, from the image display apparatus together with the specification information; and
a transmitting section for transmitting, to the image display apparatus, (i) the display image that the display image generating means has generated by changing, in accordance with the specification information, the number of pixels of the image requested by the image request message, and (ii) the display control information generated by the display control information generating means.

3. The image data providing apparatus as set forth in claim 1, wherein:
the specification information obtaining means acquires information indicating a display screen size of the image display apparatus, as the specification information, and
the display control information generated by the display control information generating means defines the position of the display image such that the display image is to be disposed within the screen of the image display apparatus.

4. The image data providing apparatus as set forth in claim 1, wherein:
the display control information generated by the display control information generating means defines respective positions of a plurality of display images to be displayed simultaneously on the screen of the image display apparatus.

5. The image data providing apparatus as set forth in claim 1, wherein:
said predetermined display size is a standard size of a sheet for printing.

6. The image data providing apparatus as set forth in claim 1, further comprising:
layout condition determining means for determining, in accordance with layout condition information contained in an image request message that has been received from the image display apparatus and that requests supply of the image, a layout in which the display image is to be disposed within the screen of the image display apparatus,
wherein:
the display control information generating means generates, in accordance with the layout thus determined, the display control information for defining the position of the display image.

7. The image data providing apparatus as set forth in claim 6, wherein:
the layout condition determining means determines, as the layout in accordance with the layout condition information, at least a vertical and horizontal display number indicating the number of images to be disposed in each column on the screen of the image display apparatus and the number of images to be disposed in each row on the screen.

8. The image data providing apparatus as set forth in claim 7, in which a plurality of types of display size information for defining display sizes of images to be displayed on the screen of the image display apparatus are determined in advance,
the image data providing apparatus, further comprising:
display area size calculating means for finding a display area size of the image on the screen of the image display apparatus in accordance with (i) the information indicating the display screen size of the image display apparatus and acquired by the specification information obtaining means as the specification information, and (ii) the vertical and horizontal display number determined by the layout condition determining means; and
display size determining means for determining, in accordance with the display area size, the display size of the image from the display sizes indicated by said plurality of types of display size information,
wherein:
the display image generating means generates the display image such that the display image is displayed in the display size determined by the display size determining means.

9. The image data providing apparatus as set forth in claim 7, wherein:
the layout condition information indicates the total number of images to be displayed simultaneously within the screen of the image display apparatus.

10. The image data providing apparatus as set forth in claim 1, further comprising:
image specifying means for specifying, in accordance with designation information set in advance, either an image contained in a moving image or an image associated with the moving image,
wherein:
the display image generating means generates a display image of the moving image by changing the number of pixels of the image specified by the image specifying means.

11. The image data providing apparatus as set forth in claim 1, wherein:
the display image generating means generates a display moving image by changing the number of pixels of a plurality of images contained in a moving image such that the moving image is to be displayed in a predetermined display size on the image display apparatus, and
the display control information generated by the display control information generating means defines a position of the display moving image.

12. The image data providing apparatus as set forth in claim 1, further comprising:
image specifying means for specifying, in accordance with designation information set in advance, either an image contained in a moving image or an image associated with the moving image,
wherein:
the display image generating means generates a display image of the moving image by changing the number of pixels of the image specified by the image specifying means,
the display image generating means generates a display moving image by changing the number of pixels of a plurality of images contained in the moving image such that the moving image is to be displayed in a predetermined size on the image display apparatus, and
the display control information generated by the display control information generating means defines a display position of the display image and the display moving image when the display image and the display moving image are selectively displayed according to a user's operation carried out with respect to the image display apparatus.

13. An image display apparatus, being **characterized by** comprising:
message generating means for generating an image request message that includes (i) image identification information for identifying an image or a moving image to be displayed and (ii) specification information of the image display apparatus, which specification information concerns display of the image or the moving image, and that requests supply of the image or the moving image to be displayed;
a transmitting section for transmitting the image request message to an image data providing apparatus;
a receiving section for receiving, from the image data providing apparatus in reply to the image request message, (i) a display image or a display moving image each corresponding to the requested image or the requested moving image and (ii) display control information for defining a position of the display image or the display moving image on a screen of the image display apparatus; and
display control means for controlling a display section in accordance with the display control information such that the display image or the display moving image is displayed in a predetermined size.

14. The image display apparatus as set forth in claim 13, wherein:
the display control means controls the display section such that the display image or the display moving image is displayed within the screen of the image display apparatus so as to be disposed as defined by the display control information.

15. The image display apparatus as set forth in claim 13, wherein:
the display control means controls the display section such that a plurality of display images or display moving images are displayed simultaneously on the screen of the image display apparatus so as to be disposed as defined by the display control information.

16. The image display apparatus as set forth in claim 13, wherein:
said predetermined display size is a standard size of a sheet for printing.

17. An image display apparatus, being **characterized by** comprising:
message generating means for generating an image request message that includes (i) image identification information for identifying an image or a moving image to be displayed and (ii) specification information of the image display apparatus, which specification information concerns display of the image or the moving image, and that requests supply of the moving image to be displayed;
a transmitting section for transmitting the image request message to an image data providing apparatus;
a receiving section for receiving, from the image data providing apparatus in reply to the image request message, (i) a display image and a display moving image each corresponding to the requested moving image and (ii) display control information for defining a display position of the display image and the display moving image on a screen of the image display apparatus when the display image and the display moving image are selectively displayed according to a user's operation carried out with respect to the image display apparatus; and
display control means for controlling a display section in accordance with the display control information such that the display image or the display moving image is displayed in a predetermined size and for causing the display section to selectively display the display image and the display moving image according to the user's operation carried out with respect to the image display apparatus.

18. An image display system, being **characterized by** comprising:
the image data providing apparatus as set forth in any one of claims 1 through 12; and
the image display apparatus as set forth in any one of claims 13 through 16.

19. A method for controlling an image data providing apparatus, being **characterized by** comprising:
a first step of acquiring specification information of an image display apparatus, which specification information concerns display of an image;
a second step of generating a display image by changing the number of pixels of the image in accordance with the specification information, which has been acquired in the first step, such that the image is displayed in a predetermined size on the image display apparatus; and
a third step of generating, in accordance with the specification information acquired in the first step, display control information for defining a position where the display image generated in the second step is to be disposed on a screen of the image display apparatus.

20. A method for controlling an image display apparatus, being **characterized by** comprising:
a first step of generating an image request message that includes (i) image identification information for identifying an image or a moving image to be displayed and (ii) specification information of the image display apparatus, which specification information concerns display of the image or the moving image;
a second step in which a transmitting section transmits, to an image data providing apparatus, the image request message generated in the first step;
a third step in which a receiving section receives, from the image data providing apparatus in reply to the image request message, (i) a display image or a display moving image each corresponding to the requested image or the requested moving image and (ii) display control information for defining a position of the display image or the display moving image on a screen of the image display apparatus; and
a fourth step of controlling, in accordance with the display control information received in the third step, a display section such that the display image received in the third step is displayed in a predetermined display size.

21. A method for controlling an image display apparatus, being **characterized by** comprising:
a first step of generating an image request message that includes (i) image identification information for identifying a moving image to be displayed and (ii) specification information of the image display apparatus, which specification information concerns display of the image or the moving image, and that requests supply of the moving image to be displayed;
a second step in which a transmitting section transmits the image request message generated in the first step, to an image data providing apparatus;
a third step in which a receiving section receives, from the image data providing apparatus in reply to the image request message, (i) a display image and a display moving image each corresponding to the requested moving image and (ii) display control information for defining a display position of the display image and the display moving image on a screen of the image display apparatus when the display image and the display moving image are selectively displayed according to a user's operation carried out with respect to the image display apparatus; and
a fourth step of (i) controlling a display section in accordance with the display control information, received in the third step, such that the display image or the display moving image is displayed in a predetermined size and (ii) causing the display section to selectively display the display image and the display moving image according to the user's operation carried out with respect to the image display apparatus.

22. A control program, being **characterized by** causing a computer to operate as said individual means in either the image data providing apparatus as set forth in any one of claims 1 through 12 or the image display apparatus as set forth in any one of claims 13 through 17.

23. A computer-readable recording medium, being **characterized by** storing the control program as set forth in claim 22.
